(19) **Europäisches Patentamt / European Patent Office / Office européen des brevets**

(11) **EP 4 604 651 A1**

(12) **EUROPEAN PATENT APPLICATION**
published in accordance with Art. 153(4) EPC

(43) Date of publication:
**20.08.2025 Bulletin 2025/34**

(21) Application number: **23889123.8**

(22) Date of filing: **07.11.2023**

(51) International Patent Classification (IPC):
**H04W 72/25** (2023.01)  **H04W 74/08** (2024.01)
**H04L 1/18** (2023.01)  **H04W 72/04** (2023.01)
**H04W 92/18** (2009.01)  **H04W 72/20** (2023.01)
**H04W 72/12** (2023.01)

(52) Cooperative Patent Classification (CPC):
**H04L 1/18; H04W 72/04; H04W 72/12; H04W 72/20; H04W 72/25; H04W 74/08; H04W 92/18**

(86) International application number:
**PCT/KR2023/017802**

(87) International publication number:
**WO 2024/101865 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 07.11.2022 KR 20220147426
16.11.2022 KR 20220153881
18.01.2023 KR 20230007670

(71) Applicant: **Wilus Institute of Standards and Technology Inc.**
**Gyeonggi-do 13595 (KR)**

(72) Inventors:
• **NOH, Minseok**
**Seongnam-si Gyeonggi-do 13595 (KR)**
• **SEOK, Geunyoung**
**Seongnam-si Gyeonggi-do 13595 (KR)**
• **YOON, Youngjoon**
**Seongnam-si Gyeonggi-do 13595 (KR)**
• **SON, Juhyung**
**Seongnam-si Gyeonggi-do 13595 (KR)**
• **KWAK, Jinsam**
**Seongnam-si Gyeonggi-do 13595 (KR)**

(74) Representative: **Metroconsult Srl**
**Via Sestriere, 100**
**10060 None (TO) (IT)**

(54) **METHOD AND DEVICE FOR TRANSMITTING SIGNAL IN WIRELESS COMMUNICATION SYSTEM**

(57) The present invention relates to a wireless communication system and, specifically, to a method and a wireless device for: transmitting at least one PSSCH within a COT, the at least one PSSCH including at least one first PSSCH having HARQ-ACK feedback enabled; adjusting a CWS on the basis of HARQ-ACK feedback for the at least one PSSCH in a reference duration; and conducting an SL channel access procedure on the basis of the adjusted CWS.

COT initiated by SL transmission including PSSCH
Reference duration
Time — SL transmission burst

☐ Slot where PSSCH with NACK-only feedback enabled is transmitted
☐ Slot where PSSCH with explicit HARQ-ACK feedback enabled is transmitted
☐ Slot(s) where PSSCH(s) without HARQ-ACK feedback enabled is transmitted

**FIG. 30**

EP 4 604 651 A1

## Description

### Technical Field

The present invention relates to a wireless communication system. Specifically, the present invention relates to a channel access method and a device using the same in a wireless communication system.

### Background Art

After commercialization of 4th generation (4G) communication system, in order to meet the increasing demand for wireless data traffic, efforts are being made to develop new 5th generation (5G) communication systems. The 5G communication system is called as a beyond 4G network communication system, a post LTE system, or a new radio (NR) system. In order to achieve a high data transfer rate, 5G communication systems include systems operated using the millimeter wave (mmWave) band of 6 GHz or more, and include a communication system operated using a frequency band of 6 GHz or less in terms of ensuring coverage so that implementations in base stations and terminals are under consideration.

A 3rd generation partnership project (3GPP) NR system enhances spectral efficiency of a network and enables a communication provider to provide more data and voice services over a given bandwidth. Accordingly, the 3GPP NR system is designed to meet the demands for high-speed data and media transmission in addition to supports for large volumes of voice. The advantages of the NR system are to have a higher throughput and a lower latency in an identical platform, support for frequency division duplex (FDD) and time division duplex (TDD), and a low operation cost with an enhanced end-user environment and a simple architecture.

For more efficient data processing, dynamic TDD of the NR system may use a method for varying the number of orthogonal frequency division multiplexing (OFDM) symbols that may be used in an uplink and downlink according to data traffic directions of cell users. For example, when the downlink traffic of the cell is larger than the uplink traffic, the base station may allocate a plurality of downlink OFDM symbols to a slot (or subframe). Information about the slot configuration should be transmitted to the terminals.

In order to alleviate the path loss of radio waves and increase the transmission distance of radio waves in the mmWave band, in 5G communication systems, beamforming, massive multiple input/output (massive MIMO), full dimensional MIMO (FD-MIMO), array antenna, analog beam-forming, hybrid beamforming that combines analog beamforming and digital beamforming, and large scale antenna technologies are discussed. In addition, for network improvement of the system, in the 5G communication system, technology developments related to evolved small cells, advanced small cells, cloud radio access network (cloud RAN), ultra-dense network, device to device communication (D2D), vehicle to everything communication (V2X), wireless backhaul, non-terrestrial network communication (NTN), moving network, cooperative communication, coordinated multi-points (CoMP), interference cancellation, and the like are being made. In addition, in the 5G system, hybrid FSK and QAM modulation (FQAM) and sliding window superposition coding (SWSC), which are advanced coding modulation (ACM) schemes, and filter bank multi-carrier (FBMC), non-orthogonal multiple access (NOMA), and sparse code multiple access (SCMA), which are advanced connectivity technologies, are being developed.

Meanwhile, in a human-centric connection network where humans generate and consume information, the Internet has evolved into the Internet of Things (IoT) network, which exchanges information among distributed components such as objects. Internet of Everything (IoE) technology, which combines IoT technology with big data processing technology through connection with cloud servers, is also emerging. In order to implement IoT, technology elements such as sensing technology, wired/wireless communication and network infrastructure, service interface technology, and security technology are required, so that in recent years, technologies such as sensor network, machine to machine (M2M), and machine type communication (MTC) have been studied for connection between objects. In the IoT environment, an intelligent internet technology (IT) service that collects and analyzes data generated from connected objects to create new value in human life can be provided. Through the fusion and mixture of existing information technology (IT) and various industries, IoT can be applied to fields such as smart home, smart building, smart city, smart car or connected car, smart grid, healthcare, smart home appliance, and advanced medical service.

Accordingly, various attempts have been made to apply the 5G communication system to the IoT network. For example, technologies such as a sensor network, a machine to machine (M2M), and a machine type communication (MTC) are implemented by techniques such as beamforming, MIMO, and array antennas. The application of the cloud RAN as the big data processing technology described above is an example of the fusion of 5G technology and IoT technology. Generally, a mobile communication system has been developed to provide voice service while ensuring the user's activity.

A sidelink (SL) refers to a communication scheme in which a direct link is established between user equipments (UEs), and the UEs exchange voice or data directly with each other without intervention of a base station (BS). SL is considered as a solution of relieving the burden of the base station due to the rapidly increasing data traffic.

Vehicle-to-everything (V2X) refers to a communication technology that exchanges information with other vehicles, pedestrians, and infrastructure-built objects through wired/wireless communication. V2X may be divided into four types such as, vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more communication devices require larger communication capacities, there is a need for mobile broadband communication improved from the legacy radio access technology (RAT). Accordingly, communication systems considering services or UEs sensitive to reliability and latency are under discussion. A next-generation radio access technology in consideration of enhanced mobile broadband communication, massive MTC, ultra-reliable and low latency communication (URLLC),etc. may be referred to as new radio access technology (RAT) or new radio (NR). Even in NR, vehicle-to-everything (V2X) communication may be supported.

Meanwhile, in case of SL communications involving services with high reliability requirements or services with relatively high reliability requirements, for example, the SL HARQ feedback operation and/or mechanism of the UE may be useful.

### Disclosure of Invention

### Technical Problem

The disclosure is to provide a method for efficiently transmitting a signal in a wireless communication system and a device using the same. Specifically, the disclosure is to provide a channel access method for efficiently performing transmission in a wireless communication system and a device using the same.

### Solution to Problem

As an aspect of the present invention, provided is a user equipment (UE) used in a wireless communication system, the UE including a communication module and a processor to control the communication module, wherein the processor is configured to transmit at least one physical sidelink shared channel (PSSCH) in a channel occupancy time (COT), the at least one PSSCH including at least one first PSSCH with hybrid ARQ acknowledgement (HARQ-ACK) feedback enabled, to adjust a contention window size (CWS) based on HARQ-ACK feedback for the at least one PSSCH in a reference duration, and to perform a sidelink (SL) channel access procedure based on the adjusted CWS, and the reference duration is defined as starting from a beginning of the COT and until an end of a first slot in which the at least one first PSSCH is transmitted.

As another aspect of the present invention, provided is a method used by a UE in a wireless communication system, and the method transmits at least one physical sidelink shared channel (PSSCH) in a channel occupancy time (COT), the at least one PSSCH including at least one first PSSCH with hybrid ARQ acknowledgement (HARQ-ACK) feedback enabled, adjusts a contention window size (CWS) based on HARQ-ACK feedback for the at least one PSSCH in a reference duration, and performs a sidelink (SL) channel access procedure based on the adjusted CWS, and the reference duration is defined as starting from a beginning of the COT and until an end of a first slot in which the at least one first PSSCH is transmitted.

Preferably, the HARQ-ACK feedback may include reception response information based on an ACK/negative ACK (NACK) feedback scheme.

Preferably, when the at least one first PSSCH includes at least one second PSSCH with an ACK/NACK feedback scheme indicated and at least one third PSSCH with a NACK-only feedback scheme indicated, the reference duration may be defined as starting from a beginning of the COT and until an end of a first slot in which the at least one second PSSCH is transmitted.

Preferably, the plurality of PSSCHs may include at least one fourth PSSCH for which the HARQ-ACK feedback is not enabled.

Preferably, the COT may be a latest COT that the UE initiates.

Preferably, when the HARQ-ACK feedback for the at least one PSSCH transmission in the reference duration includes at least an ACK, the CWS may be adjusted to a minimum value.

Preferably, when the HARQ-ACK feedback for the at least one PSSCH transmission in the reference duration does not include an ACK, the CWS may be increased to a next higher value than a current CWS among allowed CWS values.

Preferably, when the at least one first PSSCH is transmitted via SL groupcast, and the HARQ-ACK feedback for the at least one PSSCH transmission in the reference duration includes at least a negative acknowledgement (NACK), the CWS may be increased to a higher value than a current CWS among allowed CWS values, and when the HARQ-ACK feedback for the at least one PSSCH transmission in the reference duration is regarded as all ACKs, the CWS may be adjusted to a minimum value.

Preferably, the UE may perform the SL channel access procedure based on a counter value randomly selected within the adjusted CWS.

Preferably, a first slot in which the at least one first PSSCH is transmitted may be a slot in which the PSSCH transmission is performed via all resources allocated for PSSCH transmission.

**Advantageous Effects of Invention**

The disclosure provides a method for efficiently transmitting a signal in a wireless communication system and a device using the same. In addition, the disclosure provides a channel access method for efficiently performing transmission in a wireless communication system and a device using the same.

The effects obtainable from the disclosure are not limited to the effects mentioned above, and other effects not mentioned will be clearly understood by those skilled in the art to which the disclosure belongs from the description below.

**Brief Description of Drawings**

FIG. 1 illustrates an example of a wireless frame structure used in a wireless communication system.
FIG. 2 illustrates an example of a downlink (DL)/uplink (UL) slot structure in a wireless communication system.
FIG. 3 is a diagram for explaining a physical channel used in a 3GPP system and a typical signal transmission method using the physical channel.
FIG. 4 illustrates an SS/PBCH block for initial cell access in a 3GPP NR system.
FIG. 5 illustrates a procedure for transmitting control information and a control channel in a 3GPP NR system.
FIG. 6 illustrates a control resource set (CORESET) in which a physical downlink control channel (PDCCH) may be transmitted in a 3GPP NR system.
FIG. 7 illustrates a method for configuring a PDCCH search space in a 3GPP NR system.
FIG. 8 is a conceptual diagram illustrating carrier aggregation.
FIG. 9 is a diagram for explaining single carrier communication and multiple carrier communication.
FIG. 10 is a diagram showing an example in which a cross carrier scheduling technique is applied.
FIG. 11 illustrates a New Radio-Unlicensed (NR-U) service environment.
FIG. 12 illustrates a communication method (e.g., wireless LAN) operating in an existing unlicensed band.
FIG. 13 illustrates a channel access procedure based on Category 4 LBT.
FIG. 14 is a block diagram illustrating configurations of a UE and a base station according to an embodiment of the present invention.
FIG. 15 illustrates an example of channel occupancy time (COT) configurations and a corresponding operation.
FIGS. 16 to 23 illustrate examples of a sidelink (SL) communication process.
FIG. 24 illustrates a configuration of a physical sidelink control channel/physical sidelink shared channel/physical sidelink feedback channel (PSCCH/PSSCH/PSFCH) in a slot.
FIG. 25 illustrates a sidelink SSB (S-SSB) structure.
FIG. 26 illustrates a sidelink (SL) communication process.
FIGS. 27 and 28 illustrate examples of a channel access method according to the present invention.
FIGS. 29 and 30 illustrate examples of an SL reference duration according to the present invention.
FIG. 31 illustrates an SL transmission method according to the present invention.

**Mode for Carrying out the Invention**

Terms used in the specification adopt general terms which are currently widely used as possible by considering functions in the present invention, but the terms may be changed depending on an intention of those skilled in the art, customs, and emergence of new technology. Further, in a specific case, there is a term arbitrarily selected by an applicant and in this case, a meaning thereof will be described in a corresponding description part of the invention. Accordingly, it intends to be revealed that a term used in the specification should be analyzed based on not just a name of the term but a substantial meaning of the term and contents throughout the specification.

Throughout this specification and the claims that follow, when it is described that an element is "connected" to another element, the element may be "directly connected" to the other element or "electrically connected" to the other element through a third element. Further, unless explicitly described to the contrary, the word "comprise" will be understood to imply the inclusion of stated elements but not the exclusion of any other elements unless otherwise stated. Moreover, limitations such as "more than or equal to" or "less than or equal to" based on a specific threshold may be appropriately substituted with "more than" or "less than", respectively, in some exemplary embodiments.

The following technology may be used in various wireless access systems, such as code division multiple access (CDMA), frequency division multiple access (FDMA), time division multiple access (TDMA), orthogonal frequency division multiple access (OFDMA), single carrier-FDMA (SC-FDMA), and the like. The CDMA may be implemented by a wireless technology such as universal terrestrial radio access (UTRA) or CDMA2000. The TDMA may be implemented by a wireless technology such as global system for mobile communications (GSM)/general packet radio service (GPRS)/enhanced data rates for GSM evolution (EDGE). The OFDMA may be implemented by a wireless technology such as IEEE 802.11(Wi-Fi), IEEE 802.16(WiMAX), IEEE 802-20, evolved UTRA (E-UTRA), and the like. The UTRA is a part of a universal mobile telecommunication system (UMTS). 3rd generation partnership project (3GPP) long term evolution (LTE) is a part of an evolved UMTS (E-UMTS) using evolved-UMTS terrestrial radio access (E-UTRA) and LTE-advanced (A) is an evolved version of the 3GPP LTE. 3GPP new radio (NR) is a system designed separately from LTE/LTE-A, and is a system for supporting enhanced mobile broadband (eMBB), ultra-reliable and low latency communication (URLLC), and massive machine type communication (mMTC) services, which are requirements of IMT-2020. For the clear description, 3GPP NR is mainly described, but the technical idea of the present invention is not limited thereto.

Unless otherwise specified herein, the base station may include a next generation node B (gNB) defined in 3GPP NR. Furthermore, unless otherwise specified, a terminal may include a user equipment (UE). Hereinafter, in order to help the understanding of the description, each content is described separately by the embodiments, but each embodiment may be used in combination with each other. In the present specification, the configuration of the UE may indicate a configuration by the base station. In more detail, the base station may configure a value of a parameter used in an operation of the UE or a wireless communication system by transmitting a channel or a signal to the UE.

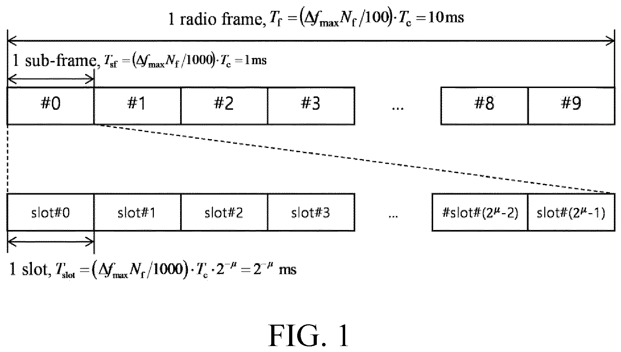

FIG. 1 illustrates an example of a wireless frame structure used in a wireless communication system.

Referring to FIG. 1, the wireless frame (or radio frame) used in the 3GPP NR system may have a length of 10 ms $(\Delta f_{max} N_f/100)^* T_c)$. In addition, the wireless frame includes 10 subframes (SFs) having equal sizes. Herein, $\Delta f_{max}=480^*10^3$ Hz, $N_f=4096$, $T_c=1/(\Delta f_{ref}^* N_{f,ref})$, $\Delta f_{ref}=15^*10^3$ Hz, and $N_{f,ref}=2048$. Numbers from 0 to 9 may be respectively allocated to 10 subframes within one wireless frame. Each subframe has a length of 1 ms and may include one or more slots according to a subcarrier spacing. More specifically, in the 3GPP NR system, the subcarrier spacing that may be used is $15^*2^\mu$ kHz, and $\mu$ can have a value of $\mu = 0, 1, 2, 3, 4$ as subcarrier spacing configuration. That is, 15 kHz, 30 kHz, 60 kHz, 120 kHz and 240 kHz may be used for subcarrier spacing. One subframe having a length of 1 ms may include $2^\mu$ slots. In this case, the length of each slot is $2^{-\mu}$ ms. Numbers from 0 to $2^\mu-1$ may be respectively allocated to $2^\mu$ slots within one wireless frame. In addition, numbers from 0 to $10^*2^\mu-1$ may be respectively allocated to slots within one subframe. The time resource may be distinguished by at least one of a wireless frame number (also referred to as a wireless frame index), a subframe number (also referred to as a subframe index), and a slot number (or a slot index).

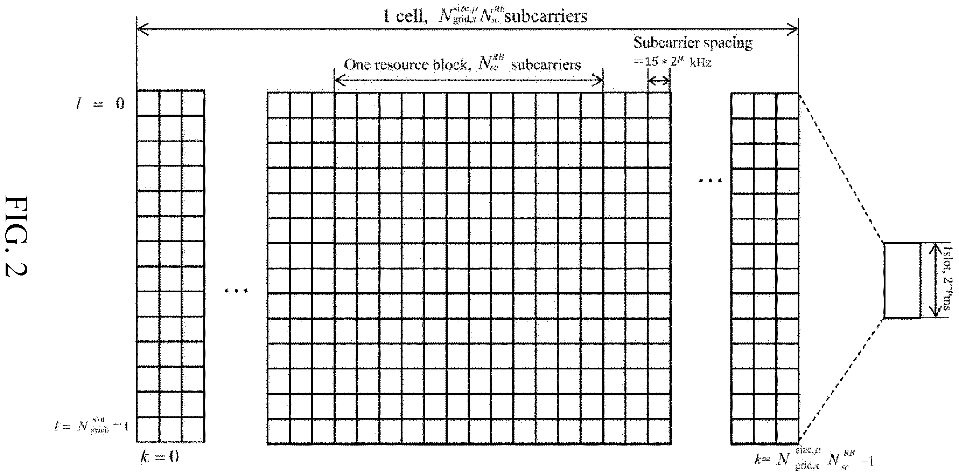

FIG. 2 illustrates an example of a downlink (DL)/uplink (UL) slot structure in a wireless communication system. In particular, FIG. 2 shows the structure of the resource grid of the 3GPP NR system.

There is one resource grid per antenna port. Referring to FIG. 2, a slot includes a plurality of orthogonal frequency division multiplexing (OFDM) symbols in a time domain and includes a plurality of resource blocks (RBs) in a frequency domain. An OFDM symbol also means one symbol section. Unless otherwise specified, OFDM symbols may be referred to simply as symbols. One RB includes 12 consecutive subcarriers in the frequency domain. Referring to FIG. 2, a signal transmitted from each slot may be represented by a resource grid including $N^{size,\mu}_{grid,x} * N^{RB}_{sc}$ subcarriers, and $N^{slot}_{symb}$ OFDM symbols. Here, x = DL when the signal is a DL signal, and x = UL when the signal is an UL signal. $N^{size,\mu}_{grid,x}$ represents the number of resource blocks (RBs) according to the subcarrier spacing constituent $\mu$ (x is DL or UL), and $N^{slot}_{symb}$ represents the number of OFDM symbols in a slot. $N^{RB}_{sc}$ is the number of subcarriers constituting one RB and $N^{RB}_{sc}= 12$. An OFDM symbol may be referred to as a cyclic shift OFDM (CP-OFDM) symbol or a discrete Fourier transform spread OFDM (DFT-s-OFDM) symbol according to a multiple access scheme.

The number of OFDM symbols included in one slot may vary according to the length of a cyclic prefix (CP). For example, in the case of a normal CP, one slot includes 14 OFDM symbols, but in the case of an extended CP, one slot may include 12 OFDM symbols. In a specific embodiment, the extended CP can only be used at 60 kHz subcarrier spacing. In FIG. 2, for convenience of description, one slot is configured with 14 OFDM symbols by way of example, but embodiments of the present disclosure may be applied in a similar manner to a slot having a different number of OFDM symbols. Referring to FIG. 2, each OFDM symbol includes $N^{size,\mu}_{grid,x} * N^{RB}_{sc}$ subcarriers in the frequency domain. The type of subcarrier may be divided into a data subcarrier for data transmission, a reference signal subcarrier for transmission of a reference signal, and a guard band. The carrier frequency is also referred to as the center frequency (fc).

One RB may be defined by $N^{RB}_{sc}$ (e. g., 12) consecutive subcarriers in the frequency domain. For reference, a resource configured with one OFDM symbol and one subcarrier may be referred to as a resource element (RE) or a tone. Therefore, one RB can be configured with $N^{slot}_{symb} * N^{RB}_{sc}$ resource elements. Each resource element in the resource grid can be uniquely defined by a pair of indexes (k, l) in one slot. k may be an index assigned from 0 to $N^{size,\mu}_{grid,x} * N^{RB}_{sc} - 1$ in the frequency domain, and I may be an index assigned from 0 to $N^{slot}_{symb} - 1$ in the time domain.

In order for the UE to receive a signal from the base station or to transmit a signal to the base station, the time/frequency of the UE may be synchronized with the time/frequency of the base station. This is because when the base station and the UE are synchronized, the UE can determine the time and frequency parameters necessary for demodulating the DL signal and transmitting the UL signal at the correct time.

Each symbol of a radio frame used in a time division duplex (TDD) or an unpaired spectrum may be configured with at least one of a DL symbol, an UL symbol, and a flexible symbol. A radio frame used as a DL carrier in a frequency division duplex (FDD) or a paired spectrum may be configured with a DL symbol or a flexible symbol, and a radio frame used as a UL carrier may be configured with a UL symbol or a flexible symbol. In the DL symbol, DL transmission is possible, but UL transmission is impossible. In the UL symbol, UL transmission is possible, but DL transmission is impossible. The flexible symbol may be determined to be used as a DL or an UL according to a signal.

Information on the type of each symbol, i.e., information representing any one of DL symbols, UL symbols, and flexible symbols, may be configured with a cell-specific or common radio resource control (RRC) signal. In addition, information on the type of each symbol may additionally be configured with a UE-specific or dedicated RRC signal. The base station informs, by using cell-specific RRC signals, i) the period of cell-specific slot configuration, ii) the number of slots with only DL symbols from the beginning of the period of cell-specific slot configuration, iii) the number of DL symbols from the first symbol of the slot immediately following the slot with only DL symbols, iv) the number of slots with only UL symbols from the end of the period of cell specific slot configuration, and v) the number of UL symbols from the last symbol of the slot immediately before the slot with only the UL symbol. Here, symbols not configured with any one of a UL symbol and a DL symbol are flexible symbols.

When the information on the symbol type is configured with the UE-specific RRC signal, the base station may signal whether the flexible symbol is a DL symbol or an UL symbol in the cell-specific RRC signal. In this case, the UE-specific RRC signal cannot change a DL symbol or a UL symbol configured with the cell-specific RRC signal into another symbol type. The UE-specific RRC signal may signal the number of DL symbols among the $N^{slot}_{symb}$ symbols of the corresponding slot for each slot, and the number of UL symbols among the $N^{slot}_{symb}$ symbols of the corresponding slot. In this case, the DL symbol of the slot may be continuously configured with the first symbol to the i-th symbol of the slot. In addition, the UL symbol of the slot may be continuously configured with the j-th symbol to the last symbol of the slot (where i <j). In the slot, symbols not configured with any one of a UL symbol and a DL symbol are flexible symbols.

The type of symbol configured with the above RRC signal may be referred to as a semi-static DL/UL configuration. In the semi-static DL/UL configuration previously configured with RRC signals, the flexible symbol may be indicated as a DL symbol, an UL symbol, or a flexible symbol through dynamic slot format information (SFI) transmitted on a physical DL control channel (PDCCH). In this case, the DL symbol or UL symbol configured with the RRC signal is not changed to another symbol type. Table 1 exemplifies the dynamic SFI that the base station can indicate to the UE.

[Table 1]

| index | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 0 | D | D | D | D | D | D | D | D | D | D | D | D | D | D |
| 1 | U | U | U | U | U | U | U | U | U | U | U | U | U | U |
| 2 | X | X | X | X | X | X | X | X | X | X | X | X | X | X |
| 3 | D | D | D | D | D | D | D | D | D | D | D | D | D | X |
| 4 | D | D | D | D | D | D | D | D | D | D | D | D | X | X |
| 5 | D | D | D | D | D | D | D | D | D | D | D | X | X | X |
| 6 | D | D | D | D | D | D | D | D | D | D | X | X | X | X |
| 7 | D | D | D | D | D | D | D | D | D | X | X | X | X | X |
| 8 | X | X | X | X | X | X | X | X | X | X | X | X | X | U |
| 9 | X | X | X | X | X | X | X | X | X | X | X | X | U | U |
| 10 | X | U | U | U | U | U | U | U | U | U | U | U | U | U |
| 11 | X | X | U | U | U | U | U | U | U | U | U | U | U | U |
| 12 | X | X | X | U | U | U | U | U | U | U | U | U | U | U |
| 13 | X | X | X | X | U | U | U | U | U | U | U | U | U | U |
| 14 | X | X | X | X | X | U | U | U | U | U | U | U | U | U |
| 15 | X | X | X | X | X | X | U | U | U | U | U | U | U | U |
| 16 | D | X | X | X | X | X | X | X | X | X | X | X | X | X |
| 17 | D | D | X | X | X | X | X | X | X | X | X | X | X | X |
| 18 | D | D | D | X | X | X | X | X | X | X | X | X | X | X |
| 19 | D | X | X | X | X | X | X | X | X | X | X | X | X | U |
| 20 | D | D | X | X | X | X | X | X | X | X | X | X | X | U |
| 21 | D | D | D | X | X | X | X | X | X | X | X | X | X | U |
| 22 | D | X | X | X | X | X | X | X | X | X | X | X | U | U |
| 23 | D | D | X | X | X | X | X | X | X | X | X | X | U | U |
| 24 | D | D | D | X | X | X | X | X | X | X | X | X | U | U |
| 25 | D | X | X | X | X | X | X | X | X | X | X | U | U | U |
| 26 | D | D | X | X | X | X | X | X | X | X | X | U | U | U |
| 27 | D | D | D | X | X | X | X | X | X | X | X | U | U | U |
| 28 | D | D | D | D | D | D | D | D | D | D | D | D | X | U |
| 29 | D | D | D | D | D | D | D | D | D | D | D | X | X | U |
| 30 | D | D | D | D | D | D | D | D | D | D | X | X | X | U |
| 31 | D | D | D | D | D | D | D | D | D | D | D | X | U | U |
| 32 | D | D | D | D | D | D | D | D | D | D | X | X | U | U |
| 33 | D | D | D | D | D | D | D | D | D | X | X | X | U | U |
| 34 | D | X | U | U | U | U | U | U | U | U | U | U | U | U |
| 35 | D | D | X | U | U | U | U | U | U | U | U | U | U | U |
| 36 | D | D | D | X | U | U | U | U | U | U | U | U | U | U |
| 37 | D | X | X | U | U | U | U | U | U | U | U | U | U | U |
| 38 | D | D | X | X | U | U | U | U | U | U | U | U | U | U |
| 39 | D | D | D | X | X | U | U | U | U | U | U | U | U | U |
| 40 | D | X | X | X | U | U | U | U | U | U | U | U | U | U |
| 41 | D | D | X | X | X | U | U | U | U | U | U | U | U | U |
| 42 | D | D | D | X | X | X | U | U | U | U | U | U | U | U |
| 43 | D | D | D | D | D | D | D | D | D | X | X | X | X | U |
| 44 | D | D | D | D | D | D | X | X | X | X | X | X | U | U |
| 45 | D | D | D | D | D | D | X | X | U | U | U | U | U | U |
| 46 | D | D | D | D | D | X | U | D | D | D | D | D | X | U |
| 47 | D | D | X | U | U | U | U | D | D | X | U | U | U | U |
| 48 | D | X | U | U | U | U | U | D | X | U | U | U | U | U |
| 49 | D | D | D | D | X | X | U | D | D | D | D | D | X | U |
| 50 | D | D | X | U | U | U | U | D | D | X | U | U | U | U |
| 51 | D | D | X | U | U | U | U | D | X | X | U | U | U | U |
| 52 | D | D | D | D | X | X | U | D | X | X | X | X | X | U |
| 53 | D | D | X | X | X | X | U | D | X | X | X | X | X | U |
| 54 | X | X | X | X | X | X | X | D | D | D | D | D | D | D |
| 55 | D | D | X | X | X | U | U | U | D | D | D | D | D | D |
| 56~255 | Reserved | | | | | | | | | | | | | |

In Table 1, D denotes a DL symbol, U denotes a UL symbol, and X denotes a flexible symbol. As shown in Table 1, up to two DL/UL switching in one slot may be allowed.

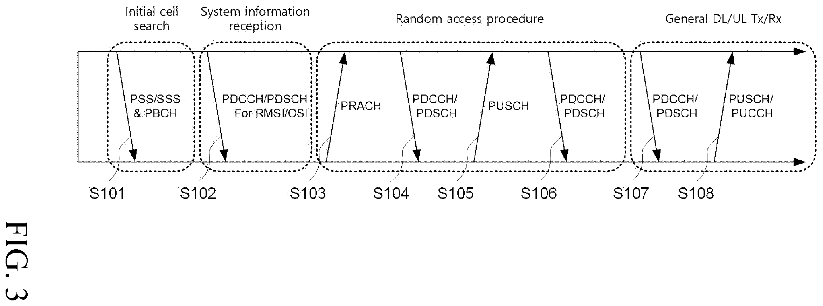

FIG. 3 is a diagram for explaining a physical channel used in a 3GPP system (e.g., NR) and a typical signal transmission method using the physical channel.

If the power of the UE is turned on or the UE camps on a new cell, the UE performs an initial cell search (S101). Specifically, the UE may synchronize with the BS in the initial cell search. For this, the UE may receive a primary synchronization signal (PSS) and a secondary synchronization signal (SSS) from the base station to synchronize with the base station, and obtain information such as a cell ID. Thereafter, the UE can receive the physical broadcast channel from the base station and obtain the broadcast information in the cell.

Upon completion of the initial cell search, the UE receives a physical downlink shared channel (PDSCH) according to the physical downlink control channel (PDCCH) and information in the PDCCH, so that the UE can obtain more specific system information than the system information obtained through the initial cell search (S102). Herein, the system information received by the UE is cell-common system information for normal operating of the UE in a physical layer in radio resource control (RRC) and is referred to remaining system information, or system information block (SIB) 1 is called.

When the UE initially accesses the base station or does not have radio resources for signal transmission (i.e. the UE at RRC_IDLE mode), the UE may perform a random access procedure on the base station (operations S103 to S106). First, the UE can transmit a preamble through a physical random access channel (PRACH) (S103) and receive a response message for the preamble from the base station through the PDCCH and the corresponding PDSCH (S104). When a valid random access response message is received by the UE, the UE transmits data including the identifier of the UE and the like to the base station through a physical uplink shared channel (PUSCH) indicated by the UL grant transmitted through the PDCCH from the base station (S105). Next, the UE waits for reception of the PDCCH as an indication of the base station for collision resolution. If the UE successfully receives the PDCCH through the identifier of the UE (S106), the random access process is terminated. The UE may obtain UE-specific system information for normal operating of the UE in the physical layer in RRC layer during a random access process. When the UE obtain the UE-specific system information, the UE enter RRC connecting mode (RRC_CONNECTED mode).

The RRC layer is used for generating or managing message for controlling connection between the UE and radio access network (RAN). In more detail, the base station and the UE, in the RRC layer, may perform broadcasting cell system information required by every UE in the cell, managing mobility and handover, measurement report of the UE, storage management including UE capability management and device management. In general, the RRC signal is not changed and maintained quite long interval since a period of an update of a signal delivered in the RRC layer is longer than a transmission time interval (TTI) in physical layer.

After the above-described procedure, the UE receives PDCCH/PDSCH (S107) and transmits a physical uplink shared channel (PUSCH)/physical uplink control channel (PUCCH) (S108) as a general UL/DL signal transmission procedure. In particular, the UE may receive downlink control information (DCI) through the PDCCH. The DCI may include control information such as resource allocation information for the UE. Also, the format of the DCI may vary depending on the intended use. The uplink control information (UCI) that the UE transmits to the base station through UL includes a DL/UL ACK/NACK signal, a channel quality indicator (CQI), a precoding matrix index (PMI), a rank indicator (RI), and the like. Here, the CQI, PMI, and RI may be included in channel state information (CSI). In the 3GPP NR system, the UE may transmit control information such as HARQ-ACK and CSI described above through the PUSCH and/or PUCCH.

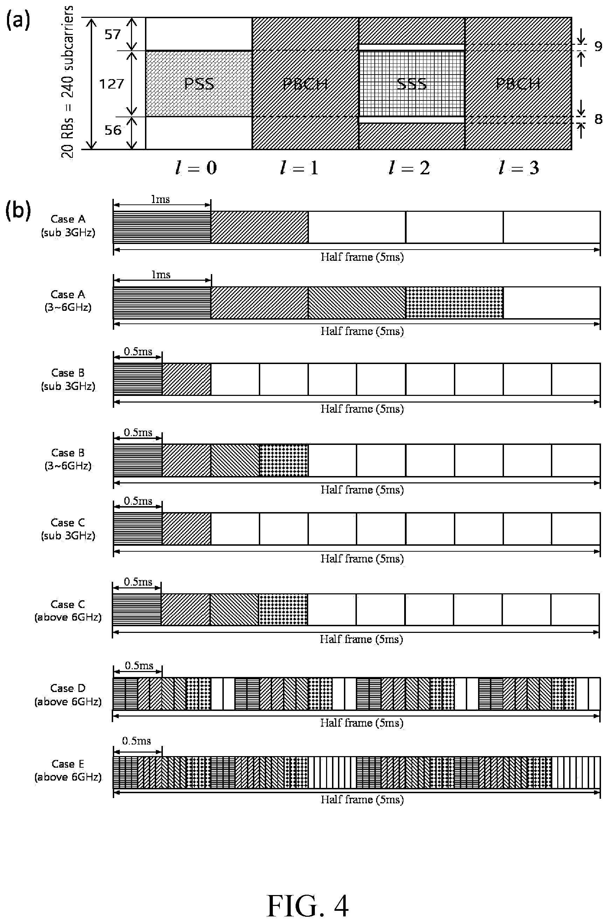

FIG. 4 illustrates an SS/PBCH block for initial cell access in a 3GPP NR system.

When the power is turned on or wanting to access a new cell, the UE may obtain time and frequency synchronization with the cell and perform an initial cell search procedure. The UE may detect a physical cell identity $N^{cell}_{ID}$ of the cell during a cell search procedure. For this, the UE may receive a synchronization signal, for example, a primary synchronization signal (PSS) and a secondary synchronization signal (SSS), from a base station, and synchronize with the base station. In this case, the UE can obtain information such as a cell identity (ID).

Referring to FIG. 4A, a synchronization signal (SS) will be described in more detail. The synchronization signal can be classified into PSS and SSS. The PSS may be used to obtain time domain synchronization and/or frequency domain synchronization, such as OFDM symbol synchronization and slot synchronization. The SSS can be used to obtain frame synchronization and cell group ID. Referring to FIG. 4A and Table 2, the SS/PBCH block can be configured with consecutive 20 RBs (= 240 subcarriers) in the frequency axis, and can be configured with consecutive 4 OFDM symbols in the time axis. In this case, in the SS/PBCH block, the PSS is transmitted in the first OFDM symbol and the SSS is transmitted in the third OFDM symbol through the 56th to 182th subcarriers. Here, the lowest subcarrier index of the SS/PBCH block is numbered from 0. In the first OFDM symbol in which the PSS is transmitted, the base station does not transmit a signal through the remaining subcarriers, i.e., 0th to 55th and 183th to 239th subcarriers. In addition, in the third OFDM symbol in which the SSS is transmitted, the base station does not transmit a signal through 48th to 55th and 183th to 191th subcarriers. The base station transmits a physical broadcast channel (PBCH) through the remaining RE except for the above signal in the SS/PBCH block.

[Table 2]

| The SS allows a total of 1008 unique physical layer cell IDs to be grouped into 336 | | |
|---|---|---|
| **Channel or signal** | **OFDM symbol number $l$ relative to the start of an SS/PBCH block** | **Subcarrier number $k$ relative to the start of an SS/PBCH block** |
| PSS | 0 | 56, 57, ..., 182 |
| SSS | 2 | 56, 57, ..., 182 |
| Set to 0 | 0 | 0, 1, ..., 55, 183, 184, ..., 239 |
| | 2 | 48, 49, ..., 55, 183, 184, ..., 191 |
| PBCH | 1, 3 | 0, 1, ..., 239 |
| | 2 | 0, 1, ..., 47, 192, 193, ..., 239 |
| DM-RS for PBCH | 1, 3 | $0+v, 4+v, 8+v, ..., 236+v$ |
| | 2 | $0+v, 4+v, 8+v, ..., 44+v$ 192+v, 196+v, ..., 236+v |

physical-layer cell-identifier groups, each group including three unique identifiers, through a combination of three PSSs and SSSs, specifically, such that each physical layer cell ID is to be only a part of one physical-layer cell-identifier group. Therefore, the physical layer cell ID $N^{cell}_{ID} = 3N^{(1)}_{ID} + N^{(2)}_{ID}$ can be uniquely defined by the index $N^{(1)}_{ID}$ ranging from 0 to 335 indicating a physical-layer cell-identifier group and the index $N^{(2)}_{ID}$ ranging from 0 to 2 indicating a physical-layer identifier in the physical-layer cell-identifier group. The UE may detect the PSS and identify one of the three unique physical-layer identifiers. In addition, the UE can detect the SSS and identify one of the 336 physical layer cell IDs associated with the physical-layer identifier. In this case, the sequence $d_{PSS}(n)$ of the PSS is as follows.

$$d_{PSS}(n) = 1 - 2x(m)$$

$$m = \left(n + 43N_{ID}^{(2)}\right) \bmod 127$$

$$0 \le n < 127$$

Here, $x(i + 7)=(x(i + 4)+ x(i))\bmod 2$ and is given as

$$\left[ x(6) \quad x(5) \quad x(4) \quad x(3) \quad x(2) \quad x(1) \quad x(0) \right] = \left[ 1 \quad 1 \quad 1 \quad 0 \quad 1 \quad 1 \quad 0 \right]$$

Further, the sequence $d_{SSS}(n)$ of the SSS is as follows.

$$d_{SSS}(n) = \left[ 1 - 2x_0\left( (n + m_0) \bmod 127 \right) \right] \left[ 1 - 2x_1\left( (n + m_1) \bmod 127 \right) \right]$$

$$m_0 = 15 \left\lfloor \frac{N_{ID}^{(1)}}{112} \right\rfloor + 5N_{ID}^{(2)}$$

$$m_1 = N_{ID}^{(1)} \bmod 112$$

$$0 \le n < 127$$

Here, $\begin{aligned} x_0(i+7) &= \left(x_0(i+4)+x_0(i)\right)\bmod 2 \\ x_1(i+7) &= \left(x_1(i+1)+x_1(i)\right)\bmod 2 \end{aligned}$ and is given as

$$\left[ x_0(6) \quad x_0(5) \quad x_0(4) \quad x_0(3) \quad x_0(2) \quad x_0(1) \quad x_0(0) \right] = \left[ 0 \quad 0 \quad 0 \quad 0 \quad 0 \quad 0 \quad 1 \right]$$

$$\left[ x_1(6) \quad x_1(5) \quad x_1(4) \quad x_1(3) \quad x_1(2) \quad x_1(1) \quad x_1(0) \right] = \left[ 0 \quad 0 \quad 0 \quad 0 \quad 0 \quad 0 \quad 1 \right]$$

A radio frame with a 10 ms length may be divided into two half frames with a 5 ms length. Referring to FIG. 4B, a description will be made of a slot in which SS/PBCH blocks are transmitted in each half frame. A slot in which the SS/PBCH block is transmitted may be any one of the cases A, B, C, D, and E. In the case A, the subcarrier spacing is 15 kHz and the starting time point of the SS/PBCH block is the ({2, 8} + 14*n)-th symbol. In this case, n = 0 or 1 at a carrier frequency of 3 GHz or less. In addition, it may be n = 0, 1, 2, 3 at carrier frequencies above 3 GHz and below 6 GHz. In the case B, the subcarrier spacing is 30 kHz and the starting time point of the SS/PBCH block is {4, 8, 16, 20} + 28*n. In this case, n = 0 at a carrier frequency of 3 GHz or less. In addition, it may be n = 0, 1 at carrier frequencies above 3 GHz and below 6 GHz. In the case C, the subcarrier spacing is 30 kHz and the starting time point of the SS/PBCH block is the ({2, 8} + 14*n)-th symbol. In this case, n = 0 or 1 at a carrier frequency of 3 GHz or less. In addition, it may be n = 0, 1, 2, 3 at carrier frequencies above 3 GHz and below 6 GHz. In the case D, the subcarrier spacing is 120 kHz and the starting time point of the SS/PBCH block is the ({4, 8, 16, 20} + 28*n)-th symbol. In this case, at a carrier frequency of 6 GHz or more, n = 0, 1, 2, 3, 5, 6, 7, 8, 10, 11, 12, 13, 15, 16, 17, 18. In the case E, the subcarrier spacing is 240 kHz and the starting time point of the SS/PBCH block is the ({8, 12, 16, 20, 32, 36, 40, 44} + 56*n)-th symbol. In this case, at a carrier frequency of 6 GHz or more, n = 0, 1, 2, 3, 5, 6, 7, 8.

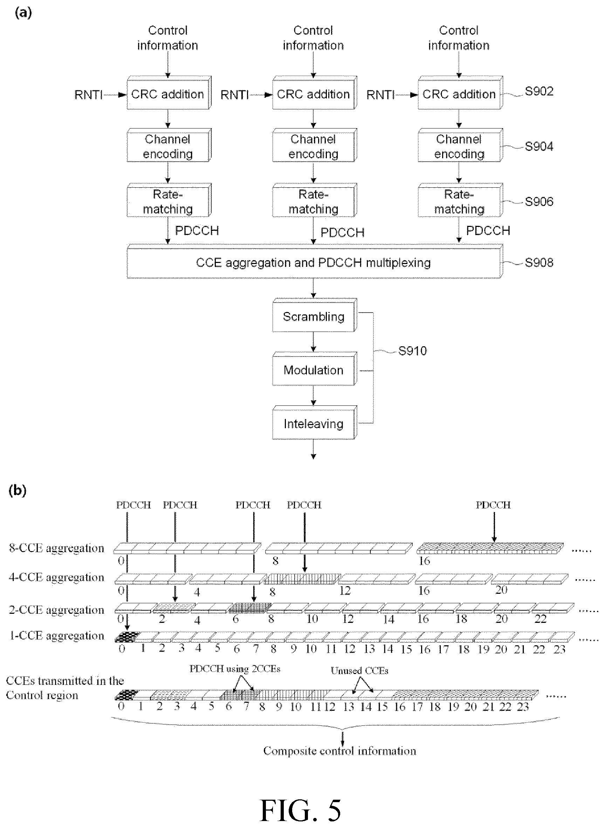

FIG. 5 illustrates a procedure for transmitting control information and a control channel in a 3GPP NR system. Referring to FIG. 5A, the base station may add a cyclic redundancy check (CRC) masked (e.g., an XOR operation) with a radio network temporary identifier (RNTI) to control information (e.g., downlink control information (DCI)) (S202). The base station may scramble the CRC with an RNTI value determined according to the purpose/target of each control information. The common RNTI used by one or more UEs can include at least one of a system information RNTI (SI-RNTI), a paging RNTI (P-RNTI), a random access RNTI (RA-RNTI), and a transmit power control RNTI (TPC-RNTI). In addition, the UE-specific RNTI may include at least one of a cell temporary RNTI (C-RNTI), and the CS-RNTI. Thereafter, the base station may perform rate-matching (S206) according to the amount of resource(s) used for PDCCH transmission after performing channel encoding (e.g., polar coding) (S204). Thereafter, the base station may multiplex the DCI(s) based on the control channel element (CCE) based PDCCH structure (S208). In addition, the base station may apply an additional process (S210) such as scrambling, modulation (e.g., QPSK), interleaving, and the like to the multiplexed DCI(s), and then map the DCI(s) to the resource to be transmitted. The CCE is a basic resource unit for the PDCCH, and one CCE may include a plurality (e.g., six) of resource element groups (REGs). One REG may be configured with a plurality (e.g., 12) of REs. The number of CCEs used for one PDCCH may be defined as an aggregation level. In the 3GPP NR system, an aggregation level of 1, 2, 4, 8, or 16 may be used. FIG. 5B is a diagram related to a CCE aggregation level and the multiplexing of a PDCCH and illustrates the type of a CCE aggregation level used for one PDCCH and CCE(s) transmitted in the control area according thereto.

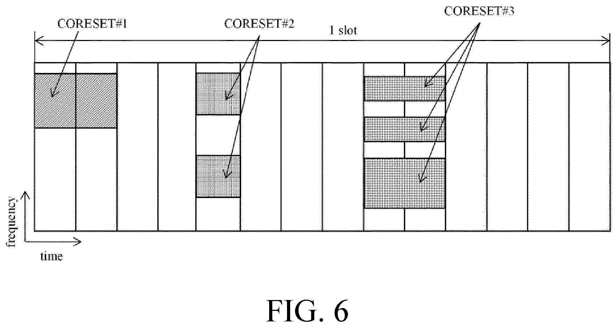

FIG. 6 illustrates a control resource set (CORESET) in which a physical downlink control channel (PDCCH) may be transmitted in a 3GPP NR system.

The CORESET is a time-frequency resource in which PDCCH, that is, a control signal for the UE, is transmitted. In addition, a search space to be described later may be mapped to one CORESET. Therefore, the UE may monitor the time-frequency domain designated as CORESET instead of monitoring all frequency bands for PDCCH reception, and decode the PDCCH mapped to CORESET. The base station may configure one or more CORESETs for each cell to the UE. The CORESET may be configured with up to three consecutive symbols on the time axis. In addition, the CORESET may be configured in units of six consecutive PRBs on the frequency axis. In the embodiment of FIG. 5, CORESET#1 is configured with consecutive PRBs, and CORESET#2 and CORESET#3 are configured with discontinuous PRBs. The CORESET can be located in any symbol in the slot. For example, in the embodiment of FIG. 5, CORESET#1 starts at the first symbol of the slot, CORESET#2 starts at the fifth symbol of the slot, and CORESET#9 starts at the ninth symbol of the slot.

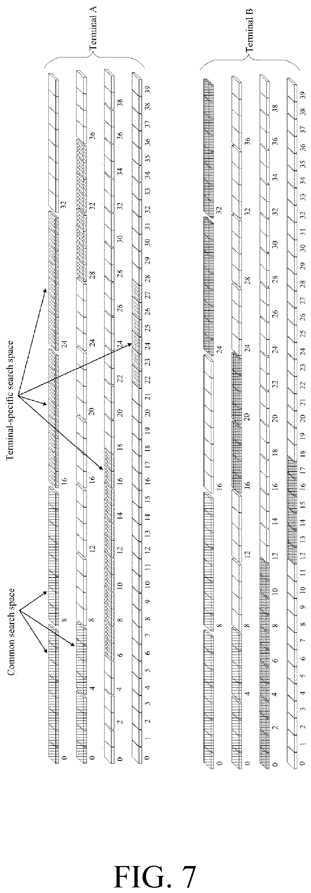

FIG. 7 illustrates a method for setting a PDCCH search space in a 3GPP NR system.

In order to transmit the PDCCH to the UE, each CORESET may have at least one search space. In the embodiment of the present disclosure, the search space is a set of all time-frequency resources (hereinafter, PDCCH candidates) through which the PDCCH of the UE is capable of being transmitted. The search space may include a common search space that the UE of the 3GPP NR is required to commonly search and a UE-specific or a UE-specific search space that a specific UE is required to search. In the common search space, UE may monitor the PDCCH that is set so that all UEs in the cell belonging to the same base station commonly search. In addition, the UE-specific search space may be set for each UE so that UEs monitor the PDCCH allocated to each UE at different search space position according to the UE. In the case of the UE-specific search space, the search space between the UEs may be partially overlapped and allocated due to the limited control area in which the PDCCH may be allocated. Monitoring the PDCCH includes blind decoding for PDCCH candidates in the search space. When the blind decoding is successful, it may be expressed that the PDCCH is (successfully) detected/received and when the blind decoding fails, it may be expressed that the PDCCH is not detected/not received, or is not successfully detected/received.

For convenience of explanation, a PDCCH scrambled with a group common (GC) RNTI previously known to one or more UEs so as to transmit DL control information to the one or more UEs is referred to as a group common (GC) PDCCH or a common PDCCH. In addition, a PDCCH scrambled with a specific-terminal RNTI that a specific UE already knows so as to transmit UL scheduling information or DL scheduling information to the specific UE is referred to as a UE-specific PDCCH. The common PDCCH may be included in a common search space, and the UE-specific PDCCH may be included in a common search space or a UE-specific PDCCH.

The base station may signal each UE or UE group through a PDCCH about information (i.e., DL Grant) related to resource allocation of a paging channel (PCH) and a downlink-shared channel (DL-SCH) that are a transmission channel or information (i.e., UL grant) related to resource allocation of a uplink-shared channel (UL-SCH) and a hybrid automatic repeat request (HARQ). The base station may transmit the PCH transport block and the DL-SCH transport block through the PDSCH. The base station may transmit data excluding specific control information or specific service data through the PDSCH. In addition, the UE may receive data excluding specific control information or specific service data through the PDSCH.

The base station may include, in the PDCCH, information on to which UE (one or a plurality of UEs) PDSCH data is transmitted and how the PDSCH data is to be received and decoded by the corresponding UE, and transmit the PDCCH. For example, it is assumed that the DCI transmitted on a specific PDCCH is CRC masked with an RNTI of "A", and the DCI indicates that PDSCH is allocated to a radio resource (e.g., frequency location) of "B" and indicates transmission format information (e.g., transport block size, modulation scheme, coding information, etc.) of "C". The UE monitors the PDCCH using the RNTI information that the UE has. In this case, if there is a UE which performs blind decoding the PDCCH using the "A" RNTI, the UE receives the PDCCH, and receives the PDSCH indicated by "B" and "C" through the received PDCCH information.

Table 3 shows an embodiment of a physical uplink control channel (PUCCH) used in a wireless communication system.

[Table 3]

| PUCCH format | Length in OFDM symbols | Number of bits |
|:---:|:---:|:---:|
| 0 | 1 - 2 | $\leq 2$ |
| 1 | 4 - 14 | $\leq 2$ |
| 2 | 1 - 2 | >2 |
| 3 | 4 - 14 | >2 |
| 4 | 4 - 14 | >2 |

The PUCCH may be used to transmit the following UL control information (UCI).

- Scheduling Request (SR): Information used for requesting a UL UL-SCH resource.
- HARQ-ACK: A Response to PDCCH (indicating DL SPS release) and/or a response to DL transport block (TB) on PDSCH. HARQ-ACK indicates whether information successfully transmitted on the PDCCH or PDSCH is received. The HARQ-ACK response includes positive ACK (simply ACK), negative ACK (hereinafter NACK), Discontinuous Transmission (DTX), or NACK/DTX. Here, the term HARQ-ACK is used mixed with HARQ-ACK/NACK and ACK/NACK. In general, ACK may be represented by bit value 1 and NACK may be represented by bit value 0.
- Channel State Information (CSI): Feedback information on the DL channel. The UE generates it based on the CSI-Reference Signal (RS) transmitted by the base station. Multiple Input Multiple Output (MIMO)-related feedback information includes a Rank Indicator (RI) and a Precoding Matrix Indicator (PMI). CSI can be divided into CSI part 1 and CSI part 2 according to the information indicated by CSI.

In the 3GPP NR system, five PUCCH formats may be used to support various service scenarios, various channel environments, and frame structures.

PUCCH format 0 is a format capable of delivering 1-bit or 2-bit HARQ-ACK information or SR. PUCCH format 0 can be transmitted through one or two OFDM symbols on the time axis and one PRB on the frequency axis. When PUCCH format 0 is transmitted in two OFDM symbols, the same sequence on the two symbols may be transmitted through different RBs. In this case, the sequence may be a sequence cyclic shifted (CS) from a base sequence used in PUCCH format 0. Through this, the UE may obtain a frequency diversity gain. In more detail, the UE may determine a cyclic shift (CS) value $m_{cs}$ according to $M_{bit}$ bit UCI ($M_{bit}$ = 1 or 2). In addition, the base sequence having the length of 12 may be transmitted by mapping a cyclic shifted sequence based on a predetermined CS value $m_{cs}$ to one OFDM symbol and 12 REs of one RB. When the number of cyclic shifts available to the UE is 12 and $M_{bit}$ = 1, 1 bit UCI 0 and 1 may be mapped to two cyclic shifted sequences having a difference of 6 in the cyclic shift value, respectively. In addition, when $M_{bit}$ = 2, 2 bit UCI 00, 01, 11, and 10 may be mapped to four cyclic shifted sequences having a difference of 3 in cyclic shift values, respectively.

PUCCH format 1 may deliver 1-bit or 2-bit HARQ-ACK information or SR. PUCCH format 1 may be transmitted through consecutive OFDM symbols on the time axis and one PRB on the frequency axis. Here, the number of OFDM symbols occupied by PUCCH format 1 may be one of 4 to 14. More specifically, UCI, which is Mbit = 1, may be BPSK-modulated. The UE may modulate UCI, which is Mbit = 2, with quadrature phase shift keying (QPSK). A signal is obtained by multiplying a modulated complex valued symbol d(0) by a sequence of length 12. In this case, the sequence may be a base sequence used for PUCCH format 0. The UE spreads the even-numbered OFDM symbols to which PUCCH format 1 is allocated through the time axis orthogonal cover code (OCC) to transmit the obtained signal. PUCCH format 1 determines the maximum number of different UEs multiplexed in the one RB according to the length of the OCC to be used. A demodulation reference signal (DMRS) may be spread with OCC and mapped to the odd-numbered OFDM symbols of PUCCH format 1.

PUCCH format 2 may deliver UCI exceeding 2 bits. PUCCH format 2 may be transmitted through one or two OFDM symbols on the time axis and one or a plurality of RBs on the frequency axis. When PUCCH format 2 is transmitted in two OFDM symbols, the sequences which are transmitted in different RBs through the two OFDM symbols may be same each other. Here, the sequence may be a plurality of modulated complex valued symbols d(0),..., d($M_{symbol}$-1). Here, $M_{symbol}$ may be $M_{bit}$/2. Through this, the UE may obtain a frequency diversity gain. More specifically, $M_{bit}$ bit UCI ($M_{bit}$>2) is bit-level scrambled, QPSK modulated, and mapped to RB(s) of one or two OFDM symbol(s). Here, the number of RBs may be one of 1 to 16.

PUCCH format 3 or PUCCH format 4 may deliver UCI exceeding 2 bits. PUCCH format 3 or PUCCH format 4 may be transmitted through consecutive OFDM symbols on the time axis and one PRB on the frequency axis. The number of OFDM symbols occupied by PUCCH format 3 or PUCCH format 4 may be one of 4 to 14. Specifically, the UE modulates $M_{bit}$ bits UCI (Mbit> 2) with $\pi$/2-Binary Phase Shift Keying (BPSK) or QPSK to generate a complex valued symbol d(0) to d($M_{symb}$-1). Here, when using $\pi$/2-BPSK, $M_{symb} = M_{bit}$, and when using QPSK, $M_{symb} = M_{bit}$/2. The UE may not apply block-unit spreading to the PUCCH format 3. However, the UE may apply block-unit spreading to one RB (i.e., 12 subcarriers) using PreDFT-OCC of a length of 12 such that PUCCH format 4 may have two or four multiplexing capacities. The UE performs transmit precoding (or DFT-precoding) on the spread signal and maps it to each RE to transmit the spread signal.

In this case, the number of RBs occupied by PUCCH format 2, PUCCH format 3, or PUCCH format 4 may be determined according to the length and maximum code rate of the UCI transmitted by the UE. When the UE uses PUCCH format 2, the UE may transmit HARQ-ACK information and CSI information together through the PUCCH. When the number of RBs that the UE may transmit is greater than the maximum number of RBs that PUCCH format 2, or PUCCH format 3, or PUCCH format 4 may use, the UE may transmit only the remaining UCI information without transmitting some UCI information according to the priority of the UCI information.

PUCCH format 1, PUCCH format 3, or PUCCH format 4 may be configured through the RRC signal to indicate frequency hopping in a slot. When frequency hopping is configured, the index of the RB to be frequency hopped may be configured with an RRC signal. When PUCCH format 1, PUCCH format 3, or PUCCH format 4 is transmitted through N OFDM symbols on the time axis, the first hop may have floor (N/2) OFDM symbols and the second hop may have ceiling(N/2) OFDM symbols.

PUCCH format 1, PUCCH format 3, or PUCCH format 4 may be configured to be repeatedly transmitted in a plurality of slots. In this case, the number K of slots in which the PUCCH is repeatedly transmitted may be configured by the RRC signal. The repeatedly transmitted PUCCHs must start at an OFDM symbol of the constant position in each slot, and have the constant length. When one OFDM symbol among OFDM symbols of a slot in which a UE should transmit a PUCCH is indicated as a DL symbol by an RRC signal, the UE may not transmit the PUCCH in a corresponding slot and delay the transmission of the PUCCH to the next slot to transmit the PUCCH.

Meanwhile, in the 3GPP NR system, a UE may perform transmission/reception using a bandwidth equal to or less than the bandwidth of a carrier (or cell). For this, the UE may receive the Bandwidth part (BWP) configured with a continuous bandwidth of some of the carrier's bandwidth. A UE operating according to TDD or operating in an unpaired spectrum can receive up to four DL/UL BWP pairs in one carrier (or cell). In addition, the UE may activate one DL/UL BWP pair. A UE operating according to FDD or operating in paired spectrum can receive up to four DL BWPs on a DL carrier (or cell) and up to four UL BWPs on a UL carrier (or cell). The UE may activate one DL BWP and one UL BWP for each carrier (or cell). The UE may not perform reception or transmission in a time-frequency resource other than the activated BWP. The activated BWP may be referred to as an active BWP.

The base station may indicate the activated BWP among the BWPs configured by the UE through downlink control information (DCI). The BWP indicated through the DCI is activated and the other configured BWP(s) are deactivated. In a carrier (or cell) operating in TDD, the base station may include, in the DCI for scheduling PDSCH or PUSCH, a bandwidth part indicator (BPI) indicating the BWP to be activated to change the DL/UL BWP pair of the UE. The UE may receive the DCI for scheduling the PDSCH or PUSCH and may identify the DL/UL BWP pair activated based on the BPI. For a DL carrier (or cell) operating in an FDD, the base station may include a BPI indicating the BWP to be activated in the DCI for scheduling PDSCH so as to change the DL BWP of the UE. For a UL carrier (or cell) operating in an FDD, the base station may include a BPI indicating the BWP to be activated in the DCI for scheduling PUSCH so as to change the UL BWP of the UE.

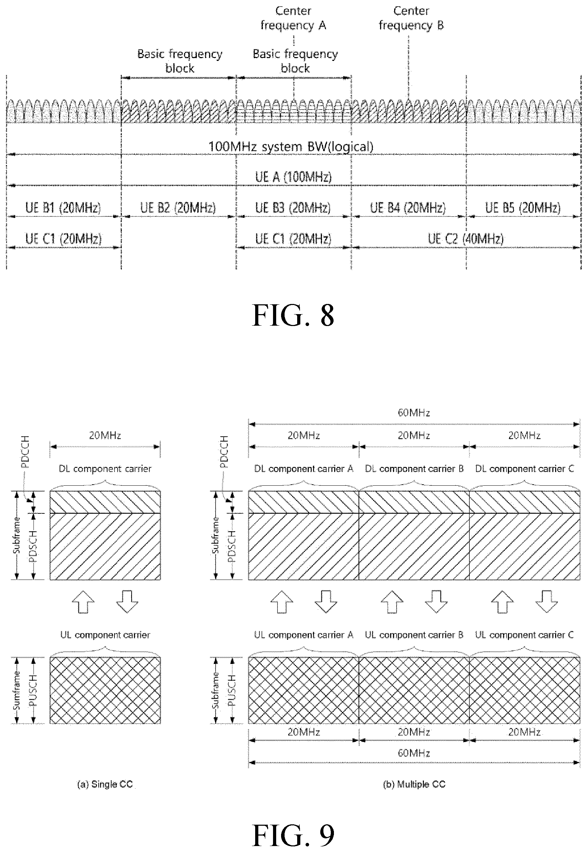

FIG. 8 is a conceptual diagram illustrating carrier aggregation.

The carrier aggregation is a method in which the UE uses a plurality of frequency blocks or cells (in the logical sense) configured with UL resources (or component carriers) and/or DL resources (or component carriers) as one large logical frequency band in order for a wireless communication system to use a wider frequency band. One component carrier may also be referred to as a term called a Primary cell (PCell) or a Secondary cell (SCell), or a Primary SCell (PScell). However, hereinafter, for convenience of description, the term "component carrier" is used.

Referring to FIG. 8, as an example of a 3GPP NR system, the entire system band may include up to 16 component carriers, and each component carrier may have a bandwidth of up to 400 MHz. The component carrier may include one or more physically consecutive subcarriers. Although it is shown in FIG. 8 that each of the component carriers has the same bandwidth, this is merely an example, and each component carrier may have a different bandwidth. Also, although each component carrier is shown as being adjacent to each other in the frequency axis, the drawings are shown in a logical concept, and each component carrier may be physically adjacent to one another, or may be spaced apart.

Different center frequencies may be used for each component carrier. Also, one common center frequency may be used in physically adjacent component carriers. Assuming that all the component carriers are physically adjacent in the embodiment of FIG. 8, center frequency A may be used in all the component carriers. Further, assuming that the respective component carriers are not physically adjacent to each other, center frequency A and the center frequency B can be used in each of the component carriers.

When the total system band is extended by carrier aggregation, the frequency band used for communication with each UE can be defined in units of a component carrier. UE A may use 100 MHz, which is the total system band, and performs communication using all five component carriers. UEs $B_1$~$B_5$ can use only a 20 MHz bandwidth and perform communication using one component carrier. UEs $C_1$ and $C_2$ may use a 40 MHz bandwidth and perform communication using two component carriers, respectively. The two component carriers may be logically/physically adjacent or non-adjacent. UE $C_1$ represents the case of using two non-adjacent component carriers, and UE $C_2$ represents the case of using two adjacent component carriers.

FIG. 9 is a drawing for explaining single carrier communication and multiple carrier communication. Particularly, FIG. 9A shows a single carrier subframe structure and FIG. 9B shows a multi-carrier subframe structure.

Referring to FIG. 9A, in an FDD mode, a general wireless communication system may perform data transmission or reception through one DL band and one UL band corresponding thereto. In another specific embodiment, in a TDD mode, the wireless communication system may divide a radio frame into a UL time unit and a DL time unit in a time domain, and perform data transmission or reception through a UL/DL time unit. Referring to FIG. 9B, three 20 MHz component carriers (CCs) can be aggregated into each of UL and DL, so that a bandwidth of 60 MHz can be supported. Each CC may be adjacent or non-adjacent to one another in the frequency domain. FIG. 9B shows a case where the bandwidth of the UL CC and the bandwidth of the DL CC are the same and symmetric, but the bandwidth of each CC can be determined independently. In addition, asymmetric carrier aggregation with different number of UL CCs and DL CCs is possible. A DL/UL CC allocated/configured to a specific UE through RRC may be called as a serving DL/UL CC of the specific UE.

The base station may perform communication with the UE by activating some or all of the serving CCs of the UE or deactivating some CCs. The base station can change the CC to be activated/deactivated, and change the number of CCs to be activated/deactivated. If the base station allocates a CC available for the UE as to be cell-specific or UE-specific, at least one of the allocated CCs can be deactivated, unless the CC allocation for the UE is completely reconfigured or the UE is handed over. One CC that is not deactivated by the UE is called as a Primary CC (PCC) or a primary cell (PCell), and a CC that the base station can freely activate/deactivate is called as a Secondary CC (SCC) or a secondary cell (SCell).

Meanwhile, 3GPP NR uses the concept of a cell to manage radio resources. A cell is defined as a combination of DL resources and UL resources, that is, a combination of DL CC and UL CC. A cell may be configured with DL resources alone, or a combination of DL resources and UL resources. When the carrier aggregation is supported, the linkage between the carrier frequency of the DL resource (or DL CC) and the carrier frequency of the UL resource (or UL CC) may be indicated by system information. The carrier frequency refers to the center frequency of each cell or CC. A cell corresponding to the PCC is referred to as a PCell, and a cell corresponding to the SCC is referred to as an SCell. The carrier corresponding to the PCell in the DL is the DL PCC, and the carrier corresponding to the PCell in the UL is the UL PCC. Similarly, the carrier corresponding to the SCell in the DL is the DL SCC and the carrier corresponding to the SCell in the UL is the UL SCC. According to UE capability, the serving cell(s) may be configured with one PCell and zero or more SCells. In the case of UEs that are in the RRC_CONNECTED state but not configured for carrier aggregation or that do not support carrier aggregation, there is only one serving cell configured only with PCell.

As mentioned above, the term "cell" used in carrier aggregation is distinguished from the term "cell" which refers to a certain geographical area in which a communication service is provided by one base station or one antenna group. That is, one component carrier may also be referred to as a scheduling cell, a scheduled cell, a primary cell (PCell), a secondary cell (SCell), or a primary SCell (PScell). However, in order to distinguish between a cell referring to a certain geographical area and a cell of carrier aggregation, in the present disclosure, a cell of a carrier aggregation is referred to as a CC, and a cell of a geographical area is referred to as a cell.

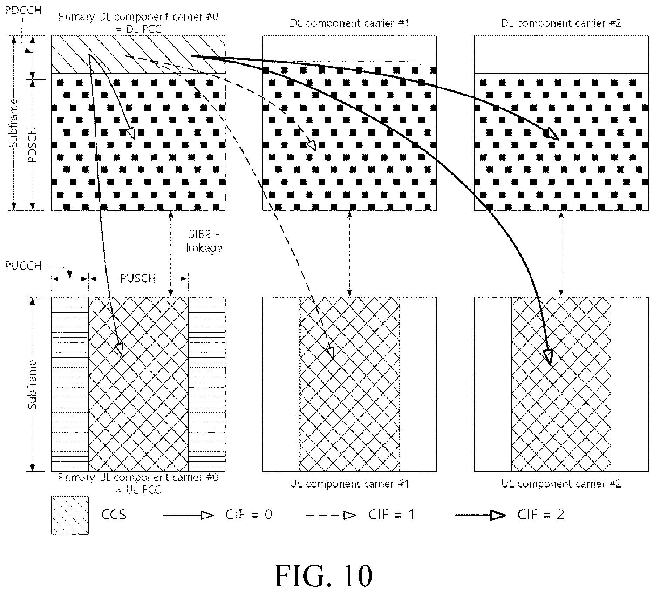

FIG. 10 is a diagram showing an example in which a cross carrier scheduling technique is applied. When cross carrier scheduling is set, the control channel transmitted through the first CC may schedule a data channel transmitted through the first CC or the second CC using a carrier indicator field (CIF). The CIF is included in the DCI. In other words, a scheduling cell is set, and the DL grant/UL grant transmitted in the PDCCH area of the scheduling cell schedules the PDSCH/PUSCH of the scheduled cell. That is, a search area for the plurality of component carriers exists in the PDCCH area of the scheduling cell. A PCell may be basically a scheduling cell, and a specific SCell may be designated as a scheduling cell by an upper layer.

In the embodiment of FIG. 10, it is assumed that three DL CCs are merged. Here, it is assumed that DL component carrier #0 is DL PCC (or PCell), and DL component carrier #1 and DL component carrier #2 are DL SCCs (or SCell). In addition, it is assumed that the DL PCC is set to the PDCCH monitoring CC. When cross-carrier scheduling is not configured by UE-specific (or UE-group-specific or cell-specific) higher layer signaling, a CIF is disabled, and each DL CC can transmit only a PDCCH for scheduling its PDSCH without the CIF according to an NR PDCCH rule (non-cross-carrier scheduling, self-carrier scheduling). Meanwhile, if cross-carrier scheduling is configured by UE-specific (or UE-group-specific or cell-specific) higher layer signaling, a CIF is enabled, and a specific CC (e.g., DL PCC) may transmit not only the PDCCH for scheduling the PDSCH of the DL CC A using the CIF but also the PDCCH for scheduling the PDSCH of another CC (cross-carrier scheduling). On the other hand, a PDCCH is not transmitted in another DL CC. Accordingly, the UE monitors the PDCCH not including the CIF to receive a self-carrier scheduled PDSCH depending on whether the cross-carrier scheduling is configured for the UE, or monitors the PDCCH including the CIF to receive the cross-carrier scheduled PDSCH.

On the other hand, FIGS. 9 and 10 illustrate the subframe structure of the 3GPP LTE-A system, and the same or similar configuration may be applied to the 3GPP NR system. However, in the 3GPP NR system, the subframes of FIGS. 9 and 10 may be replaced with slots.

<Communication Method in Unlicensed Band>

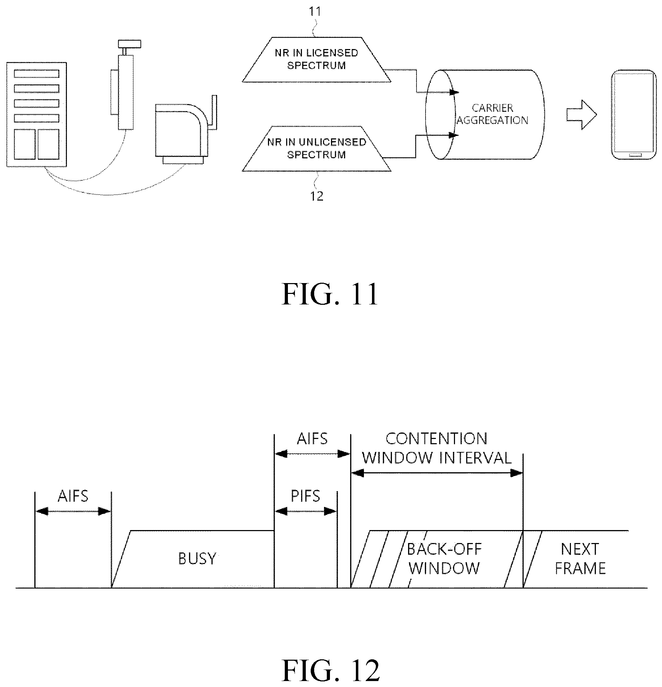

FIG. 11 illustrates a New Radio-Unlicensed (NR-U) service environment.

Referring to FIG. 11, a service environment in which NR technology 11 in the existing licensed band and NR-Unlicensed (NR-U), i.e., NR technology 12 in the unlicensed band may be provide to the user. For example, in the NR-U environment, NR technology 11 in the licensed band and the NR technology 21 in the unlicensed band may be integrated using technologies such as carrier aggregation which may contribute to network capacity expansion. In addition, in an asymmetric traffic structure with more downlink data than uplink data, NR-U can provide an NR service optimized for various needs or environments. For convenience, the NR technology in the licensed band is referred to as NR-L (NR-Licensed), and the NR technology in the unlicensed band is referred to as NR-U (NR-Unlicensed).

FIG. 12 illustrates a conventional communication scheme (e.g., wireless LAN) operating in an unlicensed band. Since most devices that operate in the unlicensed band operate based on listen-before-talk (LBT), a clear channel assessment (CCA) technique that senses a channel before data transmission is performed.

Referring to FIG. 12, a wireless LAN device (e.g., AP or STA) checks whether the channel is busy by performing carrier sensing before transmitting data. When a predetermined strength or more of radio signal is sensed in a channel to transmit data, it is determined that the corresponding channel is busy and the wireless LAN device delays the access to the corresponding channel. Such a process is referred to as clear channel evaluation and a signal level to decide whether the signal is sensed is referred to as a CCA threshold. Meanwhile, when the radio signal is not sensed in the corresponding channel or a radio signal having a strength smaller than the CCA threshold is sensed, it is determined that the channel is idle.

When it is determined that the channel is idle, a terminal having data to be transmitted performs a backoff procedure after a defer duration (e.g., arbitration interframe space (AIFS), PCF IFS (PIFS), or the like). The defer duration represents a minimum time when the terminal needs to wait after the channel is idle. The backoff procedure allows the terminal to further wait for a predetermined time after the defer duration. For example, the terminal stands by while decreasing a slot time for slot times corresponding to a random number allocated to the terminal in the contention window (CW) during the channel is idle, and a terminal that completely exhausts the slot time may attempt to access the corresponding channel.

When the terminal successfully accesses the channel, the terminal may transmit data through the channel. When the data is successfully transmitted, a CW size (CWS) is reset to an initial value (CWmin). On the contrary, when the data is unsuccessfully transmitted, the CWS increases twice. As a result, the terminal is allocated with a new random number within a range which is twice larger than a previous random number range to perform the backoff procedure in a next CW. In the wireless LAN, only an ACK is defined as receiving response information to the data transmission. Therefore, when the ACK is received with respect to the data transmission, the CWS is reset to the initial value and when feed-back information is not received with respect to the data transmission, the CWS increases twice.

As described above, since the existing communication in the unlicensed band mostly operates based on LBT, a channel access in the NR-U system also performs LBT for coexistence with existing devices. Specifically, the channel access method on the unlicensed band in the NR may be classified into the following four categories according to the presence/absence of LBT/application method.

• Category 1: No LBT

  - The Tx entity does not perform the LBT procedure for transmission.

• Category 2: LBT without Random Backoff

  - The Tx entity senses whether a channel is idle during a first interval without random backoff to perform a transmission. That is, the Tx entity may perform a transmission through the channel immediately after the channel is sensed to be idle during the first interval. The first interval is an interval of a predetermined length immediately before the Tx entity performs the transmission. According to an embodiment, the first interval may be an interval of 25 µs length, but the present invention is not limited thereto.

- Category 3: LBT Performing Random Backoff Using CW of Fixed Size

  - The Tx entity obtains a random value within the CW of the fixed size, sets it to an initial value of a backoff counter (or backoff timer) N, and performs backoff by using the set backoff counter N. That is, in the backoff procedure, the Tx entity decreases the backoff counter by 1 whenever the channel is sensed to be idle for a predetermined slot period. Here, the predetermined slot period may be 9 µs, but the present invention is not limited thereto. The backoff counter N is decreased by 1 from the initial value, and when the value of the backoff counter N reaches 0, the Tx entity may perform the transmission. Meanwhile, in order to perform backoff, the Tx entity first senses whether the channel is idle during a second interval (that is, a defer duration Td). According to an embodiment of the present invention, the Tx entity may sense (determine) whether the channel is idle during the second interval, according to whether the channel is idle for at least some period (e.g., one slot period) within the second interval. The second interval may be set based on the channel access priority class of the Tx entity, and consists of a period of 16 µs and m consecutive slot periods. Here, m is a value set according to the channel access priority class. The Tx entity performs channel sensing to decrease the backoff counter when the channel is sensed to be idle during the second interval. On the other hand, when the channel is sensed to be busy during the backoff procedure, the backoff procedure is stopped. After stopping the backoff procedure, the Tx entity may resume backoff when the channel is sensed to be idle for an additional second interval. In this way, the Tx entity may perform the transmission when the channel is idle during the slot period of the backoff counter N, in addition to the second interval. In this case, the initial value of the backoff counter N is obtained within the CW of the fixed size.

- Category 4: LBT Performing Random Backoff by Using CW of Variable Size

  - The Tx entity obtains a random value within the CW of a variable size, sets the random value to an initial value of a backoff counter (or backoff timer) N, and performs backoff by using the set backoff counter N. More specifically, the Tx entity may adjust the size of the CW based on HARQ-ACK information for the previous transmission, and the initial value of the backoff counter N is obtained within the CW of the adjusted size. A specific process of performing backoff by the Tx entity is as described in Category 3. The Tx entity may perform the transmission when the channel is idle during the slot period of the backoff counter N, in addition to the second interval. In this case, the initial value of the backoff counter N is obtained within the CW of the variable size.

In the above Category 1 to Category 4, the Tx entity may be a base station or a UE. According to an embodiment of the present invention, a first type channel access may refer to a Category 4 channel access, and a second type channel access may refer to a Category 2 channel access.

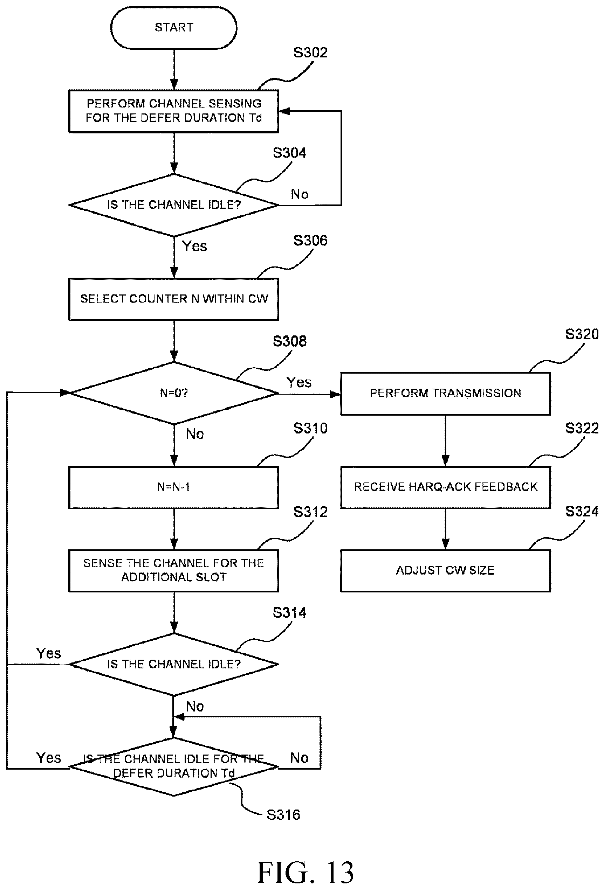

FIG. 13 illustrates a channel access procedure based on Category 4 LBT according to an embodiment of the present invention.

In order to perform the channel access, first, the Tx entity performs channel sensing for the defer duration Td (S302). According to an embodiment of the present invention, the channel sensing for a defer duration Td in step S302 may be performed through channel sensing for at least a portion of the defer duration Td. For example, the channel sensing for the defer duration Td may be performed through the channel sensing during one slot period within the defer duration Td. The Tx entity checks whether the channel is idle through the channel sensing for the defer duration Td (S304). If the channel is sensed to be idle for the defer duration Td, the Tx entity proceeds to step S306. If the channel is not sensed to be idle for the defer duration Td (that is, sensed to be busy), the Tx entity returns to step S302. The Tx entity repeats steps S302 to S304 until the channel is sensed to be idle for the defer duration Td. The defer duration Td may be set based on the channel access priority class of the Tx entity, and consists of a period of 16 µs and m consecutive slot periods. Here, m is a value set according to the channel access priority class.

Next, the Tx entity obtains a random value within a predetermined CW, sets the random value to the initial value of the backoff counter (or backoff timer) N (S306), and proceeds to step S308. The initial value of the backoff counter N is randomly selected from values between 0 and CW. The Tx entity performs the backoff procedure by using the set backoff counter N. That is, the Tx entity performs the backoff procedure by repeating S308 to S316 until the value of the backoff counter N reaches 0. Meanwhile, FIG. 13 illustrates that step S306 is performed after the channel is sensed to be idle for the defer duration Td, but the present invention is not limited thereto. That is, step S306 may be performed independently of steps S302 to S304, and may be performed prior to steps S302 to S304. When step S306 is performed prior to steps S302 to S304, if the channel is sensed to be idle for the defer duration Td by steps S302 to S304, the Tx entity proceeds to step S308.

In step S308, the Tx entity checks whether the value of the backoff counter N is 0. If the value of the backoff counter N is 0, the Tx entity proceeds to step S320 to perform a transmission. If the value of the backoff counter N is not 0, the Tx entity proceeds to step S310. In step S310, the Tx entity decreases the value of the backoff counter N by 1. According to an embodiment, the Tx entity may selectively decrease the value of the backoff counter by 1 in the channel sensing process for each slot. In this case, step S310 may be skipped at least once by the selection of the Tx entity. Next, the Tx entity performs channel sensing for an additional slot period (S312). The Tx entity checks whether the channel is idle through the channel sensing for the additional slot period (S314). If the channel is sensed to be idle for the additional slot period, the Tx entity returns to step S308. In this way, the Tx entity may decrease the backoff counter by 1 whenever the channel is sensed to be idle for a predetermined slot period. Here, the predetermined slot period may be 9 μs, but the present invention is not limited thereto.

In step S314, if the channel is not sensed to be idle for the additional slot period (that is, sensed to be busy), the Tx entity proceeds to step S316. In step S316, the Tx entity checks whether the channel is idle for the additional defer duration Td. According to an embodiment of the present invention, the channel sensing in step S316 may be performed in units of slots. That is, the Tx entity checks whether the channel is sensed to be idle during all slot periods of the additional defer duration Td. When the busy slot is detected within the additional defer duration Td, the Tx entity immediately restarts step S316. When the channel is sensed to be idle during all slot periods of the additional defer duration Td, the Tx entity returns to step S308.

On the other hand, if the value of the backoff counter N is 0 in the check of step S308, the Tx entity performs the transmission (S320). The Tx entity receives a HARQ-ACK feedback corresponding to the transmission (S322). The Tx entity may check whether the previous transmission is successful through the received HARQ-ACK feedback. Next, the Tx entity adjusts the CW size for the next transmission based on the received HARQ-ACK feedback (S324).

As described above, after the channel is sensed to be idle for the defer duration Td, the Tx entity may perform the transmission when the channel is idle for N additional slot periods. As described above, the Tx entity may be a base station or a UE, and the channel access procedure of FIG. 13 may be used for downlink transmission of the base station and/or uplink transmission of the UE.

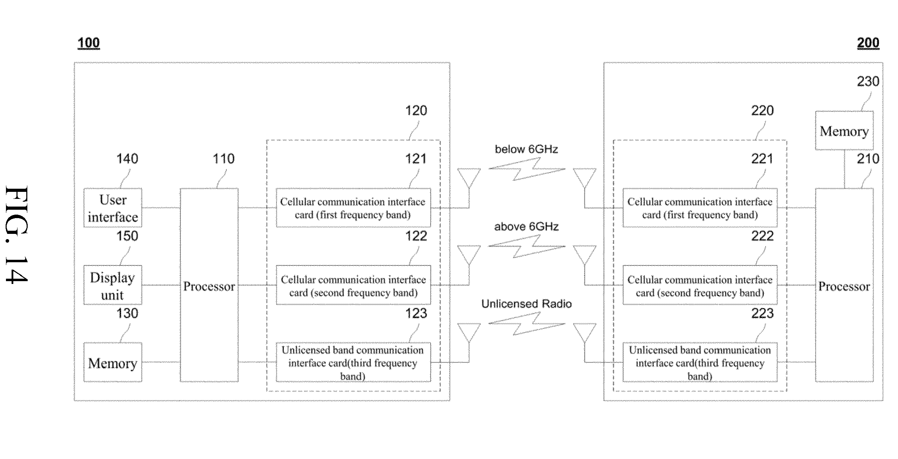

FIG. 14 is a block diagram showing the configurations of a UE and a base station according to an embodiment of the present invention. In an embodiment of the present invention, the UE may be implemented with various types of wireless communication devices or computing devices that are guaranteed to be portable and mobile. The UE may be referred to as a User Equipment (UE), a Station (STA), a Mobile Subscriber (MS), or the like. In addition, in an embodiment of the present invention, the base station controls and manages a cell (e.g., a macro cell, a femto cell, a pico cell, etc.) corresponding to a service area, and performs functions of a signal transmission, a channel designation, a channel monitoring, a self-diagnosis, a relay, or the like. The base station may be referred to as next Generation NodeB (gNB) or Access Point (AP).

As shown in the drawing, a UE 100 according to an embodiment of the present disclosure may include a processor 110, a communication module 120, a memory 130, a user interface 140, and a display unit 150.

First, the processor 110 may execute various instructions or programs and process data within the UE 100. In addition, the processor 110 may control the entire operation including each unit of the UE 100, and may control the transmission/reception of data between the units. Here, the processor 110 may be configured to perform an operation according to the embodiments described in the present invention. For example, the processor 110 may receive slot configuration information, determine a slot configuration based on the slot configuration information, and perform communication according to the determined slot configuration.

Next, the communication module 120 may be an integrated module that performs wireless communication using a wireless communication network and a wireless LAN access using a wireless LAN. For this, the communication module 120 may include a plurality of network interface cards (NICs) such as cellular communication interface cards 121 and 122 and an unlicensed band communication interface card 123 in an internal or external form. In the drawing, the communication module 120 is shown as an integral integration module, but unlike the drawing, each network interface card can be independently arranged according to a circuit configuration or usage.

The cellular communication interface card 121 may transmit or receive a radio signal with at least one of the base station 200, an external device, and a server by using a mobile communication network and provide a cellular communication service in a first frequency band based on the instructions from the processor 110. According to an embodiment, the cellular communication interface card 121 may include at least one NIC module using a frequency band of less than 6 GHz. At least one NIC module of the cellular communication interface card 121 may independently perform cellular communication with at least one of the base station 200, an external device, and a server in accordance with cellular communication standards or protocols in the frequency bands below 6 GHz supported by the corresponding NIC module.

The cellular communication interface card 122 may transmit or receive a radio signal with at least one of the base station 200, an external device, and a server by using a mobile communication network and provide a cellular communication service in a second frequency band based on the instructions from the processor 110. According to an embodiment, the cellular communication interface card 122 may include at least one NIC module using a frequency band of more than 6 GHz. At least one NIC module of the cellular communication interface card 122 may independently perform cellular communication with at least one of the base station 200, an external device, and a server in accordance with cellular communication standards or protocols in the frequency bands of 6 GHz or more supported by the corresponding NIC module.

The unlicensed band communication interface card 123 transmits or receives a radio signal with at least one of the base station 200, an external device, and a server by using a third frequency band which is an unlicensed band, and provides an unlicensed band communication service based on the instructions from the processor 110. The unlicensed band communication interface card 123 may include at least one NIC module using an unlicensed band. For example, the unlicensed band may be a band of 2.4 GHz, 5 GHz, 6 GHz, 7 GHz or above 52.6 GHz. At least one NIC module of the unlicensed band communication interface card 123 may independently or dependently perform wireless communication with at least one of the base station 200, an external device, and a server according to the unlicensed band communication standard or protocol of the frequency band supported by the corresponding NIC module.

The memory 130 stores a control program used in the UE 100 and various kinds of data therefor. Such a control program may include a prescribed program required for performing wireless communication with at least one among the base station 200, an external device, and a server.

Next, the user interface 140 includes various kinds of input/output means provided in the UE 100. In other words, the user interface 140 may receive a user input using various input means, and the processor 110 may control the UE 100 based on the received user input. In addition, the user interface 140 may perform an output based on instructions from the processor 110 using various kinds of output means.

Next, the display unit 150 outputs various images on a display screen. The display unit 150 may output various display objects such as content executed by the processor 110 or a user interface based on control instructions from the processor 110.

In addition, the base station 200 according to an embodiment of the present invention may include a processor 210, a communication module 220, and a memory 230.

First, the processor 210 may execute various instructions or programs, and process internal data of the base station 200. In addition, the processor 210 may control the entire operations of units in the base station 200, and control data transmission and reception between the units. Here, the processor 210 may be configured to perform operations according to embodiments described in the present invention. For example, the processor 210 may signal slot configuration and perform communication according to the signaled slot configuration.

Next, the communication module 220 may be an integrated module that performs wireless communication using a wireless communication network and a wireless LAN access using a wireless LAN. For this, the communication module 220 may include a plurality of network interface cards such as cellular communication interface cards 221 and 222 and an unlicensed band communication interface card 223 in an internal or external form. In the drawing, the communication module 220 is shown as an integral integration module, but unlike the drawing, each network interface card can be independently arranged according to a circuit configuration or usage.

The cellular communication interface card 221 may transmit or receive a radio signal with at least one of the UE 100, an external device, and a server by using a mobile communication network and provide a cellular communication service in the first frequency band based on the instructions from the processor 210. According to an embodiment, the cellular communication interface card 221 may include at least one NIC module using a frequency band of less than 6 GHz. The at least one NIC module of the cellular communication interface card 221 may independently perform cellular communication with at least one of the UE 100, an external device, and a server in accordance with the cellular communication standards or protocols in the frequency bands less than 6 GHz supported by the corresponding NIC module.

The cellular communication interface card 222 may transmit or receive a radio signal with at least one of the UE 100, an external device, and a server by using a mobile communication network and provide a cellular communication service in the second frequency band based on the instructions from the processor 210. According to an embodiment, the cellular communication interface card 222 may include at least one NIC module using a frequency band of 6 GHz or more. The at least one NIC module of the cellular communication interface card 222 may independently perform cellular communication with at least one of the UE 100, an external device, and a server in accordance with the cellular communication standards or protocols in the frequency bands 6 GHz or more supported by the corresponding NIC module.

The unlicensed band communication interface card 223 transmits or receives a radio signal with at least one of the UE 100, an external device, and a server by using the third frequency band which is an unlicensed band, and provides an unlicensed band communication service based on the instructions from the processor 210. The unlicensed band communication interface card 223 may include at least one NIC module using an unlicensed band. For example, the unlicensed band may be a band of 2.4 GHz, 5 GHz, 6 GHz, 7 GHz or above 52.6 GHz. At least one NIC module of the unlicensed band communication interface card 223 may independently or dependently perform wireless communication with at least one of the UE 100, an external device, and a server according to the unlicensed band communication standards or protocols of the frequency band supported by the corresponding NIC module.

FIG. 14 is a block diagram illustrating the UE 100 and the base station 200 according to an embodiment of the present invention, and blocks separately shown are logically divided elements of a device. Accordingly, the aforementioned elements of the device may be mounted in a single chip or a plurality of chips according to the design of the device. In addition, a part of the configuration of the UE 100, for example, a user interface 140, a display unit 150 and the like may be selectively provided in the UE 100. In addition, the user interface 140, the display unit 150 and the like may be additionally provided in the base station 200, if necessary.

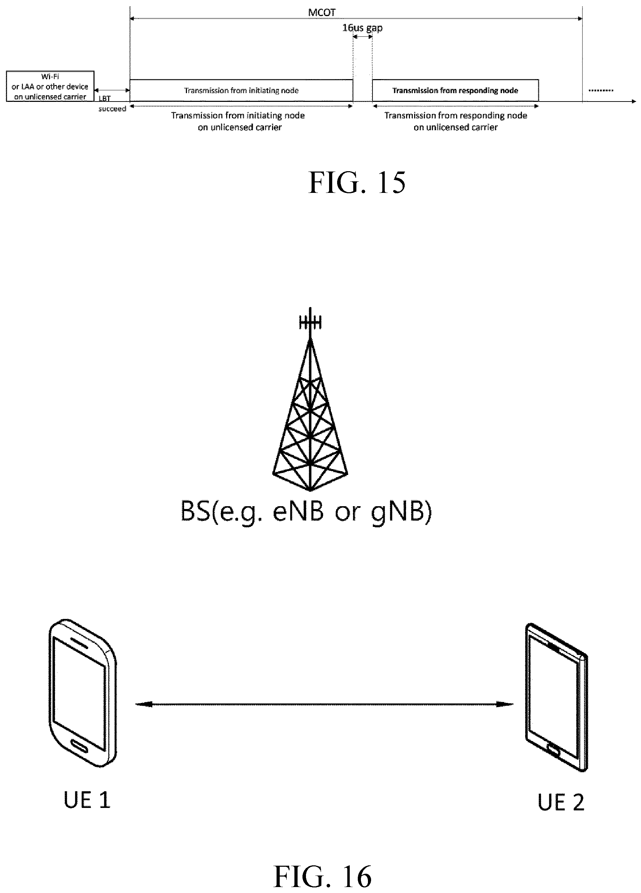

FIG. 15 illustrates a channel access procedure performed by a wireless communication device in an unlicensed band, and an LBT procedure used when a wireless communication device performs a channel access in an unlicensed band. In particular, a channel access in which the wireless communication device performs a transmission according to a result of channel sensing within a time interval of a predetermined duration may be configured in the wireless communication device. In this case, a method for operating a wireless communication device when the wireless communication device fails to access a channel will be described. The specified duration which has been mentioned earlier may be 16 $\mu$s.

For convenience of description, the wireless communication device, which is a wireless endpoint that initiates channel occupation, is referred to as an initiating node. In addition, a wireless communication device, which is a wireless endpoint communicating with the initiating node, is referred to as a responding node. The initiating node may be a base station and the responding node may be a UE. In addition, the initiating node may be a UE and the responding node may be a base station. When the initiating node intends to transmit data, the initiating node may perform a channel access according to a channel access priority class determined according to the type of data. In this case, a parameter used for a channel access may be determined according to the type of data. The parameters used for the channel access may include any one of the minimum value of the CW, the maximum value of the CW, the maximum occupancy time (MCOT), which is the maximum duration capable of occupying a channel in one channel occupancy, and the number (mp) of sensing slots. Specifically, the initiating node may perform the above-described Category 4 LBT according to the channel access priority class determined according to the type of data.

Table 4 below shows an example of values of parameters used for a channel access according to the channel access priority class. Specifically, Table 4 shows values of parameters used for a channel access for each channel access priority class for the downlink transmission in the LTE LAA system.

When the downlink channel transmitted by the wireless communication device includes data traffic, the defer duration may be configured according to the channel access priority class of traffic included in the downlink channel. In addition, the defer duration may include an initial duration Tf or one or more (mp) slot durations Tsl. In this case, the slot duration Tsl may be 9 $\mu$s. The initial duration includes one idle slot duration Tsl. In addition, the number (mp) of slot durations included in the defer duration may be configured according to the above-described channel access priority class. Specifically, the number (mp) of slot durations included in the defer duration may be configured as shown in Table 4.

[Table 4]

| Channel Access Priority Class ($p$) | $m_p$ | $CW_{min,p}$ | $CW_{max,p}$ | $T_{mcot,p}$ | allowed $CW_p$ sizes |
|---|---|---|---|---|---|
| 1 | 1 | 3 | 7 | 2 ms | {3,7} |
| 2 | 1 | 7 | 15 | 3 ms | {7,18} |
| 3 | 3 | 15 | 63 | 8 or 10 ms | {15,31,63} |
| 4 | 7 | 15 | 1023 | 8 or 10 ms | {15,31,63,127,255,511,1028} |

In addition, the wireless communication device may configure the range of the CW values according to the channel access priority class. Specifically, the wireless communication device may set the value of the CW to satisfy CWmin,p <=CW <= CWmax,p. In this case, the minimum value CWmin,p and the maximum value CWmax,p of the CW may be determined according to the channel access priority class. Specifically, the minimum value CWmin,p and the maximum value CWmax,p of the CW may be determined as shown in Table 4. The wireless communication device may set a minimum value CWmin,p and a maximum value CWmax,p of CW in a counter value setting procedure. When the wireless communication device accesses the channel, the wireless communication device may adjust the value of the CW as described above with reference to FIG. 13. In addition, in the wireless communication device of the unlicensed band, the MCOT Tmcot,p may be determined according to the channel access priority of data included in the transmission as described above. Specifically, the MCOT may be determined as shown in Table 4. Accordingly, the wireless communication device may not be allowed to perform continuous transmissions for a time exceeding the MCOT in the unlicensed band. This is because the unlicensed band is a frequency band used by various wireless communication devices according to certain rules. In Table 4, when the value of the channel access priority class is p=3 or p=4, the unlicensed band is used for a long term according to the regulations, and there is no wireless communication device using other technology, the wireless communication device may be configured with Tmcot,p = 10 ms. Otherwise, the wireless communication device may be configured with Tmcot,p = 8 ms.

Table 5 shows values of parameters used for a channel access for each channel access priority class for uplink transmission used in the LTE LAA system.

[Table 5]

| LBT priority class | n | CWmin | CWmax | MCOT | Set of CW sizes |
|---|---|---|---|---|---|
| 1 | 2 | 3 | 7 | 2 ms | {3,7} |
| 2 | 2 | 7 | 15 | 4ms | {7,15} |
| 3 | 3 | 15 | 1023 | 6ms (see note 1) or 10 ms (see note 2) | {15,31,63,127,255,511,1023} |
| 4 | 7 | 15 | 1023 | 6ms (see note 1) or 10 ms (see note 2) | {15,31,63,127,255,511,1023} |

NOTE 1: The MCOT of 6 ms may be increased to 8 ms by inserting one or more gaps. The minimum duration of a pause shall be 100 $\mu$s. The maximum duration (Channel Occupancy) before including any such gap shall be 6 ms. The gap duration is not included in the channel occupancy time.

NOTE 2: If the absence of any other technology sharing the carrier can be guaranteed on a long term basis (e.g. by level of regulation), the maximum channel occupancy time ( MCOT) for LBT priority classes 3 and 4 is for 10 ms, otherwise, the MCOT for LBT prio rity classes 3 and 4 is 6ms as in note 1.

As described in Table 5, the MCOT value 6 ms may be increased to 8 ms when one or more gaps are included in the transmission. The gap represents the time from when the transmission is stopped in a carrier until the transmission is resumed in the carrier. In this case, the minimum value of the duration of the gap is 100 $\mu$s. Furthermore, the maximum value of the duration of transmission performed before the gap is included is 6 ms. Furthermore, the duration of the gap is not included in the channel occupancy time. When the value of the channel access priority class is 3 or 4 and it is guaranteed that no other radio access technology is used in the carrier on which the channel access is performed, the value of MCOT may be 10 ms. In this case, another wireless access technology may include Wi-Fi. Otherwise, the value of the MCOT may be determined as described in Note 1 of Table 5.

The COT represents the time the wireless communication device occupies a channel. As described above, the MCOT represents a time during which the initiating node is able to continuously occupy a channel in any one carrier of a unlicensed band to the maximum. However, as described above, the gap, which is an interval in which the transmission is not performed, may be included between a plurality of transmissions, and when the gap is included, the value of the MCOT may be applied differently.

<Sidelink (SL) communication>

SL communication refers to a communication method that enables UEs to establish a direct link and to directly exchange voice or data without going through a base station. In SL communication, the base station of FIG. 14 may be replaced with a UE. SL communication may be interchangeable with vehicle-to-everything (V2X) communication.

FIG. 16 illustrates an example of a UE and a base station for performing V2X or SL communication.

Referring to FIG. 16, in V2X/SL communication, the term "UE" may mostly refer to a UE of a user. However, when a network device, such as a base station, transmits and receives a signal according to a communication method between UEs, the base station may also be considered as a type of UE.

UE 1 may select a resource unit corresponding to a specific resource from a resource pool that is a set of resources, and may operate to transmit an SL signal by using the resource unit. UE 2, which is a receiving UE, may receive the configuration of the resource pool for UE 1 to transmit a signal, and may detect a signal of UE 1 from the resource pool.

Here, when UE 1 is within the connectivity range of a base station, the base station may report the resource pool. However, when UE 1 is outside the connectivity range of the base station, another UE may report the resource pool, or the resource pool may be determined as a predetermined resource.

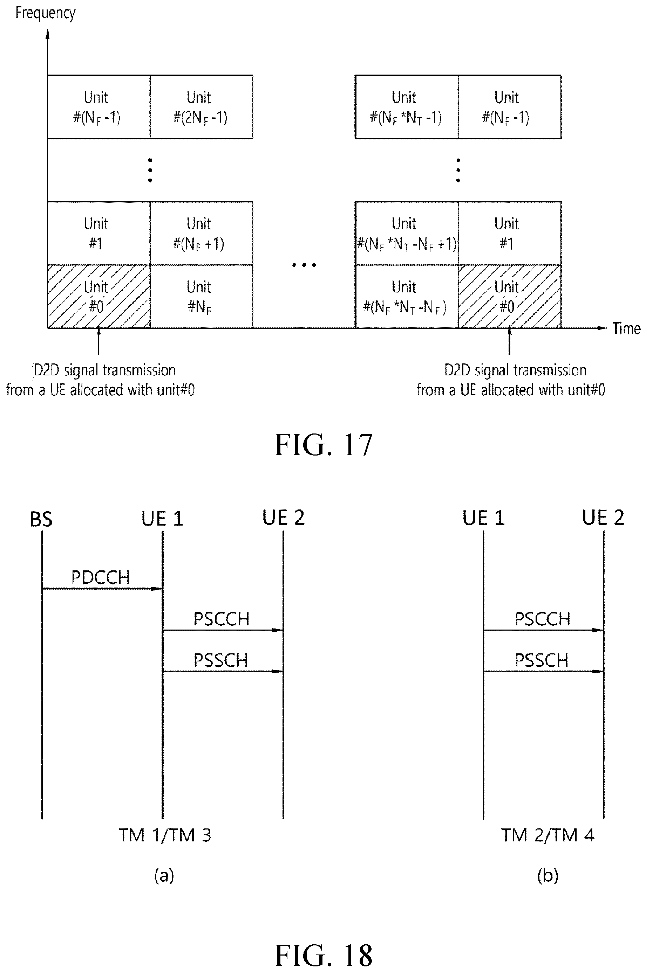

FIG. 17 illustrates an example of a resource unit for V2X or SL communication.

Referring to FIG. 17, a resource pool may include a plurality of resource units, and each UE may select and use one resource unit or a plurality of resource units to transmit an SL signal. All frequency resources of the resource pool may be divided into $N_F$ units, and all time resources of the resource pool may be divided into $N_T$ units. Therefore, a total of $N_F$ * $N_T$ resource units may be defined in the resource pool.

As illustrated in FIG. 17, one resource unit (e.g., Unit #0) may be periodically repeated. Alternatively, to obtain a diversity effect in a time or frequency dimension, the index of a physical resource unit to which one logical resource unit is mapped may change in a predetermined pattern over time. In this structure of resource units, the resource pool may refer to a set of resource units that a UE wanting to transmit an SL signal may use for transmission.

Resource pools may be divided into a plurality of types. For example, resource pools may be classified as follows depending on the content of an SL signal transmitted in each resource pool.

(1) A scheduling assignment (SA) may be a signal including information, such as the position of a resource that a transmitting UE uses to transmit an SL data channel, a modulation and coding scheme (MCS) or a multiple-input multiple-output (MIMO) transmission method required to demodulate other data channels, and timing advance (TA). The SA may also be multiplexed and transmitted with SL data on the same resource unit, in which case an SA resource pool may refer to a resource pool in which the SA is multiplexed and transmitted with the SL data. The SA may also be referred to as an SL control channel.

(2) A SL data channel (physical sidelink shared channel: PSSCH) may be a resource pool used by a transmitting UE to transmit user data. If an SA is multiplexed and transmitted with SL data on the same resource unit, only an SL data channel excluding SA information may be transmitted in a resource pool for the SL data channel. That is, resource elements (REs) used to transmit SA information on an individual resource unit within an SA resource pool may still be used to transmit SL data in the resource pool for the SL data channel.

Hereinafter, resource allocation in an SL will be described.

FIG. 18 illustrates an example of a procedure in which a UE performs V2X or SL communication according to a transmission mode.

Referring to FIG. 18, (a) of FIG. 18 illustrates a UE operation related to transmission mode 1 or transmission mode 3, and (b) of FIG. 18 illustrates a UE operation related to transmission mode 2 or transmission mode 4.

Referring to (a) of FIG. 18, in transmission mode 1/3, a base station performs resource scheduling for UE 1 through a PDCCH (more specifically, downlink control information (DCI)), and UE 1 performs SL/V2X communication with UE 2 according to the resource scheduling. UE 1 may transmit sidelink control information (SCI) to UE 2 through a physical sidelink control channel (PSCCH), and then transmit data based on the SCI through a physical sidelink shared channel (PSSCH). In an LTE SL, transmission mode 1 may be applied to general SL communication, and transmission mode 3 may be applied to V2X SL communication.

Referring to (b) of FIG. 18, in transmission mode 2/4, a UE may autonomously schedule a resource. More specifically, in an LTE SL, transmission mode 2 may be applied to general SL communication, in which a UE may perform an SL operation by autonomously selecting a resource from a configured resource pool. Transmission mode 4 may be applied to V2X SL communication, in which a UE may autonomously select a resource within a selection window via sensing/SA decoding processes, and then perform a V2X SL operation. UE 1 may transmit SCI to UE 2 through a PSCCH, and then transmit data based on the SCI through a PSSCH. Hereinafter, a transmission mode may be abbreviated to a mode. Procedures related to sensing and resource (re)selection may be supported in resource allocation mode 2. The sensing procedure may be defined as decoding SCI from another UE and/or SL measurement. Decoding the SCI in the sensing procedure may provide at least information about an SL resource indicated by a UE transmitting the SCI. When the SCI is decoded, the sensing procedure may use L1 SL reference signal received power (RSRP) measurement based on an SL demodulation reference signal (DMRS). The resource (re)selection procedure may use the result of the sensing procedure to determine a resource for SL transmission.

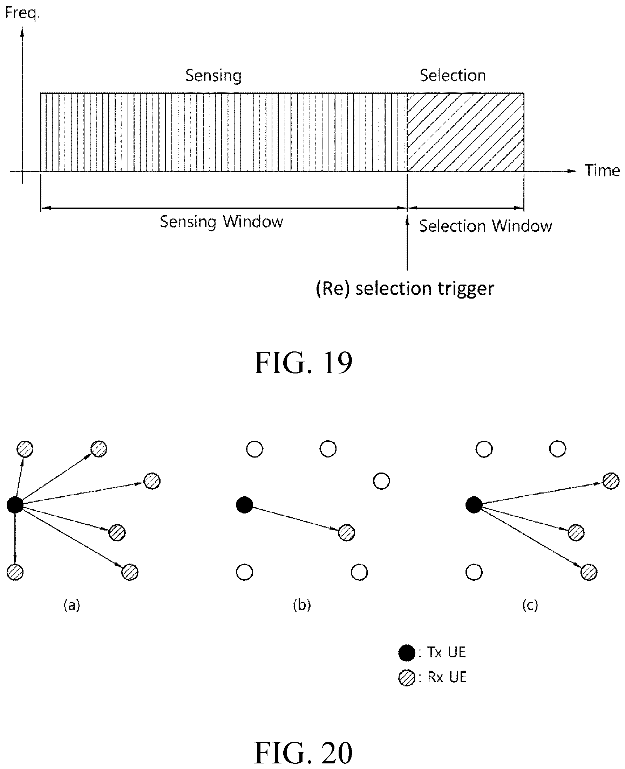

FIG. 19 illustrates an example of a method in which a UE selects a transmission resource for transmitting a signal.

Referring to FIG. 19, a UE may identify transmission resources reserved by other UEs or resources being used by other UEs through sensing within a sensing window, and may randomly select a resource with less interference among the remaining resources, excluding the reserved or used resources, within a selection window.

For example, the UE may decode a PSCCH including information about the period of the reserved resources within the sensing window, and may measure the PSSCH RSRP of resources periodically determined based on the PSCCH. The UE may exclude resources having a PSSCH RSRP value exceeding a threshold value from the selection window. Subsequently, the UE may randomly select an SL resource among the remaining resources within the selection window.

FIG. 20 illustrates an example of three cast types of NR sidelink.

Referring to FIG. 20, NR sidelink supports three types of casts: unicast, groupcast, and broadcast. In unicast SL communication, a UE may perform one-to-one communication with another UE. In groupcast SL communication, a UE may perform SL communication with one or more UEs in a group to which the UE belongs. Groupcast SL communication may be replaced with SL multicast communication, SL one-to-many communication, or the like.

Hereinafter, a hybrid automatic repeat request (HARQ) procedure in an SL is described.

In SL unicast and groupcast, HARQ feedback and HARQ combining in a physical layer may be supported. For example, when a receiving UE operates in resource allocation mode 1 or 2, the receiving UE may receive a PSSCH from a transmitting UE, and may transmit HARQ feedback on the PSSCH to the transmitting UE through a physical sidelink feedback channel (PSFCH) by using a sidelink feedback control information (SFCI) format.

For example, SL HARQ feedback may be enabled for groupcast. That is, in a non-CBG operation, two HARQ feedback options may be supported for groupcast.

(1) Groupcast option 1: After a receiving UE decodes a PSCCH targeted at the receiving UE, when the receiving UE fails to decode a transport block related to the PSCCH, the receiving UE may transmit an HARQ-NACK to a transmitting UE through a PSFCH. However, when the receiving UE decodes the PSCCH targeted at the receiving UE and successfully decodes the transport block related to the PSCCH, the receiving UE may not transmit an HARQ-ACK to the transmitting UE.

(2) Groupcast option 2: After a receiving UE decodes a PSCCH targeted at the receiving UE, when the receiving UE fails to decode a transport block related to the PSCCH, the receiving UE may transmit an HARQ-NACK to a transmitting UE via a PSFCH. When the receiving UE decodes the PSCCH targeted at the receiving UE and successfully decodes the transport block related to the PSCCH, the receiving UE may transmit an HARQ-ACK to the transmitting UE via the PSFCH.

For example, in SL communication related to a service having a requirement of high reliability or a service having a requirement of relatively high reliability, an SL HARQ feedback operation and/or mechanism of a UE may be useful. For example, in SL communication related to a service having a requirement of high reliability, an operation in which a UE receiving the service transmits SL HARQ feedback to a UE transmitting the service may be useful for satisfying the requirement of high reliability.

An HARQ feedback resource may include an HARQ feedback transmission resource and/or an HARQ feedback reception resource. For example, the HARQ feedback transmission resource may include a resource for transmitting HARQ feedback and/or a resource related to transmission of HARQ feedback. For example, the HARQ feedback reception resource may include a resource for receiving HARQ feedback and/or a resource related to reception of HARQ feedback.

A PSSCH resource may include a PSSCH transmission resource and/or a PSSCH reception resource. For example, the PSSCH transmission resource may include a resource for transmitting a PSSCH and/or a resource related to transmission of a PSSCH. For example, the PSSCH reception resource may include a resource for receiving a PSSCH and/or a resource related to reception of a PSSCH.

A PSCCH resource may include a PSCCH transmission resource and/or a PSSCH reception resource. For example, the PSCCH transmission resource may include a resource for transmitting a PSCCH and/or a resource related to transmission of a PSCCH. For example, the PSCCH reception resource may include a resource for receiving a PSCCH and/or a resource related to reception of a PSCCH.

The resources may include at least one of a time domain resource, a frequency domain resource, and/or a code domain resource.

When a resource collision occurs in at least one of PSSCH transmission, PSCCH transmission, and/or HARQ feedback transmission of a UE, an SL HARQ feedback procedure and/or operation of the UE may be difficult to operate correctly. For example, when a resource collision occurs in at least one of PSSCH transmission, PSCCH transmission, and/or HARQ feedback transmission of a UE, an overall SL HARQ feedback procedure and/or operation of the UE may be difficult to perform accurately.

When a receiving UE successfully receives a PSSCH but an error occurs in HARQ feedback (e.g., an HARQ ACK) due to a resource collision, a transmitting UE may needlessly retransmit the PSSCH to the receiving UE. For example, when the receiving UE fails to receive a PSSCH and HARQ feedback is not delivered to the transmitting UE due to a resource collision, reliability or performance related to SL communication may be reduced. For example, when the receiving UE fails to receive a PSCCH and/or a PSSCH transmitted from the transmitting UE and an HARQ NACK corresponding to the PSCCH and/or the PSSCH is not correctly delivered to the transmitting UE due to a resource collision, reliability or performance related to SL communication may be reduced. Therefore, an HARQ feedback resource needs to be determined so as to avoid or minimize a collision between a plurality of UEs.

The transmitting UE may transmit a PSCCH and/or a PSSCH to the receiving UE. For example, the transmitting UE may transmit SL information to the receiving UE by using a PSCCH resource and/or a PSSCH resource. For example, the SL information may include at least one of SL control information, SL data, an SL packet, a SL transport block (TB), an SL message, and/or an SL service.

The receiving UE may determine the HARQ feedback resource. Additionally, for example, the transmitting UE may determine the HARQ feedback resource.

The HARQ feedback resource may be configured to have an association or linkage with the PSSCH. For example, the HARQ feedback resource may include at least one of a time domain resource, a frequency domain resource, and/or a code domain resource. For example, the position of the HARQ feedback resource may be configured to have an association or linkage with an associated PSSCH resource. For example, the position of the HARQ feedback resource may be configured to have an association or linkage with the position of the associated PSSCH resource, based on a predefined function. For example, the HARQ feedback resource may be determined based on at least one of information about a time domain related to the PSSCH, information about a frequency domain related to the PSSCH, and/or information about a code domain related to the PSSCH.

In addition/alternatively, for example, the HARQ feedback resource may be configured to have an association or linkage with the PSCCH. For example, the position of the HARQ feedback resource may be configured to have an association or linkage with an associated PSCCH resource. For example, the position of the HARQ feedback resource may be configured to have an association or linkage with the position of the associated PSCCH resource, based on a predefined function. For example, the HARQ feedback resource may be determined based on at least one of information about a time domain related to the PSCCH, information about a frequency domain related to the PSCCH, and/or information about a code domain related to the PSCCH.

The HARQ feedback resource may be configured in the form of a subset of frequency resources used for PSSCH transmission and/or PSCCH transmission. For example, the frequency domain of the HARQ feedback resource may be configured in the form of a subset of the frequency domain of the associated PSSCH resource and/or PSCCH resource. For example, the frequency domain of the HARQ feedback resource may be included in the frequency domain of the PSSCH resource and/or the PSCCH resource.

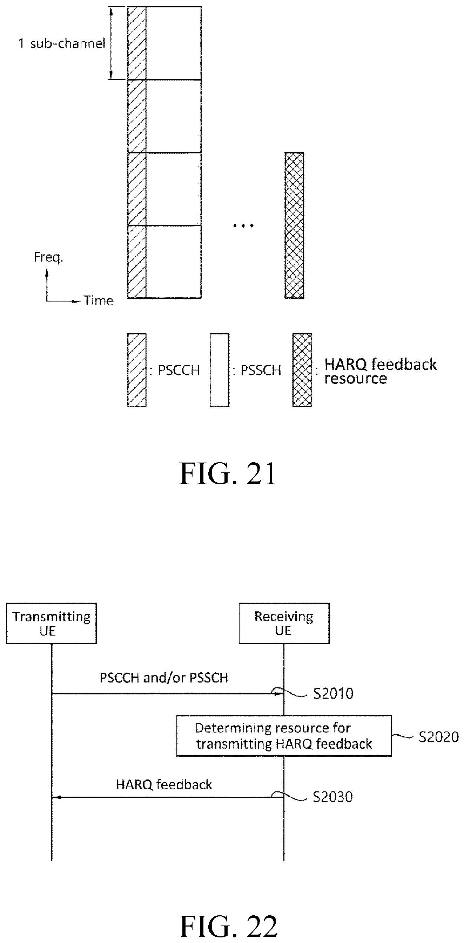

FIG. 21 illustrates an example of a resource for transmitting HARQ feedback in NR sidelink.

Referring to FIG. 21, a transmitting UE may transmit a PSCCH and/or a PSSCH to a receiving UE through four subchannels. In this case, the frequency domain of an HARQ feedback resource related to the PSCCH and/or the PSSCH may be a subset of frequency resources used by the transmitting UE to transmit the PSCCH and/or the PSSCH.

A time gap may be configured between the HARQ feedback resource and a PSSCH resource. In addition/alternatively, for example, a time gap may be configured between the HARQ feedback resource and a PSCCH resource. For example, the time gaps may be configured between time when the receiving UE receives the PSSCH and/or the PSCCH and time when the receiving UE transmits HARQ feedback considering the decoding capability of the UE and/or a delay requirement (e.g., a V2X message and/or a service-related delay requirement). For example, the time gaps may be configured between time when the transmitting UE receives the HARQ feedback and time when the transmitting UE (re) transmits the PSSCH and/or PSCCH considering the decoding capability of the UE and/or the delay requirement.

The time gap may be configured commonly within a resource pool. For example, the time gap may be configured commonly between different UEs within the resource pool. For example, the time gap may be configured commonly for the transmitting UE and the receiving UE. Therefore, the UE may simply determine the HARQ feedback resource. For example, the time gap may be configured to be specific to the resource pool.

The time gap may be configured or designated to be less than and/or equal to the smallest value among the latency budgets of coexisting services on the resource pool. For example, when service A and service B coexist on the resource pool and the latency budget of service A is less than the latency budget of service B, the time gap may be configured or designated to be less than or equal to the latency budget of service A.

The time gap may be designated such that the maximum number of retransmissions related to a transport block (TB) configured specifically to the resource pool, the type of a service, the priority of a service, the type of cast, and/or a QoS requirement of a service may be (entirely) supported/performed within a latency budget for a (related) service on the resource pool. For example, the maximum number of retransmissions may be the maximum number of allowable retransmissions including initial transmission.

The time gap may be configured or designated to be greater than and/or equal to the greatest value among the decoding capabilities of UEs. For example, the decoding capability may be the processing time of the UE needed from time when the UE terminates/ends reception of the PSSCH to time when the UE starts to transmit a PSFCH. In addition/alternatively, for example, the decoding capability may be the processing time of the UE needed from time when the UE terminates/ends reception of the PSCCH to time when the UE starts to transmit a PSFCH. For example, the time gap may be configured or designated to be greater than and/or equal to the greatest value among the decoding capabilities of the UEs in the resource pool. For example, when UE A, UE B, and UE C perform SL communication in the resource pool and the decoding capability of UE A is the lowest, the time gap may be configured or designated to be a value greater than or equal to processing time required from time when UE terminates/ends reception of a PSSCH and/or a PSCCH reception of UE A to time when UE A starts to transmit a PSFCH.

The time gap may be configured differently or independently according to the type of a service, the priority of a service, the type of SL communication, a session related to a service, a PPPP related to a service, a PPPR related to a service, a target block error rate (BLER) related to a service, a target signal-to-interference plus noise ratio (SINR) related to a service, a delay budget related to a service, and/or a UE capability. For example, the time gap may be configured differently or independently according to the type of a service, the priority of a service, the type of SL communication, a session related to a service, a PPPP related to a service, a PPPR related to a service, a target block error rate (BLER) related to a service, a target signal-to-interference plus noise ratio (SINR) related to a service, a delay budget related to a service, and/or a UE capability within the resource pool. For example, the type of SL communication may include at least one of unicast, groupcast, and/or broadcast.

The receiving UE may transmit HARQ feedback to the transmitting UE. For example, the receiving UE may transmit HARQ feedback corresponding to the PSCCH and/or the PSSCH to the transmitting UE. For example, the receiving UE may transmit the HARQ feedback to the transmitting UE by using the HARQ feedback resource determined based on the PSCCH resource and/or the PSSCH resource. For example, the transmitting UE may receive the HARQ feedback from the receiving UE on the HARQ feedback resource determined based on the PSCCH resource and/or the PSSCH resource.

When the receiving UE successfully receives the PSCCH and/or the PSSCH, the HARQ feedback may be an HARQ ACK. For example, when the receiving UE fails to receive the PSCCH and/or the PSSCH, the HARQ feedback may be at least one of an HARQ NACK and/or discontinuous detection (DTX).

In groupcast in which a plurality of UEs in a group performs SL communication with each other, an HARQ feedback resource may be configured in two forms.

(1) Option A: A common HARQ feedback resource may be configured for receiving UEs. For example, when a transmitting UE transmits a PSSCH and/or a PSCCH to a plurality of receiving UEs, an HARQ feedback resource may be configured commonly for the plurality of receiving UEs having received the PSSCH and/or the PSCCH.

(2) Option B: Different or independent HARQ feedback resources may be configured for receiving UEs. For example, different or independent HARQ feedback resources may be configured for respective receiving UE or for respective subgroups including one or more receiving UEs. For example, when a transmitting UE transmits a PSSCH and/or a PSCCH to a plurality of receiving UEs, different or independent HARQ feedback resources may be configured respectively for the plurality of receiving UEs or a plurality of subgroups having received the PSSCH and/or the PSCCH.

Option A may be applied only to groupcast option 1. For example, in groupcast option 1, a plurality of receiving UEs may transmit an HARQ NACK to a transmitting UE by using an HARQ feedback resource configured commonly for the plurality of receiving UEs only when failing to receive a PSCCH and/or PSSCH. For example, the HARQ NACK may be configured in the form of a single-frequency network (SFN). In this case, the transmitting UE may not separately receive HARQ NACKs transmitted by the plurality of receiving UEs. Therefore, the transmitting UE may not know which receiving UE has transmitted an HARQ NACK. However, the transmitting UE may know that at least one of the plurality of receiving UEs has transmitted a HARQ NACK, and may retransmit the PSCCH and/or PSSCH to the plurality of receiving UEs.

In option A, a unicast-related HARQ feedback resource structure may be reused. In addition/alternatively, for example, in option A, overhead related with an HARQ feedback resource may be reduced. However, in option A, there may be a limitation that the transmitting UE is unable to determine/recognize a DTX. For example, when a transmitting UE transmits a PSSCH and/or PSCCH to a receiving UE, the receiving UE may fail to receive the PSCCH that schedules the PSSCH. In this case, according to option A, the receiving UE may not transmit an HARQ NACK to the transmitting UE. Therefore, the transmitting UE may misunderstand that the receiving UE has successfully received the PSSCH.

In option B, in a group including a plurality of receiving UEs, different or independent HARQ feedback resources may be allocated to the respective receiving UE or respective subgroups. Here, for example, according to option B, as the number of receiving UEs or subgroups included in the group increases, a larger number of HARQ feedback resources may be required. For example, for a group including N receiving UEs, N-1 HARQ feedback resources may be required. For example, option B may be restrictively applied only to groupcast option 2.

FIG. 22 illustrates an example of a procedure for transmitting and receiving HARQ feedback on a PSCCH and/or a PSSCH.

Referring to FIG. 22, a plurality of receiving UEs may each transmit HARQ feedback to a transmitting UE. For example, the plurality of receiving UEs may each transmit HARQ feedback corresponding to a PSCCH and/or PSSCH to the transmitting UE. The plurality of receiving UEs may each transmit the HARQ feedback to transmitting UE by using an HARQ feedback resource determined based on a PSCCH resource and/or a PSSCH resource.

When the receiving UEs successfully receive the PSCCH and/or the PSSCH, the HARQ feedback may be an HARQ ACK. For example, when the receiving UEs fail to receive the PSCCH and/or the PSSCH, the HARQ feedback may be at least one of an HARQ NACK and/or discontinuous detection (DTX).

A UE may determine HARQ feedback transmission power, based on at least one of an SL path loss value derived/obtained based on a reference signal on an SL channel, an SL RSRP value derived/obtained based on the reference signal on the SL channel, an SL RSRQ value derived/obtained based on the reference signal on the SL channel, an open-loop power control parameter, and/or a closed-loop power control parameter. For example, when a transmitting UE transmits a reference signal to a receiving UE through an SL channel, the receiving UE may determine HARQ feedback transmission power, based on at least one of an SL path loss value derived/obtained based on the reference signal on the SL channel, an SL RSRP value derived/obtained based on the reference signal on the SL channel, an SL RSRQ value derived/obtained based on the reference signal on the SL channel, an open-loop power control parameter, and/or a closed-loop power control parameter.

The reference signal on the SL channel may be defined in advance. The reference signal on the SL channel may be a DMRS transmitted on a PSSCH (i.e., a PSSCH DMRS) or a DMRS transmitted on a PSCCH (i.e., a PSCCH DMRS). The reference signal on the SL channel may be a CSI-RS transmitted on a PSSCH. The reference signal on the SL channel may be a reference signal used for estimating the quality (e.g., a CQI, a PMI, or an RI) of the SL channel. For example, the reference signal on the SL channel may be a reference signal used for measuring at least one of an SL path loss value, an SL RSRP value, and/or an SL RSRQ value.

The SL path loss may be path loss in a link between the transmitting UE and the receiving UE. For example, the open-loop power control parameter and/or the closed-loop power control parameter may be configured in advance. For example, the open-loop power control parameter may include Po and/or an alpha value.

Po may be a power control parameter for satisfying a target error rate (e.g., a block error rate (BLER) or a frame error rate (FER)) related to packet/message transmission on average. In addition/alternatively, for example, Po may be a power control parameter related to an average received SINR between the transmitting UE and the receiving UE. For example, Po may be a power control parameter specific to a UE, a resource pool, the type of a service, the priority of a service, a QoS requirement related to a service, the size of a (frequency) resource used for SL transmission, an MCS value used for SL transmission, a congestion level (e.g., a CBR) related to a resource pool, and/or the type of cast. For example, when the HARQ feedback transmission power is calculated/derived based on the SL RSRP and/or SL RSRQ value/range, a different Po value/range may be mapped/configured for each (preconfigured) SL RSRP and/or SL RSRQ values/ranges.

When the HARQ feedback transmission power is derived/calculated based on the SL path loss, an alpha value may be a weight applied to (measured) path loss compensation. In addition/alternatively, when the HARQ feedback transmission power is calculated/derived based on the SL RSRP and/or SL RSRQ value/range, an alpha value may be a weight applied to the (measured) SL RSRP and/or SL RSRQ value/range. In addition/alternatively, when the HARQ feedback transmission power is calculated/derived based on the SL RSRP and/or SL RSRQ value/range, an alpha value may be a weight applied to HARQ feedback transmission power mapped/configured for each (measured) SL RSRP and/or SL RSRQ value/range. Here, an alpha value/range may be configured to be specific to a UE, a resource pool, the type of a service, the priority of a service, a QoS requirement related to a service, the size of a (frequency) resource used for SL transmission, an MCS value used for SL transmission, a congestion level (e.g., a CBR) related to a resource pool, and/or the type of cast. When the HARQ feedback transmission power is calculated/derived based on the SL RSRP and/or SL RSRQ value/range, a different alpha value/range may be mapped/configured for each (preconfigured) SL RSRP and/or SL RSRQ value/range.

When the HARQ feedback transmission power is calculated/derived based on the SL RSRP and/or SL RSRQ value/range, a different offset value/range may be mapped/configured for each (preconfigured) SL RSRP and/or SL RSRQ value/range. The UE that measures the SL RSRP and/or SL RSRQ may apply an offset related to the SL RSRP value and/or the SL RSRQ value to (preconfigured normalized or nominal) SL (HARQ feedback) (maximum) transmission power, thereby determining final HARQ feedback transmission power. Here, for example, the offset value/range may be configured to be specific to a UE, a resource pool, the type of a service, the priority of a service, a QoS requirement related to a service, the size of a (frequency) resource used for SL transmission, an MCS value used for SL transmission, a congestion level (e.g., a CBR) related to a resource pool, and/or the type of cast.

A different (normalized or nominal) (maximum) HARQ feedback transmission power value/range may be mapped/configured for each SL RSRP and/or SL RSRQ value/range. For example, the (normalized or nominal) (maximum) HARQ feedback transmission power value/range may be configured to be specific to a UE, a resource pool, the type of a service, the priority of a service, a QoS requirement related to a service, the size of a (frequency) resource used for SL transmission, an MCS value used for SL transmission, a congestion level (e.g., a CBR) related to a resource pool, and/or the type of cast.

A transmission power value related to the reference signal and/or the SL channel including the reference signal may be signaled to the UE via a predefined channel. The transmitting UE may transmit the transmission power value related to the reference signal and/or the SL channel including the reference signal to the receiving UE via the predefined channel. The predefined channel may be a PSCCH. The receiving UE may be a terminal measuring at least one of SL path loss, SL RSRP, and/or SL RSRQ, based on the reference signal.

The open-loop power control parameter (and/or (maximum or minimum) HARQ feedback transmission power value mapped/configured for each SL RSRP (and/or SL RSRQ) value/range) may be configured differently or independently according to the type of a service, the priority of a service, the type of SL communication (e.g., unicast, groupcast, or broadcast), a congestion level (e.g., a channel busy ration (CBR)) (related to a resource pool), a session related to a service, a PPPP related to a service, a PPPR related to a service, a target block error rate (BLER) related to a service, a target signal-to-interference plus noise ratio (SINR) related to a service, a (minimum or maximum) target communication distance related to a service, and/or a delay budget related to a service. In addition/alternatively, for example, the closed-loop power control operation/parameter may be managed/configured differently or independently according to the type of a service, the priority of a service, the type of SL communication (e.g., unicast, groupcast, or broadcast), a congestion level (e.g., CBR) (related to a resource pool), a session related to a service, a PPPP related to a service, a PPPR related to a service, a target block error rate (BLER) related to a service, a target signal-to-interference plus noise ratio (SINR) related to a service, a (minimum or maximum) target communication distance related to a service, and/or a delay budget related to a service.

The open-loop power control parameter related to the HARQ feedback may be configured differently or independently from an open-loop power control parameter related to the PSSCH and/or PSCCH. In addition/alternatively, the closed-loop power control operation/parameter related to the HARQ feedback may be managed/configured differently or independently from a closed-loop power control operation/parameter related to the PSSCH and/or PSCCH.

FDM of the HARQ feedback resource may be allowed or configured only for receiving UEs of which the distance from the transmitting UE receiving the HARQ feedback is within a preset threshold value. In addition/alternatively, FDM of the HARQ feedback resource may be allowed or configured only for receiving UEs of which the SL path loss difference in a link between the transmitting UE and the receiving UEs is within a preset threshold value. In addition/alternatively, FDM of the HARQ feedback resource may be allowed or configured only for receiving UEs of which the SL RSRP difference in the link between the transmitting UE and the receiving UEs is within a preset threshold value. In addition/alternatively, FDM of the HARQ feedback resource may be allowed or configured only for receiving UEs of which the SL RSRQ difference in the link between the transmitting UE and the receiving UEs is within a preset threshold value.

When the distance difference between the plurality of receiving UEs and the transmitting UE is within the preset threshold value, the plurality of receiving UEs may transmit the HARQ feedback through a frequency-division-multiplexed resource on the frequency axis. In addition/alternatively, when the path loss difference between the plurality of receiving UEs and the transmitting UE is within the preset threshold, the plurality of receiving UEs may transmit the HARQ feedback through a frequency-division-multiplexed resource on the frequency axis. In addition/alternatively, when the (measured) RSRP value difference between the plurality of receiving UEs and the transmitting UE is within the preset threshold value, the plurality of receiving UEs may transmit a HARQ feedback through the frequency-division-multiplexed resource on the frequency axis. In addition/alternatively, when the (measured) RSRQ value difference between the plurality of receiving UEs and the transmitting UE is within the preset threshold value, the plurality of receiving UEs may transmit the HARQ feedback through a frequency-division-multiplexed resource on the frequency axis.

It may not be desirable that the HARQ feedback resource is frequency-division-multiplexed between UEs or subgroups within a group. When power control related to HARQ feedback transmission is not applied, it may not be desirable that the HARQ feedback resource is frequency-division-multiplexed between different UEs or different subgroups within a group. When the difference in HARQ feedback reception power between different UE or different subgroups within a group is greater than a preset threshold value, it may not be desirable that the HARQ feedback resource is frequency-division-multiplexed between the different UEs or different subgroups within the group. When the difference in SL path loss between different UEs or different subgroups within a group is greater than a preset threshold value, it may not be desirable that the HARQ feedback resource is frequency-division-multiplexed between the different UEs or different subgroups within the group. When the difference in SL RSRP between different UEs or different subgroups within a group is greater than a preset threshold value, it may not be desirable that the HARQ feedback resource is frequency-division-multiplexed between the different UEs or different subgroups within the group. When the difference in SL RSRQ between different UEs or different subgroups within a group is greater than a preset threshold value, it may not be desirable that the HARQ feedback resource is frequency-division-multiplexed between the different UEs or different subgroups within the group.

As in the above examples, when it is not desirable that the HARQ feedback resource to be frequency-division-multiplexed, the HARQ feedback resource may be frequency-division-multiplexed pseudo-randomly based on at least one of a GUE_ID, a receiving UE-related identifier, an SL HARQ process ID, and/or a transmitting UE-related. The HARQ feedback resource may be determined pseudo-randomly based on at least one of the GUE_ID, the receiving UE-related identifier, the SL HARQ process ID, and/or the transmitting UE-related identifier. For example, the HARQ feedback resource may be frequency-division-multiplexed or determined by a function having at least one of the GUE_ID, the receiving UE-related identifier, the SL HARQ process ID, and/or the transmitting UE-related identifier as an input parameter. The HARQ feedback resource may be an HARQ feedback resource for each of a plurality of UEs in a group. The HARQ feedback resource may be an HARQ feedback resource for each of subgroups in a group. For example, the receiving UE-related identifier may be a destination ID. The transmitting UE-related identifier may be a source ID. The function may be defined in advance.

A transmitting UE may transmit a PSCCH and/or a PSSCH to a receiving UE. The transmitting UE may transmit SL information to the receiving UE by using a PSCCH resource and/or a PSSCH resource. The SL information may include at least one of SL control information, SL data, an SL packet, an SL transport block (TB), an SL message, and/or an SL service.

The receiving UE may determine an HARQ feedback resource. In addition, the transmitting UE may determine an HARQ feedback resource. For example, the receiving UE may be one of a plurality of UEs performing groupcast communication within a group.

The HARQ feedback resource may be determined based on at least one of the PSCCH resource, the PSSCH resource, and/or a GUE_ID. When a plurality of receiving UEs in a group feeds an HARQ ACK or an HARQ NACK back to the transmitting UE by using different PSFCH resources, the plurality of receiving UEs in the group may determine the HARQ feedback resource by using the GUE_ID. The resource may include at least one of a time domain resource, a frequency domain resource, and/or a code domain resource. The GUE_ID may be information for identifying a UE in the group.

The receiving UE may transmit HARQ feedback to the transmitting UE. The receiving UE may transmit HARQ feedback corresponding to the PSCCH and/or PSSCH to the transmitting UE. For example, the receiving UE may transmit the HARQ feedback to the transmitting UE by using the HARQ feedback resource determined based on at least one of the PSCCH resource, the PSSCH resource, and/or the GUE_ID.

When the receiving UE successfully receives the PSCCH and/or the PSSCH, the HARQ feedback may be an HARQ ACK. When the receiving UE fails to receive the PSCCH and/or the PSSCH, the HARQ feedback may be at least one of an HARQ NACK and/or discontinuous detection (DTX).

When the transmitting UE selects PSSCH and/or PSCCH transmission resources through a sensing operation, a collision between HARQ feedback transmission-related resources may not occur. When a plurality of transmitting UEs selects different PSSCH and/or PSCCH transmission resources through a sensing operation, HARQ feedback resources may be determined based on the PSSCH resources and/or the PSCCH resources. Therefore, a collision between the HARQ feedback resources may be automatically avoided between UEs selecting the different PSSCH and/or PSCCH transmission resources based on the sensing operation.

When the transmitting UE transmits the same PSSCH and/or PSCCH to a plurality of receiving UEs in a group, the plurality of receiving UEs may determine HARQ feedback resources by using different GUE_IDs. Therefore, even though the plurality of receiving UEs in a group receives the same PSSCH and/or PSCCH, a collision between HARQ feedback resources may be prevented.

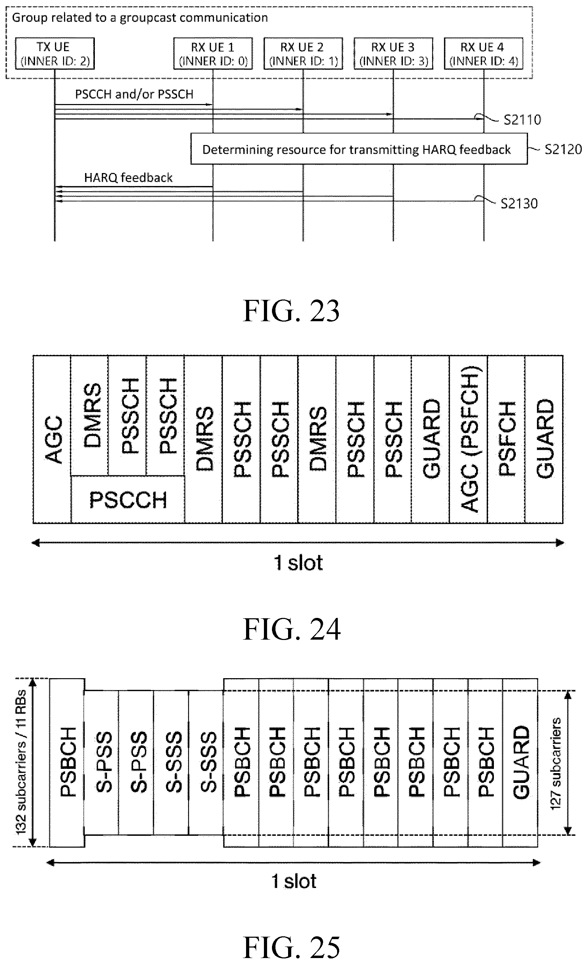

FIG. 23 illustrates an example of a procedure for transmitting and receiving HARQ feedback on a PSCCH and/or a PSSCH in groupcast SL communication.

Referring to FIG. 23, an ID for identifying a UE within a group may be allocated/designated to a plurality of UEs in the group. The ID may be referred to as an inner ID. The inner ID may be a purpose or a parameter, such as a GUE_ID. For example, regarding specific groupcast traffic, an application layer may transmit information about the inner ID of a UE and information about the number of UEs in a group to a V2X layer. The UE may be a UE transmitting the specific groupcast traffic. Regarding the specific groupcast traffic, the application layer may not transmit information about the inner ID of another UE in the group to the V2X layer. The groupcast traffic may include at least one of a groupcast service, groupcast data, a groupcast packet, and/or a groupcast message.

When a transmitting UE wants to transmit first traffic related to groupcast to a plurality of receiving UEs in a group, an application layer of the transmitting UE may transmit information about the inner ID of the transmitting UE and information about the number of UEs in the group to a V2X layer of the transmitting UE. An application layer of receiving UE 1 may transmit information about the inner ID of receiving UE 1 and information about the number of UEs in the group to a V2X layer of receiving UE 1. An application layer of receiving UE 2 may transmit information about the inner ID of receiving UE 2 and information about the number of UEs in the group to a V2X layer of receiving UE 2. An application layer of receiving UE 3 may transmit information about the inner ID of receiving UE 3 and information about the number of UEs in the group to a V2X layer of the receiving UE 3. An application layer of receiving UE 4 may transmit information about the inner ID of receiving UE 4 and information about the number of UEs in the group to a V2X layer of receiving UE 4.

The V2X layer of the UE may transmit the information about the inner ID of the UE and the information about the number of UEs in the group to an AS layer of the UE. In addition, for example, the V2X layer of the UE may also transmit an L2 ID (e.g., a source L2 ID or a destination L2 ID) and/or QoS information to the AS layer of the UE.

The transmitting UE may transmit specific groupcast traffic to the plurality of receiving UEs (S2110). The specific groupcast traffic may be transmitted through a PSSCH and/or a PSCCH.

The plurality of receiving UEs may determine an HARQ feedback resource (S2120). The plurality of receiving UEs (e.g., AS layers of the plurality of receiving UEs) may determine a resource for HARQ feedback on the specific groupcast traffic, based on the information about the inner IDs thereof and the information about the number of UEs in the group according to a predefined rule.

The transmitting UE may determine a resource for the HARQ feedback (that the transmitting UE receives). The transmitting UE may derive or determine a resource for HARQ feedback from the plurality of receiving UEs related to the specific groupcast traffic, based on the information about the inner ID thereof and the information about the number of UEs in the group.

When the application layer provides the information about the inner ID of the UE and the information about the number of UEs in the group to the V2X layer of the UE, the UE may determine or consider either groupcast option 1 or the groupcast option 2 as a (selectable) HARQ feedback option for the specific groupcast traffic. The V2X layer of the UE may determine or consider either groupcast option 1 or the groupcast option 2 as the (selectable) HARQ feedback option for the specific groupcast traffic. Additionally, the UE may finally determine or consider either groupcast option 1 or the groupcast option 2 as the HARQ feedback option for the specific groupcast traffic depending on whether a predefined condition is satisfied. When all HARQ feedback resources respective for the plurality of UEs participating in groupcast are supported in a resource pool, the UE may finally determine or consider groupcast option 2 as the HARQ feedback option for the specific groupcast traffic. When all the HARQ feedback resources respectively for the plurality of UEs participating in the groupcast are not supported in the resource pool, the UE may finally determine or consider groupcast option 1 as the HARQ feedback option for the specific groupcast traffic. Such determination may be performed in the AS layer of the UE.

When the application layer does not provide the information about the number of UEs in the group to the V2X layer of the UE, the UE may determine or consider groupcast option 1 as the HARQ feedback option for the specific groupcast traffic. When the application layer does not provide the information about the inner ID of the UE and/or the information about the number of UEs in the group to the V2X layer of the UE, the UE may determine or consider groupcast option 1 as the HARQ feedback option for the specific groupcast traffic. For example, the V2X layer of the UE may determine or consider groupcast option 1 as the HARQ feedback option for the specific groupcast traffic.

When the application layer and/or the V2X layer provide the information about the inner ID of the UE and the information about the number of UEs in the group to the AS layer of the UE, the UE may determine or consider either groupcast option 1 or groupcast option 2 as the (selectable) HARQ feedback option for the specific groupcast traffic. The AS layer of the UE may determine or consider either groupcast option 1 or groupcast option 2 as the (selectable) HARQ feedback option for the specific groupcast traffic. Additionally, the UE may finally determine or consider either groupcast option 1 or the groupcast option 2 as the HARQ feedback option for the specific groupcast traffic depending on whether the predefined condition is satisfied. When all the HARQ feedback resources respective for the plurality of UEs participating in the groupcast are supported in the resource pool, the UE may finally determine or consider groupcast option 2 as the HARQ feedback option for the specific groupcast traffic. When all the HARQ feedback resources respectively for the plurality of UEs participating in the groupcast are not supported in the resource pool, the UE may finally determine or consider groupcast option 1 as the HARQ feedback option for the specific groupcast traffic. Such determination may be performed in the AS layer of the UE.

When the application layer and/or the V2X layer does not provide the information about the number of UEs in the group to the AS layer of the UE, the UE may determine or consider groupcast option 1 as the HARQ feedback option for the specific groupcast traffic. When the application layer and/or the V2X layer does not provide the information about the inner ID of the UE and/or the information about the number of UEs in the group to the AS layer of the UE, the UE may determine or consider groupcast option 1 as the HARQ feedback option for the specific groupcast traffic. For example, the AS layer of the UE may determine or consider groupcast option 1 as the HARQ feedback option for the specific groupcast traffic.

In a resource pool-specific manner, whether at least one of groupcast option 1 and/or groupcast option 2 is supported may be signaled to the UE. In a resource pool-specific manner, whether at least one of groupcast option 1 and/or groupcast option 2 is supported may be signaled to the UE according to the type of a service, the type of cast, or a QoS requirement. In a resource pool-specific manner, whether a PSFCH resource related to groupcast option 1 is configured may be signaled to the UE according to the type of service, the type of cast, or a QoS requirement. In a resource pool-specific manner, whether a PSFCH resource related to groupcast option 2 is configured may be signaled to the UE according to the type of a service, the type of cast, or a QoS requirement.

The transmitting UE may receive HARQ feedback from the plurality of receiving UEs. The transmitting UE may receive HARQ feedback based on groupcast option 1 from the plurality of receiving UEs. For example, the transmitting UE may receive HARQ feedback based on groupcast option 2 from the plurality of receiving UEs.

An HARQ feedback operation based on a specific groupcast option may be required for specific groupcast traffic. In a case of a high reliability requirement related to a service, when the transmitting UE transmits the service to a receiving UE, the receiving UE needs to perform an HARQ feedback operation based on groupcast option 2. If the receiving UE performs an HARQ feedback operation based on groupcast option 1 for the service, DTX may occur, and thus the receiving UE needs to perform the HARQ feedback operation based on groupcast option 2 for the service with the high reliability requirement. The DTX may be a problem that the transmitting UE misunderstands that the receiving UE has successfully received a PSCCH and a PSSCH when the receiving UE fails to receive the PSCCH and does not transmit a NACK to the transmitting UE. Due to the DTX, it may be difficult to satisfy the reliability requirement of the service. Therefore, if the specific groupcast option is not supported on the resource pool or if the specific groupcast option is not supported for the traffic and/or service, the transmitting UE may perform a blind retransmission operation. If a PSFCH resource related to the specific groupcast option is not configured, the transmitting UE may perform a blind retransmission operation. The transmitting UE may perform retransmission without receiving HARQ feedback from the receiving UE.

FIG. 24 illustrates a configuration of a PSCCH/PSSCH/PSFCH in a slot. Referring to FIG. 24, a temporal position of a PSFCH in one slot may be TDM with a PSCCH/PSSCH.

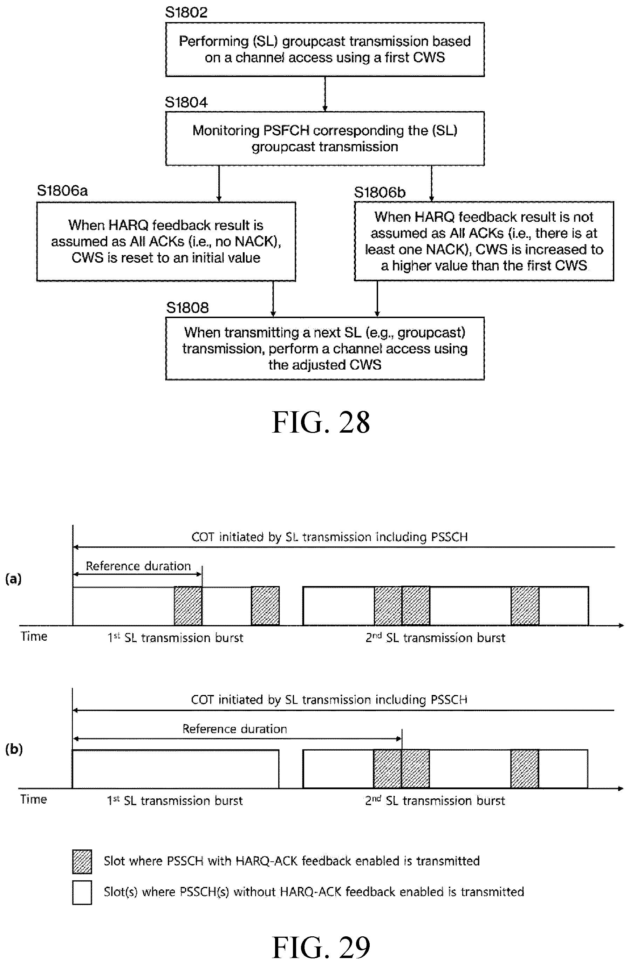

FIG. 25 illustrates a sidelink SSB (S-SSB) structure. Referring to FIG. 28, a UE may transmit an S-SSB so as to synchronize with other UEs via a sidelink. For an order of symbols to which a sidelink primary synchronization signal (S-PSS), a sidelink secondary synchronization signal (S-SSS), and a physical sidelink broadcast channel (PSBCH) are mapped in an S-SSB, refer to FIG. 28.

**<Embodiments: Channel access for sidelink (SL) transmission>**

First, terms used herein will be explained.

- Type 1 channel access procedure (CAP): Channel access procedure including random backoff (see FIG. 13). Channel sensing may be performed based on a random value selected within a CW. When a channel is determined as being idle as a result of performing channel access, SL transmission may be performed.

- Type 2 CAP: Channel access procedure not including random backoff. Channel sensing may be performed during a fixed-length sensing period for channel transmission. The type 2 CAP may be classified into type 2A/2B/2C according to the fixed-length sensing period.

- Type 2A CAP: SL transmission may be performed immediately after sensing whether a channel is idle for at least a sensing period of 25 $\mu$s before the SL transmission for the transmission. 25 $\mu$s includes a 16-$\mu$s period ($T_f$) and one immediately following sensing slot (9 $\mu$s), and the 16-$\mu$s ($T_f$) period includes one sensing slot (9 $\mu$s) from the beginning. When all sensing slots of 25 $\mu$s are sensed as idle, the channel is determined as available for the 25-$\mu$s period.

- Type 2B CAP: SL transmission may be performed immediately after sensing whether a channel is idle within a period of 16 $\mu$s ($T_f$) before the SL transmission for the transmission. 16 $\mu$s ($T_f$) includes one sensing slot within the last 9 $\mu$s of 16 $\mu$s. When the channel is sensed as idle for a total period of at least 5 $\mu$s including at least 4 $\mu$s for which sensing occurs in the sensing slot, the channel is determined as idle.

- Type 2C CAP: Refers to SL transmission being performed without performing channel sensing before the SL transmission for the transmission (i.e., No LBT). The maximum period for the SL transmission may be limited to at most 584 $\mu$s.

- CO (or COT): CO means that a wireless communication device (e.g., a UE) initiates transmission in a channel and occupies the channel. COT denotes channel occupancy time.

- COT sharing: Means that COT initiated by a wireless communication device (e.g., a UE) is shared with the same/different wireless communication device (e.g., see FIG. 15).

- SL transmission: SL transmission includes transmission of an SL channel. The SL channel includes a physical sidelink control channel (PSCCH), a physical sidelink shared channel (PSSCH), a physical sidelink feedback channel (PSFCH), and the like.

- PSCCH/PSSCH: Denotes a PSSCH and/or a PSSCH.

- Sidelink control information (SCI): SCI may be classified into first SCI (or SCI format 1) and second SCI (or SCI format 2). The first SCI is transmitted through a PSCCH. The first SCI is used to schedule (i) a PSSCH and (ii) the second SCI on the PSSCH. For example, the first SCI includes time/frequency resource information for PSSCH reception, a priority indicator, second SCI format information, and the like. The priority indicator indicates the priority of traffic of the PSSCH. The first SCI may be decoded by all UEs in a cell for channel sensing. However, the second SCI is decoded by each receiving UE, and includes remaining information required for decoding the PSSCH. The second SCI may be transmitted using a PSSCH resource. For example, the second SCI includes an HARQ process number, a cast type indicator, a source ID, a destination ID, and the like.

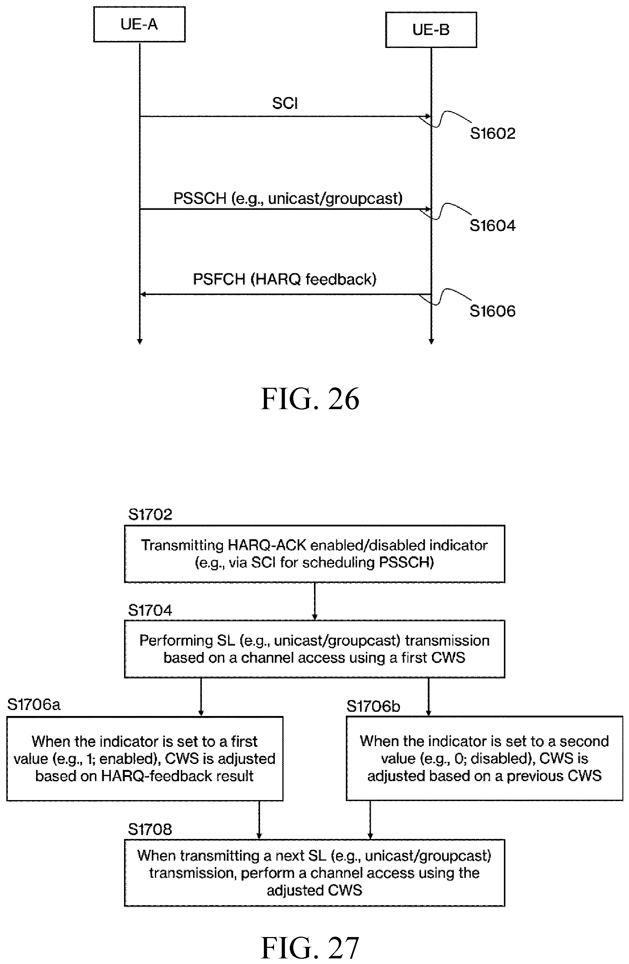

FIG. 26 illustrates a sidelink (SL) communication procedure. SL communication is a communication method that configures a direct link between UEs so that the UEs directly exchange voice or data or the like, not through a base station. In the case of SL communication, the base station in FIG. 14 may be replaced with a UE.

Referring to FIG. 26, UE-A may transmit sidelink control information (SCI) to UE-B (S1602). The SCI may be classified as 1st SCI and 2nd SCI. The 1st SCI may be transmitted via a physical sidelink control channel (PSCCH). The 1st SCI may include a portion of information (e.g., resource/information for decoding 2nd SCI, DMRS pattern, antenna port, or the like) needed for physical sidelink shared channel (PSSCH) scheduling, and may be decoded by all UEs in a cell for channel sensing. Conversely, the 2nd SCI may be decoded by each reception UE, and may include the remaining information needed for PSSCH scheduling. The 2nd SCI may be transmitted via a PSSCH resource. Subsequently, the UE-A may transmit a PSSCH to the UE-B (S1604). Via the PSSCH, data may be transmitted between UEs. In addition, unicast transmission and groupcast transmission may be performed via a PSSCH. When a HARQ feedback operation is supported/configured (HARQ-ACK enabled) for SL transmission (e.g., PSSCH), the UE-B may transmit HARQ-ACK feedback for the PSSCH to the UE-A via a physical sidelink feedback channel (PSFCH)

(1606). Conversely, when a HARQ feedback operation is not supported/configured (HARQ-ACK disabled) for SL transmission (e.g., PSSCH), the UE-A may not expect explicit HARQ-ACK feedback for the PSSCH from the UE-B.

1) CWS adjustment for SL channel access

The present invention relates to a channel access method/procedure when SL transmission (e.g., PSSCH) is performed in an unlicensed spectrum. Specifically, the present invention proposes a scheme of adjusting a CWS based on an (SL) transmission type (e.g., unicast/group transmission with HARQ-ACK, groupcast transmission w/ NACK only, groupcast transmission w/o HARQ-ACK, and broadcast transmission) in the case of adjusting a CWS for channel access in an unlicensed spectrum. Here, the channel access procedure that uses a CWS may include, for example, type 1 channel access procedure (CAP) (or channel access procedure based on random backoff having a variable CW, category 4 (Cat-4) LBT). For example, when type 1 channel access is performed for SL transmission, a wireless device (e.g., UE) may adjust a CWS based on an SL transmission type before performing type 1 channel access.

Transmission type (cast type) may be classified based on (i) a corresponding transmission type (e.g., unicast, groupcast, broadcast) and (ii) a HARQ-ACK feedback scheme/mode (HARQ-ACK, NACK only, no HARQ-ACK) indicated/configured for the corresponding cast. This is not limited thereto, but a transmission type of the present specification includes the following.

transmission with HARQ-ACK: indicates transmission that requires HARQ-ACK feedback (e.g., ACK, NACK). Therefore, after performing transmission to a reception UE, a UE expects HARQ-ACK feedback (e.g., ACK or NACK) for the corresponding transmission (i.e., explicit ACK/NACK) from the reception UE. Here, the transmission includes unicast transmission or groupcast transmission.

transmission w/ NACK only: indicates transmission that allows only a NACK as HARQ-ACK feedback. Therefore, after performing transmission to a reception UE, a UE expects only a NACK explicitly from the reception UE, as HARQ-ACK feedback for the corresponding transmission. In this instance, an ACK may be fed back implicitly (implicit ACK) via the fact that a NACK for the corresponding transmission is not detected/received. Here, the transmission includes groupcast transmission.

- transmission w/o HARQ-ACK: indicates transmission that does not allow HARQ-ACK feedback. That is, a HARQ-ACK scheme/mode is not configured for the corresponding transmission. Therefore, after performing transmission to a reception UE, a UE may not expect, from the reception UE, HARQ-ACK feedback for the corresponding transmission. Here, the transmission includes groupcast transmission or broadcast transmission.

For example, the transmission type may be indicated by a transmission type indicator in the 2nd SCI. Table 6 lists transmission types according to transmission type indicators.

[Table 6]

| Value of Cast type indicator in 2nd SCI | Cast type |
|---|---|
| 00 | Broadcast |
| 01 | Groupcast when HARQ-ACK information includes ACK or NACK (i.e., explicit HARQ-ACK feedback) |
| 10 | Unicast (+ explicit HARQ-ACK feedback) |
| 11 | Groupcast when HARQ-ACK information includes NACK (i.e., implicit HARQ-ACK feedback or NACK-only feedback) |

Unicast/group transmission with HARQ-ACK

A wireless device (e.g., UE) may transmit a PSSCH via unicast or groupcast transmission with HARQ-ACK. In this instance, in the case of performing transmission in an unlicensed spectrum, the UE may perform type 1 channel access. The UE may adjust a CWS to determine a time window for performing random backoff when performing type 1 channel access. A method for this is provided as below.

In the case of transmitting a PSSCH, PSSCH transmission may be performed using (a) the scheme of sidelink resource allocation mode 1 in which a base station informs a UE of time and frequency resources for PSSCH transmission, or (b) the scheme of sidelink resource allocation mode 2 in which a (single) resource pool is configured, and a UE senses the corresponding resource pool, selects a resource, and allocates actually transmittable resources. Here, the PSSCH may be transmitted using a PC-5 link. The PC-5 link may be a link for direct communication between devices.

Case 1) In the case in which a (single) resource pool is configured, (a) a PSFCH resource period and (b) a minimum time gap allowing PSFCH reception after a PSSCH may be configured. In this instance, HARQ-ACK enabling/disabling for SL transmission (e.g., PSSCH) may be configured. For example, a UE that transmits a PSSCH may configure a HARQ-ACK enabled/disabled indicator in 2nd SCI to a predetermined value. For example, when the value of the HARQ-ACK enabled/disabled indicator is indicated as "1" (indicating enabled), a reception UE that receives a PSSCH may transmit a PSFCH in a slot capable of being used after a minimum time gap from the PSSCH according to a PSFCH resource period. Accordingly, the UE that transmits the PSSCH may receive (e.g., detect/monitor) the PSFCH and may receive HARQ-ACK information.

Specifically, when a PSFCH resource is configured in the resource pool, and the value of the HARQ-ACK enabled/disabled indicator is indicated as "1" (indicating enabled) via the $2^{nd}$ SCI, the UE-A may expect that HARQ-ACK feedback for the PSSCH, transmitted from the UE-A to the UE-B(s), is to be transmitted from the UE-B(s) to the UE-A. In this instance, when the HARQ-ACK transmitted from the UE-B(s) is available and at least one ACK exists in the corresponding HARQ-ACK, the UE-A may reset a current CWp to a minimum/initial value for each priority class (e.g., refer to Table 5), with respect to all priority classes. Conversely, otherwise (e.g., when no ACK exists in the HARQ-ACK, all NACKs), the UE-A may increase a current CWp to a next higher value for each priority class (e.g., refer to Table 5), with respect to all priority classes. Subsequently, by using the configured/adjusted CWp value, the UE-A may perform type 1 channel access when transmitting a PSSCH that the UE-A is to transmit currently. Here, the subscript p indicates a priority class.

In addition, the UE that transmits the PSSCH may indicate a value of "0" (indicating disabled) via the HARQ-ACK enabled/disabled indicator in the $2^{nd}$ SCI. In this instance, the UE may not expect an explicit HARQ-ACK from a reception UE(s), and may use a CWp value used for latest PSSCH transmission, for type 1 channel access that is performed for transmitting a PSSCH that the UE is to transmit currently.

Case 2) In the case in which a (single) resource pool is configured, no PSFCH resource may exist since a PSFCH resource period and a minimum time gap are not configured. In this instance, a UE that transmits a PSSCH indicates a value of "0" (indicating disabled) via a HARQ-ACK enabled/disabled indicator in $2^{nd}$ SCI, and a UE that receives the same may not transmit HARQ-ACK information after receiving the PSSCH since a configured PSFCH resource does not exist. In this instance, the UE that transmits the PSSCH may not expect explicit HARQ-ACK from the reception UE, and thus may not perform CWp adjustment based on the HARQ-ACK information. Therefore, to the UE that transmits the PSSCH, it may be ambiguous which value needs to be configured for a current CWp for subsequent PSSCH transmission. To clarify this, when a channel access priority class of a PSSCH that the UE is to transmit currently was used previously, the UE may configure the current CWp to a CWp value corresponding to the same priority class that was used (for PSSCH transmission) most recently (before transmitting the PSSCH), and may perform type 1 channel access.

FIG. 27 illustrates a channel access process according to an embodiment of the present invention. FIG. 27 corresponds to case 1). Case 2) may be performed similarly.

Referring to FIG. 27, UE-A may configure HARQ-feedback enabling/disabling for SL transmission (e.g., PSSCH) (S1702). For example, the UE-A may transmit SCI for scheduling a PSSCH. Here, the SCI (e.g., $2^{nd}$ SCI) may include a HARQ-feedback enabled/disabled indicator. Subsequently, the UE-A may perform channel access using a first CWS in order to transmit a PSSCH (S1704). Here, the PSSCH may be used for unicast transmission or groupcast transmission. In addition, the channel access may include type 1 channel access. In the case in which a value of the HARQ-ACK enabled/disabled indicator is set to "1" (enabled), UE-B(s) may receive the PSSCH, and may transmit a PSFCH in a slot capable of being used after a minimum time gap from the PSSCH. In this instance, when at least an ACK exists in the HARQ-ACK transmitted from the UE-B(s), the UE-A may reset a current CWp to a minimum/initial value for each priority class (e.g., refer to Table 5), with respect to all priority classes. Otherwise (e.g., when no ACK exists in the HARQ-ACK, all NACKs), the UE-A may increase the current CWp to a next higher value for each priority class (e.g., refer to Table 5), with respect to all priority classes (S1706a). Conversely, when the value of the HARQ-ACK enabled/disabled indicator is set to "0" (disabled), the UE-A may use, as the current CWp, a CWp value used for the latest PSSCH transmission as it is, or may use, as the current CWp, a CWp value used for PSSCH transmission corresponding to the same priority class when a channel access priority class of a PSSCH that the UE-A is to transmit currently was used previously. Subsequently, by using the configured/adjusted CWp value, the UE-A may perform channel access (e.g., type 1 channel access) when transmitting a PSSCH that the UE-A is to transmit currently (S1708).

Groupcast transmission w/ NACK only

A wireless device (e.g., UE) may transmit a PSSCH via groupcast transmission with NACK only feedback. In this instance, in the case of performing transmission in an unlicensed spectrum, the UE may perform type 1 channel access. The UE may adjust a CWS to determine a time window for performing random backoff when performing type 1 channel access. A method for this is provided as below. The description below may be extended to groupcast transmission with HARQ-ACK, and in this instance, implicit ACK may be replaced with explicit ACK.

When a UE transmits a PSSCH via groupcast transmission configured with NACK only feedback, the UE may monitor (e.g., detect) a PSFCH occasion corresponding to the groupcast transmission, and may determine/identify HARQ-ACK feedback for the groupcast transmission. Here, the PSFCH occasion may include one or more PSFCH resources allocated to a group of UEs that receive the groupcast transmission. When a result of monitoring the PSFCH occasion shows that no HARQ-ACK feedback is received (i.e., All implicit ACK) from the group of UEs that are the target for the groupcast transmission, the UE that transmitted the PSSCH may regard a reception response to the PSSCH as an (All) ACK, and may not perform retransmission of the groupcast transmission. Therefore, when no HARQ-ACK feedback is received from a group of UEs in a PSFCH occasion that the UE expects, the UE that transmitted the PSSCH via groupcast transmission may reset a current CWp to a minimum/initial value for each priority class (e.g., refer to Table 5), with respect to all priority classes, as a CWp for type 1 channel access that needs to be performed for subsequent SL transmission (e.g., PSSCH, no need to be groupcast transmission). That is, when a reception response result from a plurality of UEs corresponding to groupcast transmission is regarded as an (All) ACK (e.g., no NACK is detected in the PSFCH occasion), the current CWp may be reset to a minimum/initial value for each priority class (e.g., refer to Table 5), with respect to all priority classes. When the group of UEs are to perform NACK feedback transmission in a PSFCH occasion, the UE that transmitted the PSSCH via groupcast transmission may not be aware of whether no transmission occurs due to channel access failure or the group of UEs successfully received the previously transmitted PSSCH and so do not perform NACK feedback transmission. Accordingly, irrespective of the same, the UE may reset the current CWp to a minimum/initial value for each priority class (e.g., refer to Table 5), with respect to all priority classes, and may perform type 1 channel access when performing subsequent SL transmission (e.g., PSSCH).

When the UE transmitted a PSSCH via groupcast transmission configured with NACK only feedback, and HARQ-ACK feedback with all NACKs was received from the group of UEs that received the PSSCH or HARQ-ACK feedback with at least one NACK was received, the UE that transmitted the PSSCH may perform a retransmission of the groupcast transmission. That is, when the result of monitoring the PSFCH occasion corresponding to the groupcast shows that all NACKs are detected in the corresponding PSFCH occasion or at least one NACK is detected, the UE that transmitted the PSSCH may perform a retransmission of the groupcast transmission. In this instance, to the UE that is to retransmit the PSSCH via groupcast transmission, it may be ambiguous which value needs to be configured as a CWp for type 1 channel access to be performed for PSSCH retransmission.

1. As an example, by taking into consideration that a UE transmits a PSSCH as retransmission of groupcast transmission, when a group of UEs transmitted all NACKs as HARQ-ACK feedback and the UE that transmitted the PSSCH received the same or when HARQ-ACK feedback with at least one NACK was received from the group of UEs, a CW adjustment scheme may be used when a NACK was received. For example, the UE that transmitted the PSSCH via groupcast transmission may increase a current CWp to a next higher value for each priority class, with respect to all priority classes, and may perform type 1 channel access for subsequent PSSCH transmission. That is, when a reception response result from a plurality of UEs corresponding to groupcast transmission is regarded as not (all) ACK (e.g., at least one NACK is detected in a PSFCH occasion), the UE may increase the current CWp to a next higher value for each priority class (e.g., refer to Table 5), with respect to all priority classes. Alternatively, transmission of one or more PSSCH(s) may be performed and multiple feedbacks for PSSCHs with different groupcasts from the same UE group or multiple feedbacks from multiple UE groups with different groupcasts may be expected. In this instance, the UE that transmitted a groupcast counts the number of NACKs from reception UEs, and when the number of NACKs is greater than or equal to Z% (here, Z is a natural number greater than 0 and less than or equal to 100), the UE may increase a current CWp to a next higher value for each priority class, with respect to all priority classes, in the same manner as performing CW adjustment when a NACK is received. Otherwise, the UE may reset the current CWp to a minimum value for each priority class, with respect to all priority classes. For example, the value of Z% may be set to 80% in the same manner as LTE-LAA. Alternatively, in the case in which at least one ACK is received and available in NR-U, to enable the same operation as when performing of configuration to reset a current CWp to a minimum value for each priority class, the value of Z% may be set to 100% so that, only when all NACKs are received, that is, no implicit ACK exists, the UE may increase the current CWp to a next higher value for each priority class, with respect to all priority classes. Otherwise, that is, when at least one implicit ACK exists, the UE may be configured so that the current CWp is reset to a minimum value for each priority class, with respect to all priority classes.

2. As another example, when HARQ-ACK feedback with at least one NACK is received from a group of UEs, excluding the case in which the group of UEs transmit HARQ-ACK feedback with all NACKs, a UE that transmitted a PSSCH may determine that at least one UE may successfully receive the PSSCH in the group of UEs. In this instance, from a channel access perspective, the UE may determine that it is not channel congestion, and may use a CW adjustment scheme when ACK feedback is received. For example, the UE that transmitted the PSSCH may reset a current CWp to a minimum/initial value for each priority class, with respect to all priority classes, and may perform type 1 channel access for subsequent PSSCH transmission (e.g., refer to Table 5). Otherwise, the UE may increase the current CWp to a next higher value for each priority class with respect to all priority classes.

FIG. 28 illustrates a channel access procedure according to an embodiment of the present invention. Referring to FIG. 28, UE-A may perform channel access using a first CWS in order to transmit groupcast transmission (S1802). Here, the groupcast transmission may be performed via a PSSCH. In addition, the channel access may include type 1 channel access. Subsequently, the UE-A may monitor a PSFCH (occasion/resource) corresponding to the groupcast transmission (S1804). When a monitoring result shows that a HARQ feedback result is regarded as all ACKs (e.g., no NACK is detected in the PSFCH occasion/resource), the UE-A may reset a current CWp to a minimum/initial value for each priority class (e.g., refer to Table 5) with respect to all priority classes (S1806a). Conversely, when the HARQ feedback result is not regarded as all ACKs (e.g., at least one NACK is detected in the PSFCH occasion/resource), the UE-A may increase the current CWp to a next higher value for each priority class (e.g., refer to Table 5), with respect to all priority classes (1806b). Subsequently, by using the configured/adjusted CWp value, the UE-A may perform channel access (e.g., type 1 channel access) when transmitting SL transmission (e.g., PSSCH) that the UE-A is to transmit currently (after transmitting the groupcast) (S1808). Here, a HARQ-feedback scheme indicated/configured in the groupcast transmission may include a NACK only feedback scheme.

When a PSSCH is transmitted via groupcast transmission configured with NACK only feedback, the scheme of sidelink resource allocation mode 1 in which a base station informs a UE of time/frequency resources for PSSCH transmission may be performed or the operation of sidelink resource allocation mode 2 that configures a single resource pool, senses the corresponding resource pool, selects a resource, and allocates actually transmittable resources, may be performed. In the case in which a (single) resource pool is configured, no PSFCH resource may exist since a PSFCH resource period and a minimum time gap are not configured. In this instance, a UE that transmitted a PSSCH indicates a value of "0" (indicating disabled) via a HARQ-ACK enabled/disabled indicator in 2nd SCI, and a UE that received the same may not transmit HARQ-ACK information, that is NACK only feedback information, after receiving the PSSCH, since a configured PSFCH resource does not exist. In this instance, the UE that transmits the PSSCH may not expect explicit HARQ-ACK from the reception UE, and thus may not perform CWp adjustment based on the HARQ-ACK information. Therefore, to the UE that transmits the PSSCH, it may be ambiguous which value needs to be configured as a current CWp for subsequent PSSCH transmission. To clarify this, when a channel access priority class of a PSSCH that the UE is to transmit currently was used previously, the UE may configure the current CWp to a CWp value corresponding to the same priority class used (for PSSCH transmission) most recently (before transmitting the PSSCH), and may perform Type 1 channel access.

Alternatively, the UE that transmits the PSSCH may indicate a value of "0" (indicating disabled) via the HARQ-ACK enabled/disabled indicator in the 2nd SCI. In this instance, the UE may not expect an explicit HARQ-ACK from a reception UE(s), and use a CWp value used for PSSCH most recently, for Type 1 channel access that is performed for transmitting a PSSCH that the UE is to transmit currently.

2. Definition of sidelink (SL) reference duration

As described above (e.g., refer to FIGS. 27 and 28), when a transmission UE performs CWS adjustment before performing type 1 channel access, HARQ-ACK feedback may be received from a reception UE(s) as feedback for previous SL transmission. In this instance, a duration in the time axis that the transmission UE is capable of using for CWS adjustment for type 1 channel access may need to be defined. This may be defined as an SL reference duration. According to an embodiment of the present invention, in the case in which HARQ-ACK feedback is received, the transmission UE may perform CW adjustment for type 1 channel access based on HARQ-ACK feedback for SL transmission (e.g., PSSCH/PSCCH transmission) in the SL reference duration.

The SL reference duration may be configured according to the following method.

The SL reference duration may correspond to a latest COT obtained when the transmission UE performs type 1 channel access to initiate a COT. In addition, (in the latest COT,) when a PSSCH is transmitted via all resources allocated for PSSCH transmission including at least a unicast-data transmission, the SL reference duration may be configured to start from the beginning of the latest COT and end at (or, and until) the end of a first slot corresponding to one slot (among corresponding slots). Here, the first slot is a first slot among the slots in which the PSSCH including unicast-data transmission is transmitted. In addition, (in the latest COT,) when a PSSCH is transmitted via all resources allocated for transmission of a PSSCH configured with HARQ-ACK feedback enabled, the SL reference duration may be configured to start from the beginning of the latest COT and end at the end of a first slot corresponding to one slot (from among corresponding slots). The SL reference duration starts from the beginning of the latest COT because channel access occurs before every transmission start point and thus transmission performed from the start of a COT may effectively reflect congestion of a channel. Here, the first slot is a first slot among the slots in which the PSSCH configured with HARQ-ACK feedback enabled is transmitted. FIG. 29 illustrates the case in which an SL reference duration is configured to start from the beginning of a latest COT that a UE initiates and end at (or, and until) the end of a first slot among a slot(s) in which a PSSCH(s) configured to enable HARQ-ACK feedback is to be transmitted. SL transmission may include a PSSCH(s) not configured to enable the HARQ-ACK feedback, and these are not taken into consideration when the end of the SL reference duration is configured. In addition, the latest COT that the UE initiated may include a plurality of SL transmission bursts. In this case as well, the SL reference duration may be configured to start from the beginning of the COT and end at the end of a first slot among a slot(s) in which a PSSCH(s) configured with HARQ-ACK feedback enabled is to be transmitted.

For example, a resource starting from the beginning of the latest COT and allocated to one slot for transmission of a PSSCH may be configured with one or more RB sets (20MHz LBT execution unit). In this instance, when channel access succeeds and transmission of a PSSCH is performed in the allocated resource as it is, the SL reference duration may be configured to start from the beginning of the latest COT and end at the end of a (first) slot corresponding to one slot. Here, the PSSCH may be limited to a PSSCH including unicast-data transmission. In addition, the PSSCH may be limited to a PSSCH configured with HARQ-ACK feedback enabled. The UE may apply the CWS adjustment scheme described in the present invention, based on ACK/NACK feedback of HARQ-ACK corresponding to the PSSCH transmitted in the SL reference duration.

As another example, the SL reference duration may be configured according to the following method. In the method, as a resource for PSSCH transmission, multiple consecutive slot transmission (MCSt) may be considered. As described above, the SL reference duration may correspond to a latest COT obtained when a transmission UE performs type 1 channel access in order to initiate a COT, and when a PSSCH is transmitted via all resources allocated for transmission of a PSSCH including at least a unicast-data transmission, or when a PSSCH is transmitted by occupying the entire single slot via all resources allocated for transmission of a PSSCH configured with HARQ-ACK feedback enabled, the SL reference duration may be configured to start from the beginning of the latest COT and end at the end of a first slot corresponding to one slot. Via all resources allocated for transmission of a PSSCH configured with HARQ-ACK feedback enabled, a PSSCH may be transmitted by occupying a partial slot of one slot and the PSSCH may be consecutively transmitted using MCSt in a subsequent slot(s). In this instance, the SL reference duration may be configured to start from the beginning of the latest COT, to include the partial slot, and to end at the end of a slot in which the PSSCH is consecutively transmitted using MCSt in the subsequent slot(s). The UE may apply the CWS adjustment scheme described in the present invention, based on ACK/NACK feedback of HARQ-ACK corresponding to the PSSCH transmitted in the SL reference duration.

For example, a resource starting from the latest COT and allocated to one slot for transmission of a PSSCH may be configured with one or more RB sets (20MHz LBT execution unit), and a PSSCH occupies a partial slot of one slot and the PSSCH may be consecutively transmitted using MCSt in a subsequent slot(s). When channel access succeeds at the partial slot and the PSSCH transmission is performed using MCSt, the SL reference duration may be configured to start the beginning of the latest COT, to include the partial slot, and to end at the end of a slot in which the PSSCH is consecutively transmitted using MCSt in a subsequent slot(s). The UE may apply the CWS adjustment scheme described in the present invention, based on ACK/NACK feedback of HARQ-ACK corresponding to the PSSCH transmitted in the SL reference duration.

As another example, the SL reference duration may be configured according to the following method. The SL reference duration may correspond to a latest COT obtained when a transmission UE performs type 1 channel access to initiate a COT. More specifically, the SL reference duration may be configured to (start the beginning of the latest COT and) end at the end of a first burst in the latest COT in which all resources allocated for transmission of a PSSCH, including at least a unicast-data transmission, are transmitted. Alternatively, the SL reference duration may be configured to (start the beginning of the latest COT and) end at the end of a first burst in the latest COT in which all resources allocated for transmission of a PSSCH, including transmission of a PSSCH configured with HARQ-ACK feedback enabled, are transmitted. That is, when a portion of the PSSCH transmission that the transmission UE configures in the latest COT is transmitted, for example, when two RB sets are allocated to a first slot in a CO corresponding to the latest COT, channel access fails in one channel and a PSSCH is transmitted in one RB set, the SL reference duration may not be configured to end at the end of the first slot. In this instance, the SL reference duration may be configured to (start from the beginning of the latest COT and) end at a first transmission burst that the transmission UE transmits, that is, a burst for consecutive PSSCH transmissions including the transmission of the first slot. Also in the case in which transmission of a PSSCH including unicast-data transmission or transmission of a PSSCH configured with HARQ-ACK feedback enabled does not exist in the first slot, the transmission UE may configured the SL reference duration to (start from the beginning of the latest COT and) end at a first transmission burst that the transmission UE transmits, that is, a burst for consecutive PSSCH transmissions including the transmission for the first slot when transmission of a PSSCH including at least a unicast-data transmission or transmission of a PSSCH configured with HARQ-ACK feedback enabled exists in the first transmission burst including the first slot.

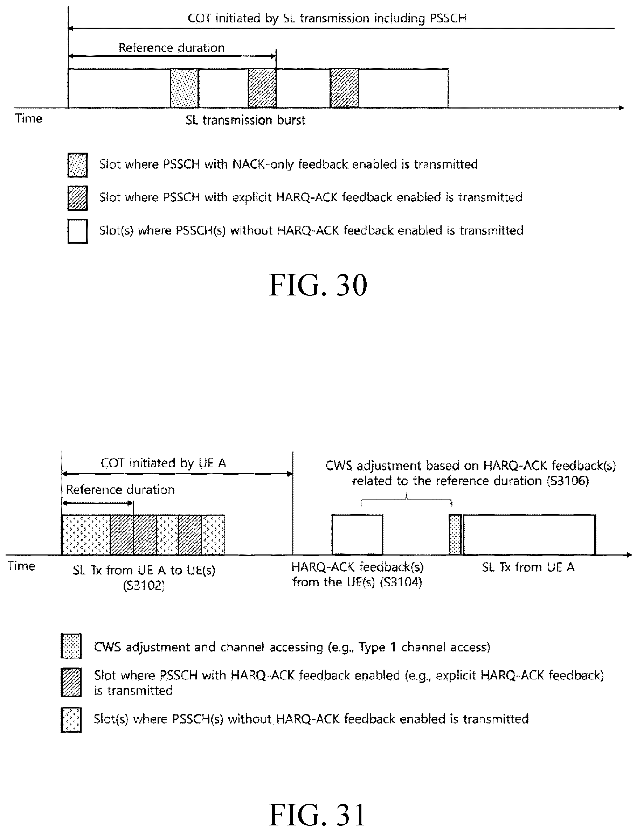

In the example of the present invention, when the SL reference duration is configured in consideration of transmission of a PSSCH configured with HARQ-ACK feedback enabled, NACK-only or explicit HARQ-ACK feedback (i.e., ACK or NACK) may be used as a HARQ-ACK feedback scheme. Here, when the SL reference duration starts from the beginning of a latest COT that the UE initiated, configuring the SL reference duration may be configuring the end of the SL reference duration. Preferably, in the case of configuring the SL reference duration in the present invention, when HARQ-ACK feedback is enabled for PSSCH transmission transmitted via unicast or groupcast, only the case in which explicit HARQ-ACK feedback, indicated as a HARQ-ACK feedback scheme for unicast or groupcast transmission, is used may be taken into consideration. That is, in the case of configuring the SL reference duration, the HARQ-ACK feedback scheme may be limited to explicit HARQ-ACK feedback for unicast or groupcast transmission. Specifically, the SL reference duration may be configured by taking into consideration that (1) HARQ-ACK feedback is enabled and (2) a PSSCH for which a HARQ-ACK feedback scheme is indicated as explicit HARQ-ACK feedback is transmitted. Here, (1) may be indicated by a HARQ-ACK enabled/disabled indicator of 2nd SCI and (2) may be indicated by a transmission type indicator of the 2nd SCI (refer to Table 6). FIG. 30 illustrates the case in which a HARQ-ACK feedback scheme for unicast or groupcast transmission is limited to explicit HARQ-ACK feedback, when configuring an SL reference duration. Alternatively, when HARQ-ACK feedback for unicast or groupcast transmission is enabled, both the NACK-only scheme and the explicit HARQ-ACK feedback scheme may be considered as a HARQ-ACK feedback scheme indicated for unicast or groupcast transmission.

FIG. 31 illustrates an SL transmission method according to an embodiment of the present invention. Referring to FIG. 31, a UE transmitted at least one PSSCH in a COT, and the plurality of PSSCHs may include at least one first PSSCH with HARQ-ACK feedback enabled (S3102). Subsequently, the UE may adjust a CWS based on HARQ-ACK feedback for the at least one PSSCH in a reference duration, and may perform an SL channel access procedure based on the adjusted CWS (S3104 to 3106). Here, the reference duration may be defined as starting from the beginning of the COT and ending at (or, and until) the end of a first slot in which the at least one first PSSCH is transmitted.

Here, the HARQ-ACK feedback may include reception response information based on an ACK/negative ACK(NACK) feedback scheme. In addition, when the at least one first PSSCH includes at least one second PSSCH with an ACK/NACK feedback scheme indicated and at least one third PSSCH with NACK-only feedback scheme indicated, the reference duration may be defined as starting from the beginning of the COT and ending at the end of a first slot in which the at least one second PSSCH is transmitted. In addition, the plurality of PSSCHs may include at least one fourth PSSCH for which the HARQ-ACK feedback is not enabled. In addition, the COT may be a latest COT that the UE initiates.

Here, when the HARQ-ACK feedback for the at least one PSSCH transmission in the reference duration includes at least an ACK, the CWS may be adjusted to a minimum value. In addition, when the HARQ-ACK feedback for the at least one PSSCH transmission in the reference duration does not include an ACK, the CWS may be increased to a next higher value than the current CWS among allowed CWS values.

Here, in the case in which the at least one first PSSCH is transmitted via SL groupcast, when HARQ-ACK feedback for the at least one PSSCH transmission in the reference duration includes at least one negative acknowledgement (NACK), the CWS may be increased to a higher value than the current CWS among the allowed CWS values, and when HARQ-ACK feedback for the at least one PSSCH transmission in the reference duration is regarded as all ACKs, the CWS may be adjusted to a minimum value.

Here, based on a counter value randomly selected within the adjusted CWS, the UE may perform the SL channel access procedure. In addition, the first slot in which the at least one first PSSCH is transmitted may be a slot in which the PSSCH transmission is performed via all resources allocated for PSSCH transmission.

CWS adjustment when one or more SL HARQ-ACK feedback schemes are used

As described above, a UE may adjust a CWS based on an SL reference duration in which the UE performs transmission before performing type 1 channel access. Specifically, the UE may adjust the CWS based on HARQ-ACK feedback for SL transmission within the SL reference duration. In this instance, one or more (e.g., multiple) transmission types (e.g., unicast transmission with HARQ-ACK (ACK or NACK), groupcast transmission w/HARQ-QCK, groupcast transmission w/ NACK only, groupcast transmission w/o HARQ-ACK, and broadcast transmission) may be included in the SL reference duration. In this instance, to the UE that performs channel access by performing CWS adjustment, it may be ambiguous whether feedback that corresponds to any one PSSCH transmission or feedback that corresponds to one or more PSSCH transmissions needs to be configured as reference transmission corresponding to HARQ-ACK feedback for determining a CWS. Therefore, provided are a method of configuring reference transmission and a scheme of adjusting a CWS by a UE according to the method.

A. For example, it is the case in which a UE operates using different SL-HARQ feedback schemes, and one or more PSSCH(s) transmission configured with multiple types (e.g., unicast transmission (ACK/NACK), groupcast transmission w/ option 1 (NACK only), or option 2 (ACK/NACK)) of SL HARQ-ACK feedback enabled may be included in an SL reference duration. In this instance, irrespective of unicast transmission or groupcast transmission, or whether it is configured to transmit ACK/NACK or to transmit NACK-only as HARQ-ACK feedback, reference PSSCH transmission may be configured based on PSSCH transmission configured with SL HARQ-ACK feedback enabled. Specifically, reference PSSCH transmission may be configured according to the following three methods, and the UE may adjust a CWS based on HARQ-ACK feedback for the reference PSSCH transmission.

A-1. By using, as reference, PSSCH transmission (hereinafter, reference PSSCH transmission) in a frontmost slot in the time axis from among PSSCH transmission(s) configured with SL HARQ-ACK feedback enabled in an SL reference duration, a CWS may be configured based on HARQ-ACK feedback corresponding to the reference. In the case of transmission in an unlicensed band, before performing transmission, channel access may be performed before the start point of the transmission, and thus the start point of the transmission may most effectively reflect a degree of congestion indicating whether an unlicensed band channel is idle or busy.

When at least an ACK is received as HARQ-ACK feedback corresponding to the reference PSSCH transmission, resetting to CW_p=CW_min,p may be performed. Here, in the case of resetting to CW_p=CW_min,p, one of the following two methods may be used.

1) CW_p=CW_min,p for each priority class p $\in$ {1,2,3,4}
2) CW_p=CW_min,p for every priority class p $\in$ {1,2,3,4}

Otherwise (i.e., when no ACK is received, all NACKs), increasing CW_p may be performed. Here, in the case of increasing CW_p, one of the following two methods may be used.

1) increase CW_p for every priority class p $\in$ {1,2,3,4} to the next higher allowed value
2) increase CW_p for each priority class p $\in$ {1,2,3,4} to the next higher allowed value

When a single SL HARQ-ACK feedback scheme is used for reference PSSCH transmission, a CWS adjustment scheme used in the single SL HARQ-ACK feedback scheme, as proposed above, may be used in the same manner.

A-2. By using, as reference, at least one PSSCH transmission (hereinafter, reference PSSCH transmission) configured to perform HARQ feedback transmission from among PSSCH transmission(s) configured with SL HARQ-ACK feedback enabled in an SL reference duration, a CWS may be configured based on HARQ-ACK feedback corresponding to the reference. In the case of transmission in an unlicensed band, before performing transmission, channel access may be performed before the start point of the transmission, and thus the start point of the transmission may most effectively reflect a degree of congestion indicating whether an unlicensed band channel is idle or busy. Although channel access is performed before the start point of the transmission, channel access succeeds in a slot and partial slot transmission may occur. In this instance, when a degree of congestion of a channel is determined only based on partial slot transmission, there may be a probability that a NACK occurs due to partial PSSCH transmission in the partial slot, rather than a degree of congestion of a channel. Therefore, when CWS adjustment is performed based on channel congestion, only a single slot as a partial slot may be insufficient, and thus the configuration based on the corresponding scheme may be appropriate.

When at least an ACK is received as HARQ-ACK feedback corresponding to the reference PSSCH transmission, resetting to CW_p=CW_min,p may be performed. Here, in the case of resetting to CW_p=CW_min,p, one of the following two methods may be used.

1) CW_p=CW_min,p for each priority class p $\in$ {1,2,3,4}
2) CW_p=CW_min,p for every priority class p $\in$ {1,2,3,4}

Otherwise (i.e., when no ACK is received, all NACKs), increasing CW_p may be performed. Here, in the case of increasing CW_p, one of the following two methods may be used.

1) increase CW_p for every priority class p $\in$ {1,2,3,4} to the next higher allowed value

2) increase CW_p for each priority class p $\in$ {1,2,3,4} to the next higher allowed value

A-3. By using, as reference, all PSSCH transmissions (hereinafter, reference PSSCH transmission) configured to perform HARQ feedback transmission from among PSSCH transmission(s) configured with SL HARQ-ACK feedback enabled in an SL reference duration, a CWS may be configured based on HARQ-ACK feedback corresponding to the reference. In the case of transmission in an unlicensed band, when at least a HARQ-ACK feedback for previously performed transmission exists, a transmission UE may determine that a channel is idle in association with a degree of congestion of an unlicensed band channel and channel access succeeds. Therefore, the scheme that uses all PSSCH transmissions as reference and performs CWS adjustment based on HARQ-ACK feedback corresponding to the reference may be appropriate.

When at least an ACK is received as HARQ-ACK feedback corresponding to the reference PSSCH transmission, resetting to CW_p=CW_min,p may be performed. Here, in the case of resetting to CW_p=CW_min,p, one of the following two methods may be used.

1) CW_p=CW_min,p for each priority class p $\in$ {1,2,3,4}
2) CW_p=CW_min,p for every priority class p $\in$ {1,2,3,4}

Otherwise (i.e., when no ACK is received, all NACKs), increasing CW_p may be performed. Here, in the case of increasing CW_p, one of the following two methods may be used.

  1) increase CW_p for every priority class p $\in$ {1,2,3,4} to the next higher allowed value

  2) increase CW_p for each priority class p $\in$ {1,2,3,4} to the next higher allowed value

B. For example, it is the case in which a UE operates with different SL-HARQ feedback schemes, and one or more PSSCH(s) transmissions configured with multiple types (e.g., unicast (ACK/NACK), groupcast w/ option 1 (NACK only), or option 2 (ACK/NACK)) of SL HARQ-ACK feedback enabled may be included in an SL reference duration. In this instance, groupcast transmission with NACK only may be excluded first, and reference PSSCH transmission may be configured based on transmission of a PSSCH configured with SL HARQ-ACK feedback enabled, irrespective of unicast transmission or groupcast transmission. For example, the UE may configure reference PSSCH transmission according to the following three methods, and may adjust a CWS based on HARQ-ACK ACK/NACK feedback for the reference PSSCH transmission.

B-1. By using, as reference, PSSCH transmission (hereinafter, reference PSSCH transmission) in a forefront in the time axis from among PSSCH transmission(s) configured with SL HARQ-ACK feedback enabled in an SL reference duration, a CWS may be configured based on HARQ-ACK ACK/NACK feedback corresponding to the reference. In the case of transmission in an unlicensed band, before performing transmission, channel access may be performed before the start point of the transmission, and thus the start point of the transmission may most effectively reflect a degree of congestion indicating whether an unlicensed band channel is idle or busy.

When at least an ACK is received as HARQ-ACK ACK/NACK feedback corresponding to the reference PSSCH transmission, resetting to CW_p=CW_min,p may be performed. Here, in the case of resetting to CW_p=CW_min,p, one of the following two methods may be used.

  1) CW_p=CW_min,p for each priority class p $\in$ {1,2,3,4}
  2) CW_p=CW_min,p for every priority class p $\in$ {1,2,3,4}

Otherwise (i.e., when no ACK is received, all NACKs), increasing CW_p may be performed. Here, in the case of increasing CW_p, one of the following two methods may be used.

  1) increase CW_p for every priority class p $\in$ {1,2,3,4} to the next higher allowed value
  2) increase CW_p for each priority class p $\in$ {1,2,3,4} to the next higher allowed value

When a single SL HARQ-ACK feedback scheme is used for reference PSSCH transmission, a CWS adjustment scheme used in the single SL HARQ-ACK feedback scheme, as proposed above, may be used in the same manner.

B-2. By using, as reference, at least one PSSCH transmission (hereinafter, reference PSSCH transmission) configured to perform HARQ-ACK ACK/NACK feedback transmission from among PSSCH transmission(s) configured with SL HARQ-ACK feedback enabled in an SL reference duration, a CWS may be configured based on HARQ-ACK ACK/NACK feedback corresponding to the reference. Before performing transmission in an unlicensed band, channel access may be performed before the start point of the transmission, and thus the start point of the transmission may most effectively reflect a degree of congestion indicating whether an unlicensed band channel is idle or busy. Although channel access is performed before the start point of the transmission, channel access succeeds in a slot and partial slot transmission may occur. In the case of determining a degree of congestion of a channel only based on partial slot transmission, there may be a probability that a NACK occurs due to partial PSSCH transmission in the partial slot, rather than a degree of congestion of a channel. Therefore, when CWS adjustment is performed based on channel congestion, only a single slot as a partial slot may be insufficient, and thus the configuration based on the corresponding scheme may be appropriate. When at least an ACK is received as HARQ-ACK feedback corresponding to the reference PSSCH transmission, resetting to CW_p=CW_min,p may be performed.

Here, in the case of resetting to CW_p=CW_min,p, one of the following two methods may be used.

  1) CW_p=CW_min,p for each priority class p $\in$ {1,2,3,4}
  2) CW_p=CW_min,p for every priority class p $\in$ {1,2,3,4}

Otherwise (i.e., when no ACK is received, all NACKs), increasing CW_p may be performed. Here, in the case of increasing CW_p, one of the following two methods may be used.

  1) increase CW_p for every priority class p $\in$ {1,2,3,4} to the next higher allowed value

2) increase CW_p for each priority class p ∈ {1,2,3,4} to the next higher allowed value

B-3. By using, as reference, all PSSCH transmissions (hereinafter, reference PSSCH transmission) configured to perform HARQ-ACK ACK/NACK feedback transmission from among PSSCH transmission(s) configured with SL HARQ-ACK feedback enabled in an SL reference duration, a CWS may be configured based on HARQ-ACK ACK/NACK feedback corresponding to the reference. In the case of transmission in an unlicensed band, when at least a HARQ-ACK feedback for previously performed transmission exists, a transmission UE may determine that a channel is idle in association with a degree of congestion of an unlicensed band channel and channel access succeeds. Therefore, the scheme that uses, as reference, all PSSCH transmissions configured to perform HARQ-ACK ACK/NACK feedback transmission, and performs CWS adjustment based on HARQ-ACK feedback corresponding to the reference may be appropriate.

When at least an ACK is received as HARQ-ACK feedback corresponding to the reference PSSCH transmission, resetting to CW_p=CW_min,p may be performed. Here, in the case of resetting to CW_p=CW_min,p, one of the following two methods may be used.

1) CW_p=CW_min,p for each priority class p ∈ {1,2,3,4}
2) CW_p=CW_min,p for every priority class p ∈ {1,2,3,4}

Otherwise (i.e., when no ACK is received, all NACKs), increasing CW_p may be performed. Here, in the case of increasing CW_p, one of the following two methods may be used.

1) increase CW_p for every priority class p ∈ {1,2,3,4} to the next higher allowed value
2) increase CW_p for each priority class p ∈ {1,2,3,4} to the next higher allowed value

C. As another example, it is the case in which a UE operates with different SL-HARQ feedback schemes, and one or more PSSCH(s) transmissions configured with multiple types (e.g., unicast (ACK/NACK), groupcast w/ option 1 (NACK only), or option 2 (ACK/NACK)) of SL HARQ-ACK feedback enabled may be included in an SL reference duration. In this instance, groupcast transmission is excluded first, and reference PSSCH transmission may be configured based on a PSSCH configured with SL HARQ-ACK feedback enabled in unicast transmission, and configured to transmit an ACK/NACK as a HARQ-ACK. For example, the UE may configure reference PSSCH transmission according to the following three methods, and may adjust a CWS based on HARQ-ACK ACK/NACK feedback for the reference PSSCH transmission.

C-1. By using, as reference, PSSCH transmission (hereinafter, reference PSSCH transmission) in a forefront slot in the time axis from among PSSCH transmission(s) configured with SL HARQ-ACK feedback enabled in an SL reference duration, a CWS may be configured based on HARQ-ACK ACK/NACK feedback corresponding to the reference. In the case of transmission in an unlicensed band, before performing transmission, channel access may be performed before the start point of the transmission, and thus the start point of the transmission may most effectively reflect a degree of congestion indicating whether an unlicensed band channel is idle or busy.

When at least an ACK is received as HARQ-ACK ACK/NACK feedback corresponding to the reference PSSCH transmission, resetting to CW_p=CW_min,p may be performed. Here, in the case of resetting to CW_p=CW_min,p, one of the following two methods may be used.

1) CW_p=CW_min,p for each priority class p ∈ {1,2,3,4}
2) CW_p=CW_min,p for every priority class p ∈ {1,2,3,4}

Otherwise (i.e., when no ACK is received, all NACKs), increasing CW_p may be performed. Here, in the case of increasing CW_p, one of the following two methods may be used.

1) increase CW_p for every priority class p ∈ {1,2,3,4} to the next higher allowed value
2) increase CW_p for each priority class p ∈ {1,2,3,4} to the next higher allowed value

When a single SL HARQ-ACK feedback scheme is used for reference PSSCH transmission, a CWS adjustment scheme used in the single SL HARQ-ACK feedback scheme, as proposed above, may be used in the same manner.

C-2. By using, as reference, at least one PSSCH transmission (hereinafter, reference PSSCH transmission) configured to perform HARQ-ACK ACK/NACK feedback transmission from among PSSCH transmission(s) configured with SL HARQ-ACK feedback enabled in an SL reference duration, a CWS may be configured based on HARQ-ACK ACK/NACK feedback corresponding to the reference. Before performing transmission in an unlicensed band, channel access may be performed before the start point of the transmission, and thus the start point of the transmission may most effectively reflect a degree of congestion indicating whether an unlicensed band channel is idle or busy. Although channel access is performed before the start point of the transmission, channel access succeeds in a slot and partial slot transmission may occur. In the case of determining a degree of congestion of a channel only based on partial slot transmission, there may be a probability that a NACK occurs due to partial PSSCH transmission in the partial slot, rather than a degree of congestion of a channel. Therefore, when CWS adjustment is performed based on channel congestion, only a single slot as a partial slot may be insufficient, and thus the configuration based on the corresponding scheme may be appropriate.

When at least an ACK is received as HARQ-ACK feedback corresponding to the reference PSSCH transmission, resetting to CW_p=CW_min,p may be performed. Here, in the case of resetting to CW_p=CW_min,p, one of the following two methods may be used.

1) CW_p=CW_min,p for each priority class $p \in \{1,2,3,4\}$
2) CW_p=CW_min,p for every priority class $p \in \{1,2,3,4\}$

Otherwise, increasing CW_p may be performed. Here, in the case of increasing CW_p, one of the following two methods may be used.

1) increase CW_p for every priority class $p \in \{1,2,3,4\}$ to the next higher allowed value

2) increase CW_p for each priority class $p \in \{1,2,3,4\}$ to the next higher allowed value

C-3. By using, as reference, all PSSCH transmissions (hereinafter, reference PSSCH transmission) configured to perform HARQ-ACK ACK/NACK feedback transmission from among PSSCH transmission(s) configured with SL HARQ-ACK feedback enabled in an SL reference duration, a CWS may be configured based on HARQ-ACK ACK/NACK feedback corresponding to the reference. In the case of transmission in an unlicensed band, when at least a HARQ-ACK feedback for previously performed transmission exists, a transmission UE may determine that a channel is idle in association with a degree of congestion of an unlicensed band channel and channel access succeeds. Therefore, the scheme that uses, as reference, all PSSCH transmissions configured to perform HARQ-ACK ACK/NACK feedback transmission, and performs CWS adjustment based on HARQ-ACK feedback corresponding to the reference may be appropriate.

When at least an ACK is received as HARQ-ACK feedback corresponding to the reference PSSCH transmission, resetting to CW_p=CW_min,p may be performed. Here, in the case of resetting to CW_p=CW_min,p, one of the following two methods may be used.

1) CW_p=CW_min,p for each priority class $p \in \{1,2,3,4\}$
2) CW_p=CW_min,p for every priority class $p \in \{1,2,3,4\}$

Otherwise (i.e., when no ACK is received, all NACKs), increasing CW_p may be performed. Here, in the case of increasing CW_p, one of the following two methods may be used.

1) increase CW_p for every priority class $p \in \{1,2,3,4\}$ to the next higher allowed value

2) increase CW_p for each priority class $p \in \{1,2,3,4\}$ to the next higher allowed value

CWS adjustment in association with S-SSB and PSFCH transmission in the case of SL channel access

The present invention relates to a channel access method when performing SL transmission using an unlicensed spectrum. Specifically, in the case of performing type 1 channel access in order to perform S-SSB and PSFCH transmission, a CWS is adjusted before performing type 1 channel access, and the present invention proposes a CWS adjustment scheme.

In the case of PSSCH transmission, a transmission UE receives PSSCH transmission to a reception UE, and receives HARQ-ACK feedback for the PSSCH from the reception UE. In this instance, in the process in which the transmission UE identifies a channel collision and channel status via HARQ-ACK feedback from a channel access perspective, and performs subsequent transmission, the transmission UE may adjust a CWS before performing type 1 channel access. For example, as described in the present specification, the transmission UE may reset a CWS to a minimum value or may increase the CWS within a range of allowed next values according to an ACK or NACK based on HARQ-ACK feedback. More specifically, when HARQ-ACK feedback is enabled, the UE that performs PSSCH transmission may reset the CWS to the minimum value or may increase the CWS within a range of allowed next values based on ACK or NACK via HARQ-ACK feedback from the reception UE, that is, the HARQ-ACK feedback information transferred via a PSFCH. However, the UE that receives the PSSCH, and performs PSFCH transmission via type 1 channel access may not separately receive feedback for the PSFCH transmission from the UE that receives the PSFCH. Therefore, when the UE that transmits the PSFCH via type 1 channel access transmits an SL channel/signal in subsequent transmission, a scheme of adjusting a CWS to be used for subsequent transmission may need to be defined. In addition, in an NR SL communication system, the transmission UE may transmit an S-SSB or a sidelink SS/PSBCH block to the reception UE as illustrated in FIG. 25. The reception UE may perform initial access by using the S-SSB or sidelink SS/PSBCH block received from the transmission UE. After transmitting the S-SSB to the reception UE, the transmission UE may not separately receive feedback for the S-SSB transmission from the UE that receives the S-SSB. Therefore, when the UE that transmits the S-SSB via type 1 channel access transmits an SL channel/signal in subsequent transmission, a scheme of adjusting a CWS to be used for subsequent transmission may need to be defined. Therefore, the present invention proposes a scheme of adjusting a CWS that a UE that performs type 1 channel access and transmits a PSFCH or S-SSB is capable of using for subsequent transmission.

As an example of the present invention, a UE that transmits an S-SSB may not expect explicit HARQ-ACK corresponding to the S-SSB transmission, and thus when the UE transmits an SL channel/signal in subsequent transmission, it may be ambiguous which value needs to be configured for a CWp value. For example, the UE that transmits the S-SSB may not expect explicit HARQ-ACK and may not perform CWp adjustment based on HARQ-ACK information. Therefore, in the case of the UE that transmits the S-SSB, when a channel access priority class of an SL channel/signal that the UE is to transmit currently was used previously, the UE may configure the CWp value to a value used most recently and perform type 1 channel access.

As an example of the present invention, also in the case of a UE that transmits a PSFCH, the UE may not expect explicit HARQ-ACK corresponding to PSFCH transmission, and thus when the UE transmits an SL channel/signal in subsequent transmission, it may be ambiguous which value needs to be configured for a CWp value. For example, the UE that transmits the PSFCH may not expect explicit HARQ-ACK and may not perform CWp adjustment based on HARQ-ACK information. Therefore, in the case of the UE that transmits the PSFCH, when a channel access priority class of an SL channel/signal that the UE is to transmit currently was used previously, the UE may configure the CWp value to a value used most recently and perform type 1 channel access.

As another example of the present invention, a UE that receives a PSSCH performs type 1 channel access and transmits a PSFCH to a UE that transmits the PSSCH, and may transmit an SL channel/signal in subsequent transmission. In this instance, retransmission of the PSSCH transmission corresponding to the PSFCH transmission may occur, and thus the UE that performs the PSFCH transmission may receive the PSSCH retransmission. In this instance, the UE may regard that PSSCH retransmission occurs as implicit response to the previously transmitted PSFCH, and may increase a CWS within a range of allowed next values. When a PSSCH or PSCCH in new transmission, as opposed to retransmission, is received by the UE that transmits the PSFCH, the UE that is to transmit the PSFCH (in subsequent transmission) may reset the corresponding CWS to a minimum value.

Although the method and system of the present invention have been described in connection with specific embodiments, some or all of components or operations thereof may be implemented using a computing system having a general-purpose hardware architecture.

The description of the present invention described above is only exemplary, and it will be understood by those skilled in the art to which the present invention pertains that various modifications and changes can be made without changing the technical spirit or essential features of the present invention. Therefore, it should be construed that the embodiments described above are illustrative and not restrictive in all respects. For example, each component described as a single type may be implemented in a distributed manner, and similarly, components described as being distributed may also be implemented in a combined form.

The scope of the present invention is indicated by the attached claims rather than the detailed description, and it should be construed that all changes or modifications derived from the meaning and scope of the claims and their equivalents are included in the scope of the present invention.

## Claims

1. A user equipment (UE) used in a wireless communication system, the UE comprising:

    a communication module; and
    a processor configured to control the communication module,
    wherein the processor is configured to:

        transmit at least one physical sidelink shared channel (PSSCH) in a channel occupancy time (COT), the at least one PSSCH comprising at least one first PSSCH with hybrid ARQ acknowledgement (HARQ-ACK) feedback enabled;

adjust a contention window size (CWS) based on HARQ-ACK feedback for the at least one PSSCH in a reference duration; and

perform a sidelink (SL) channel access procedure based on the adjusted CWS, and

wherein the reference duration is defined as starting from a beginning of the COT and until an end of a first slot in which the at least one first PSSCH is transmitted.

2. The UE of claim 1, wherein the HARQ-ACK feedback comprises reception response information based on an ACK/negative ACK (NACK) feedback scheme.

3. The UE of claim 1, wherein, in case that the at least one first PSSCH comprises at least one second PSSCH with an ACK/NACK feedback scheme indicated and at least one third PSSCH with a NACK-only feedback scheme indicated, the reference duration is defined as starting from the beginning of the COT and until an end of a first slot in which the at least one second PSSCH is transmitted.

4. The UE of claim 1, wherein the at least one PSSCH comprises at least one fourth PSSCH for which the HARQ-ACK feedback is not enabled.

5. The UE of claim 1, wherein the COT is a latest COT that the UE initiates.

6. The UE of claim 1, wherein, in case that the HARQ-ACK feedback for the at least one PSSCH transmission in the reference duration comprises at least an ACK, the CWS is adjusted to a minimum value.

7. The UE of claim 1, wherein, in case that the HARQ-ACK feedback for the at least one PSSCH transmission in the reference duration does not comprise an ACK, the CWS is increased to a next higher value than a current CWS among allowed CWS values.

8. The UE of claim 1, wherein, in case that the at least one first PSSCH is transmitted via SL groupcast, and the HARQ-ACK feedback for the at least one PSSCH transmission in the reference duration comprises at least a negative acknowledgement (NACK), the CWS is increased to a higher value than a current CWS among allowed CWS values, and

wherein, in case that the HARQ-ACK feedback for the at least one PSSCH transmission in the reference duration is regarded as all ACKs, the CWS is adjusted to a minimum value.

9. The UE of claim 1, wherein the UE performs the SL channel access procedure based on a counter value randomly selected within the adjusted CWS.

10. The UE of claim 1, wherein the first slot in which the at least one first PSSCH is transmitted is a slot in which the PSSCH transmission is performed via all resources allocated for PSSCH transmission.

11. A method used by a user equipment (UE) in a wireless communication system, the method comprising:

transmitting at least one physical sidelink shared channel (PSSCH) in a channel occupancy time (COT), the at least one PSSCH comprising at least one first PSSCH with hybrid ARQ acknowledgement (HARQ-ACK) feedback enabled;

adjusting a contention window size (CWS) based on HARQ-ACK feedback for the at least one PSSCH in a reference duration; and

performing a sidelink (SL) channel access procedure based on the adjusted CWS,

wherein the reference duration is defined as starting from a beginning of the COT and until an end of a first slot in which the at least one first PSSCH is transmitted.

12. The method of claim 11, wherein the HARQ-ACK feedback comprises reception response information based on an ACK/negative ACK (NACK) feedback scheme.

13. The method of claim 11, wherein, in case that the at least one first PSSCH comprises at least one second PSSCH with an ACK/NACK feedback scheme indicated and at least one third PSSCH with a NACK-only feedback scheme indicated, the reference duration is defined as starting from a beginning of the COT and until an end of a first slot in which the at least one second PSSCH is transmitted.

14. The method of claim 11, wherein the at least one PSSCH comprises at least one fourth PSSCH for which the HARQ-ACK feedback is not enabled.

15. The method of claim 11, wherein the COT is a latest COT that the UE initiates.

16. The method of claim 11, wherein, in case that the HARQ-ACK feedback for the at least one PSSCH transmission in the reference duration comprises at least an ACK, the CWS is adjusted to a minimum value.

17. The method of claim 11, wherein, in case that the HARQ-ACK feedback for the at least one PSSCH transmission in the reference duration does not comprise an ACK, the CWS is increased to a next higher value than a current CWS among allowed CWS values.

18. The method of claim 11, wherein, in case that the at least one first PSSCH is transmitted via SL groupcast, and the HARQ-ACK feedback for the at least one PSSCH transmission in the reference duration comprises at least a negative acknowledgement (NACK), the CWS is increased to a higher value than a current CWS among allowed CWS values, and
wherein, in case that the HARQ-ACK feedback for the at least one PSSCH transmission in the reference duration is regarded as all ACKs, the CWS is adjusted to a minimum value.

19. The method of claim 11, wherein the UE performs the SL channel access procedure based on a counter value randomly selected within the adjusted CWS.

20. The method of claim 11, wherein the first slot in which the at least one first PSSCH is transmitted is a slot in which the PSSCH transmission is performed via all resources allocated for PSSCH transmission.

1 radio frame, $T_f = (\Delta f_{max} N_f / 100) \cdot T_c = 10\,ms$

1 sub-frame, $T_{sf} = (\Delta f_{max} N_f / 1000) \cdot T_c = 1\,ms$

| #0 | #1 | #2 | #3 | ... | #8 | #9 |
|---|---|---|---|---|---|---|

| slot#0 | slot#1 | slot#2 | slot#3 | ... | #slot#$(2^\mu-2)$ | slot#$(2^\mu-1)$ |
|---|---|---|---|---|---|---|

1 slot, $T_{slot} = (\Delta f_{max} N_f / 1000) \cdot T_c \cdot 2^{-\mu} = 2^{-\mu}\,ms$

# FIG. 1

FIG. 2

FIG. 3

FIG. 4

(a)

Control
information

Control
information

Control
information

RNTI→ CRC addition    RNTI→ CRC addition    RNTI→ CRC addition    ~S902

Channel
encoding

Channel
encoding

Channel
encoding    ~S904

Rate-
matching

Rate-
matching

Rate-
matching    ~S906

PDCCH           PDCCH           PDCCH

CCE aggregation and PDCCH multiplexing    ~S908

Scrambling

Modulation    ~S910

Inteleaving

(b)

PDCCH   PDCCH       PDCCH   PDCCH                           PDCCH

8-CCE aggregation
0                    8           16                    ......

4-CCE aggregation
0        4        8        12       16       20       ......

2-CCE aggregation
0   2   4   6   8   10  12  14  16  18  20  22       ......

1-CCE aggregation
0  1  2  3  4  5  6  7  8  9  10 11 12 13 14 15 16 17 18 19 20 21 22 23  ......

CCEs transmitted in the
Control region

PDCCH using 2CCEs        Unused CCEs

0  1  2  3  4  5  6  7  8  9  10 11 12 13 14 15 16 17 18 19 20 21 22 23  ......

Composite control information

FIG. 5

46

FIG. 6

FIG. 7

FIG. 8

(a) Single CC                    (b) Multiple CC

FIG. 9

FIG. 10

FIG. 11

FIG. 12

START

S302

PERFORM CHANNEL SENSING
FOR THE DEFER DURATION Td

S304

IS THE CHANNEL IDLE? — No

Yes

S306

SELECT COUNTER N WITHIN CW

S308

N=0? — Yes → PERFORM TRANSMISSION  S320

No

S310

N=N-1

RECEIVE HARQ-ACK FEEDBACK  S322

S312

SENSE THE CHANNEL FOR THE
ADDITIONAL SLOT

ADJUST CW SIZE  S324

S314

Yes — IS THE CHANNEL IDLE?

No

Yes — IS THE CHANNEL IDLE FOR THE
DEFER DURATION Td — No

S316

FIG. 13

FIG. 14

EP 4 604 651 A1

## FIG. 15

## FIG. 16

Frequency

| Unit #(N_F -1) | Unit #(2N_F -1) | | Unit #(N_F *N_T -1) | Unit #(N_F -1) |

⋮  ⋮

| Unit #1 | Unit #(N_F +1) | ... | Unit #(N_F *N_T -N_F +1) | Unit #1 |
| Unit #0 | Unit #N_F | | Unit #(N_F *N_T -N_F ) | Unit #0 |

→ Time

D2D signal transmission
from a UE allocated with unit#0

D2D signal transmission
from a UE allocated with unit#0

# FIG. 17

BS   UE 1   UE 2        UE 1        UE 2

PDCCH →

PSCCH →

PSSCH →

PSCCH →

PSSCH →

TM 1/TM 3                TM 2/TM 4

(a)                        (b)

# FIG. 18

FIG. 19

● : Tx UE
⊘ : Rx UE

FIG. 20

## FIG. 21

## FIG. 22

Group related to a groupcast communication

| TX UE (INNER ID: 2) | RX UE 1 (INNER ID: 0) | RX UE 2 (INNER ID: 1) | RX UE 3 (INNER ID: 3) | RX UE 4 (INNER ID: 4) |

PSCCH and/or PSSCH

~ S2110

Determining resource for transmitting HARQ feedback ~ S2120

HARQ feedback

~ S2130

FIG. 23

| AGC | DMRS | PSSCH | PSSCH | DMRS | PSSCH | PSSCH | DMRS | PSSCH | PSSCH | GUARD | AGC (PSFCH) | PSFCH | GUARD |

PSCCH

1 slot

FIG. 24

132 subcarriers / 11 RBs

| PSBCH | S-PSS | S-PSS | S-SSS | S-SSS | PSBCH | PSBCH | PSBCH | PSBCH | PSBCH | PSBCH | PSBCH | PSBCH | GUARD |

127 subcarriers

1 slot

FIG. 25

UE-A            UE-B

SCI    S1602

PSSCH (e.g., unicast/groupcast)    S1604

PSFCH (HARQ feedback)    S1606

## FIG. 26

S1702

Transmitting HARQ-ACK enabled/disabled indicator
(e.g., via SCI for scheduling PSSCH)

S1704

Performing SL (e.g., unicast/groupcast) transmission
based on a channel access using a first CWS

S1706a

When the indicator is set to a first
value (e.g., 1; enabled), CWS is adjusted
based on HARQ-feedback result

S1706b

When the indicator is set to a second
value (e.g., 0; disabled), CWS is
adjusted based on a previous CWS

S1708

When transmitting a next SL (e.g., unicast/groupcast)
transmission, perform a channel access using the
adjusted CWS

## FIG. 27

S1802

Performing (SL) groupcast transmission based
on a channel access using a first CWS

S1804

Monitoring PSFCH corresponding the (SL)
groupcast transmission

S1806a

When HARQ feedback result is
assumed as All ACKs (i.e., no NACK),
CWS is reset to an initial value

S1806b

When HARQ feedback result is not
assumed as All ACKs (i.e., there is at
least one NACK), CWS is increased to
a higher value than the first CWS

S1808

When transmitting a next SL (e.g., groupcast)
transmission, perform a channel access using
the adjusted CWS

## FIG. 28

(a)

COT initiated by SL transmission including PSSCH

Reference duration

Time    1st SL transmission burst    2nd SL transmission burst

(b)

COT initiated by SL transmission including PSSCH

Reference duration

Time    1st SL transmission burst    2nd SL transmission burst

▨   Slot where PSSCH with HARQ-ACK feedback enabled is transmitted

☐   Slot(s) where PSSCH(s) without HARQ-ACK feedback enabled is transmitted

## FIG. 29

COT initiated by SL transmission including PSSCH

Reference duration

Time

SL transmission burst

Slot where PSSCH with NACK-only feedback enabled is transmitted

Slot where PSSCH with explicit HARQ-ACK feedback enabled is transmitted

Slot(s) where PSSCH(s) without HARQ-ACK feedback enabled is transmitted

# FIG. 30

COT initiated by UE A

Reference duration

CWS adjustment based on HARQ-ACK feedback(s) related to the reference duration (S3106)

Time

SL Tx from UE A to UE(s) (S3102)

HARQ-ACK feedback(s) from the UE(s) (S3104)

SL Tx from UE A

CWS adjustment and channel accessing (e.g., Type 1 channel access)

Slot where PSSCH with HARQ-ACK feedback enabled (e.g., explicit HARQ-ACK feedback) is transmitted

Slot(s) where PSSCH(s) without HARQ-ACK feedback enabled is transmitted

# FIG. 31

## INTERNATIONAL SEARCH REPORT

| International application No. |
| --- |
| **PCT/KR2023/017802** |

**A. CLASSIFICATION OF SUBJECT MATTER**

**H04W 72/25**(2023.01)i; **H04W 74/08**(2009.01)i; **H04L 1/18**(2006.01)i; **H04W 72/04**(2009.01)i; **H04W 92/18**(2009.01)i; **H04W 72/20**(2023.01)i; **H04W 72/12**(2009.01)i

According to International Patent Classification (IPC) or to both national classification and IPC

**B. FIELDS SEARCHED**

Minimum documentation searched (classification system followed by classification symbols)

H04W 72/25(2023.01); H04W 72/04(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PSSCH, CWS, HARQ, COT, 조정(adjust)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | MODERATOR (OPPO). FL summary #2 for AI 9.4.1.1: SL-U channel access mechanism. R1-2210290, 3GPP TSG RAN WG1 Meeting #110bis-e. 15 October 2022.<br>See sections 3.1.2, 3.2, 3.2.1 and 4.2. | 1-2,4-12,14-20<br>3,13 |
| A | WILUS INC. Discussion on channel access mechanism for SL on unlicensed spectrum. R1-2210139, 3GPP TSG RAN WG1 Meeting #110bis-e. 30 September 2022.<br>See section 2. | 1-20 |
| A | INTEL CORPORATION. Channel Access Mechanisms for SL Operating in Unlicensed Spectrum. R1-2209054, 3GPP TSG RAN WG1 Meeting #110bis-e. 30 September 2022.<br>See section 3. | 1-20 |
| A | SAMSUNG. On channel access mechanism for sidelink on FR1 unlicensed spectrum. R1-2209731, 3GPP TSG RAN WG1 Meeting #110bis-e. 30 September 2022.<br>See section 2. | 1-20 |

☑ Further documents are listed in the continuation of Box C.   ☑ See patent family annex.

| | |
| --- | --- |
| *  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **22 February 2024** | **22 February 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/017802**

### C. DOCUMENTS CONSIDERED TO BE RELEVANT

| Category* | Citation of document, with indication, where appropriate, of the relevant passages | Relevant to claim No. |
|---|---|---|
| A | WO 2020-201490 A1 (FRAUNHOFER-GESELLSCHAFT ZUR FORDERUNG DER ANGEWANDTEN FORSCHUNG E.V.) 08 October 2020 (2020-10-08) See page 21, line 25 - page 23, line 15; and claims 1-48. | 1-20 |

Form PCT/ISA/210 (second sheet) (July 2022)

**INTERNATIONAL SEARCH REPORT**
Information on patent family members

International application No.

**PCT/KR2023/017802**

| Patent document cited in search report | Publication date (day/month/year) | Patent family member(s) | | | Publication date (day/month/year) |
|---|---|---|---|---|---|
| WO 2020-201490 A1 | 08 October 2020 | CN | 113924811 | A | 11 January 2022 |
| | | EP | 3949596 | A1 | 09 February 2022 |
| | | JP | 2022-527559 | A | 02 June 2022 |
| | | JP | 7404388 | B2 | 25 December 2023 |
| | | KR | 10-2021-0147054 | A | 06 December 2021 |
| | | US | 2022-0061090 | A1 | 24 February 2022 |

Form PCT/ISA/210 (patent family annex) (July 2022)